# FASCICULE DE BREVET EUROPEEN

(11) **EP 0 917 329 B1**
(45) Date de publication et mention de la délivrance du brevet: **19.04.2000**
(21) Numéro de dépôt: 98401649.3
(22) Date de dépôt: 02.07.1998
(51) Int. Cl.: H04L 29/06, H04M 11/06

(54) **"Dispositif de télé-écriture"**
Fernschreibgerät
Telewriting device

(30) Priorité: 12.11.1997 FR 9714168
(43) Date de publication de la demande: 19.05.1999
(73) Titulaire: ADL Systeme S.A., 27950 Saint-Marcel (FR)
(72) Inventeur: Lanet, Arnaud, 27120 Houlbec Cocherel (FR)
(74) Mandataire: King, Dominic

(56) Documents cités:
- EP-A- 0 379 354
- WO-A-93/08522
- US-A- 4 659 876
- HIGAKI S ET AL: "A TELEWRITING SYSTEM ON A LAN USING A PEN-BASED COMPUTER AS THE TERMINAL" BRIDGES BETWEEN WORLDS, AMSTERDAM, APR. 24 - 29, 1993, no. -, 24 avril 1993, page 303 XP000473777 ASHLUND S;MULLET K; HENDERSON A; HOLLNAGEL E; WHITE T

## Description

La présente invention concerne un dispositif de télé-écriture permettant un échange d'informations visuelles et vocales avec un autre tel dispositif en communication via une ligne externe de transmission de données, par exemple une ligne téléphonique.

Il existe déjà des appareils autonomes de télé-écriture qui rassemblent dans un boîtier unique un téléphone et une tablette d'inscription et d'affichage de données. Cette dernière se présente sous la forme d'un écran d'affichage plat associé à un dispositif de saisie qui permet l'inscription directe sur l'écran au moyen d'un stylet. Les tracés réalisés par le stylet au-dessus de l'écran apparaissent directement sur ce dernier et sont transmis également à un autre dispositif semblable relié sur la ligne de transmission pour y être reproduits à l'identique. Ces tracés peuvent venir en superposition sur un autre affichage de source externe de la tablette d'inscription et qui est présent sur l'écran de chacun des dispositifs reliés. Cet affichage peut être par exemple un texte ou un dessin à commenter, les inscriptions entrées par le stylet permettant de signaler visuellement des changements souhaités, ou même de réaliser ces changements.

L'affichage de source externe (vis-à-vis de la tablette d'inscription) peut provenir de divers dispositifs périphériques ou intégrés au dispositif de télé-écriture : une unité de mémoire (disquette, disque dur, disque optique), d'un ordinateur, d'un analyseur optique (scanner) ou d'un clavier. En utilisation normale, les données d'affichage de source externe sont chargées sur un seul dispositif de télé-écriture, soit par transfert au sein du dispositif, soit au moyen d'un câble de connexion sur un dispositif périphérique. Elles sont ensuite transmises à un ou plusieurs autres dispositifs en communication au moyen de la ligne externe de transmission de données lors de la connexion.

Des exemples de tels dispositifs de télé-écriture sont décrits notamment dans les documents US-A-5 521 335, US-A-5 508 713 et EP-A-0 379 354.

La transmission des données pour affichage provenant d'une source externe est relativement longue et contraignante, s'agissant d'informations souvent denses. notamment lorsque des graphismes sont présents, et susceptibles d'être renouvelés au cours d'une communication, par exemple pour le passage d'une page à une autre. Elles peuvent cependant être livrées par paquet, moyennant un léger surcroît de délai de transmission.

Au contraire, la transmission des données de saisie en écriture, relevant de tracés fins à évolution progressive, peut s'effectuer relativement rapidement. Cependant, il est important du point de vue du confort d'utilisation que les tracés soient affichés sur le dispositif récepteur quasiment en même temps qu'ils se réalisent sur le dispositif émetteur, c'est-à-dire en temps réel.

Or, les dispositifs de télé-écriture connus ne sont pas étudiés spécifiquement pour tenir compte de ces contraintes. Ils sont alors soit limités dans leur possibilité de transmission à la fois de tracés et de graphismes de sources externes, soit incapables de réaliser un échange entre dispositifs qui est en temps réel et bidirectionnel.

Avec d'autres types de dispositifs de télé-écriture basés sur des ordinateurs personnels ou sur des postes fixes, on peut envisager d'améliorer le flux d'informations en faisant appel à des algorithmes complexes de transmission de données, mais au prix de la mobilité et de l'autonomie du matériel.

Ainsi, l'invention a pour objet un dispositif de télé-écriture formant un matériel autonome et intégré, permettant de surmonter les problèmes rencontrés dans le dispositif jusqu'alors connu en permettant un échange de données vocales et visuelles dans les deux sens (duplex intégral et en temps réel assuré), notamment pour les données de saisie en écriture, avec gestion optimale des données de source externe.

Cet objet est réalisé grâce à une étude approfondie par la demanderesse des sources de limitation avec les techniques connues, ayant abouti à une nouvelle architecture spécifiquement optimisée tout en restant simple à mettre en oeuvre.

Le dispositif de télé-écriture selon l'invention est de type comprenant un moyen d'échange de données vocales, un moyen d'affichage présentant une surface de visualisation, un moyen de saisie en écriture sur la surface de visualisation, et un moyen d'interface assurant l'échange de données en entrée et en sortie sur une ligne externe de transmission de données.

Selon l'invention, il est prévu un dispositif de télé-écriture permettant un échange d'informations visuelles et vocales en temps réel avec un autre tel dispositif en communication via une ligne externe de transmission de données, le dispositif comprenant à cette fin :
un moyen d'échange de données vocales,
un moyen d'affichage présentant une surface de visualisation,
un moyen de saisie en écriture pour réaliser l'affichage en temps réel de tracés sur la surface de visualisation,
un moyen de traitement des données de saisie en écriture et d'autres données destinées à être échangées, et
un moyen d'interface assurant l'échange des données de saisie en écriture et desdites autres données sur la ligne externe de transmission de données,
Le dispositif de télé-écriture selon l'invention se caractérise par le fait que le moyen de traitement de données comprend :
une première unité de commande assurant la gestion desdites autres données et reliée au moyen d'interface par une première liaison spécifique à cette première unité de commande pour l'échange desdites autres données sur la ligne externe de transmission de données, et
une deuxième unité de commande, pouvant fonctionner en parallèle avec la première unité de commande, assurant la gestion du moyen de saisie en écriture et relié au moyen d'interface par une deuxième liaison spécifique à cette deuxième unité de commande et permettant l'échange de données de saisie en écriture sur la ligne externe de transmission de données.

Ainsi, les tâches sont réparties de manière optimale entre les première et deuxième unités de commande pour un traitement en parallèle d'une part des autres données provenant de dispositifs d'entrée et de sortie, et d'autre part des données de saisie en écriture. Qui plus est, l'emploi selon l'invention de liaisons dédiées séparées entre le moyen d'interface et les première et deuxième unités de commande permet d'assurer le flux de données de saisie en écriture en temps réel par la deuxième unité de commande, tout en maintenant ouvert en permanence la communication avec la première unité de commande.

Cette dernière peut ainsi contrôler à tout moment l'état de fonctionnement de la ligne externe et du moyen d'interface. Il est alors possible d'échanger aisément des données avec le moyen d'interface sur la première liaison et la deuxième liaison en mode de partage d'accès selon un protocole prédéterminé sans occasionner de perturbations sur le flux de données de saisie en écriture.

On notera que les données de saisie en écriture concernent également des commandes liées aux fonctions de la saisie manuscrite sur l'écran : sélection par stylet de portions de l'affichage (mots, pavés), effacement, déplacement, copie des parties sélectionnées, etc., comme pour un traitement de texte.

On notera que le terme "autres données" peut comprendre toutes données, hormis celles provenant en temps réel du dispositif de saisie en écriture, devant être gérées par le dispositif de télé-écriture. Elles sont généralement des données graphiques. Ces autres données peuvent comprendre notamment - mais non exclusivement - des pages de document à afficher sur l'écran aussi bien sur un dispositif en mode de réception qu'en mode de transmission. Ces pages de document peuvent provenir de sources externes au dispositif de télé-écriture, telles que dispositifs périphériques de stockage, de matériel informatique, etc..

Elles peuvent également provenir d'unités de stockage qui sont internes au dispositif (lecteur de disquette ou de disque dur, ou de cédérom, etc.) selon des choix de mise en oeuvre.

Dans les modes préférés de l'invention, ces autres données ne comprennent pas les données vocales de téléphonie et, le cas échéant, de fac-similés. En effet, ces derniers types de données sont avantageusement gérés au sein du moyen d'interface.

En mode de réception, les autres données reçues peuvent être affichées sur l'écran, soit immédiatement, soit en différé (par exemple en réponse à une demande). Elles peuvent aussi être stockées sur des dispositifs internes ou externes ou envoyées vers d'autres appareils connectées au dispositif, par exemple une imprimante, un moniteur. un ordinateur personnel, un organiser électronique etc.

Il est alors possible de permettre de donner la priorité de l'accès au moyen d'interface à l'une des unités de commande, par exemple la deuxième, afin d'assurer que l'échange des tracés saisis soit toujours réalisé en temps réel, même lorsque le dispositif est en cours d'émission ou de réception d'autres données avec un dispositif par la ligne externe, par exemple pour télé-charger un document. Dans ce cas, les données de saisie en écriture, tant en transmission qu'en réception, pourront être échangées sur la deuxième liaison en temps réel et à n'importe quel moment. S'il est nécessaire de véhiculer aussi des données gérées par la première unité de commande, par exemple des pages pour affichage lues d'une mémoire, alors que des échanges de données de saisie en écriture sont en cours, ces premières seront transmises seulement durant des intervalles dans le flux des données de saisie en écriture, selon un protocole d'entrelaçage.

Le fait d'avoir deux unités de commande avec des tâches séparées conformément à l'invention permet notamment d'obtenir un échange très efficace des données sur les première et deuxième liaisons, car le processus de calcul et de gestion en amont de chacune d'elles est maintenu actif sans interruption.

Dans un mode de réalisation préféré de l'invention, le dispositif est opérationnel lorsque ces autres données constituent un document à afficher sur un dispositif récepteur et occupent plus d'une page d'affichage sur écran pour assurer en ordre croissant de priorité : i) la transmission d'une partie desdites autres données constituant une page d'affichage sur l'écran, ii) l'échange de données en télé-écriture et iii) la transmission du reste desdites autres données, de manière à permettre la superposition des données de saisie en écriture sur une page de document affichée dès la réception de cette dernière.

Ce mode de fonctionnement est utile lorsque les échanges de données de saisie écriture concernent des tracés ou autres annotations devant venir en superposition sur une page d'un document présenté sur les dispositifs reliés.

De cette manière, la superposition des données de saisie en écriture sur une page de document est affichée dès la réception de cette dernière. Un dialogue par voie d'échange de tracés en télé-écriture peut alors débuter sans avoir à attendre le chargement du document complet dans le dispositif récepteur.

Après le chargement de la première page du document, les pages restantes peuvent être chargés dans le dispositif récepteur durant les moments libres dans la chaîne de transmission des données en télé-écriture.

Pour permettre, entre autres, une gestion optimale de ce mode préféré de l'invention, la première et la deuxième liaison permettent d'échanger des données via le moyen d'interface en mode de partage d'accès sur la ligne externe de transmission de données selon un protocole prédéterminé.

Avantageusement, le dispositif comprend des moyens d'entrelaçage des données de saisie en écriture et des autres données, de façon à assurer la transmission en temps réel des données de saisie en écriture sur la ligne externe de transmission de données.
On remarque que cette approche permet, dans un mode de transmission mixte d'autres données et de données de saisie en écriture, de garder la priorité de la transmission des données de saisie en écriture, la transmission des autres données (par exemple les pages d'un document à télé-charger succédant à la première page) s'effectuant en arrière tâche sous le contrôle de la première unité de commande.

De préférence, lesdites autres données se présentent sous forme de blocs de données successifs. L'entrelaçage peut alors se réaliser en insérant des données de saisie en écriture dans des intervalles entre des blocs desdites autres données, les données de saisie en écriture pouvant être constitués d'un pixel seul, d'un groupe de plusieurs pixels, ou d'une commande relative à la fonction de saisie en écriture.

Dans un mode de réalisation avantageux de l'invention, chaque pixel d'une suite de pixels consécutifs est inscrit dans un intervalle respectif entre le blocs d'autres données que se succèdent, et ce selon le débit normal des pixels provenant du moyen de saisie en écriture. Ce choix permet, en l'état actuel de la technique, d'obtenir un excellent compromis entre l'impératif d'assurer une transmission suffisamment rapide des pixels pour l'affichage des tracés sur un dispositif récepteur en temps réel et en duplex intégral, et un chargement prompt des pages restantes.

Avantageusement, lors d'une part de l'apparition de données de saisie en écriture destinées à être transmises vers la ligne externe de transmission de données et d'autre part de l'existence préalable d'une transmission d'autres données vers cette ligne, l'entrelaçage est démarré dès le premier intervalle entre deux blocs successifs d'autres données succédant à ladite apparition de données de saisie en écriture.

Dans les mode d'entrelaçage avec lesdites autres données sous forme de blocs, ces derniers occupent de préférence un espace temporel égal ou inférieur à l'interval existant entre des données consécutives de saisie en écriture. De cette manière, l'entrelaçage des données sera pratiquement sans effet sur l'échange d'informations reçu par les utilisateurs.

Dans le mode de réalisation qui sera décrit dans l'exemple, le moyen de l'entrelaçage de données est réalisé au sein de la première unité de commande, les données de saisie en écriture et les autres données entrelacées étant envoyées par la première liaison spécifique vers le moyen d'interface pour transmission sur la ligne externe de transmission de donnée.

On notera que dans un tel contexte, l'expression « autres données » sera interprétée comme englobant l'ensemble des données entrelacées envoyées par la première unité de commande.

Dans ce mode de réalisation, la deuxième unité de commande peut être réalisée de manière à permettre d'échanger et de traiter des données de télé-écriture provenant d'un autre dispositif en communication, via le moyen d'interface et la deuxième liaison spécifique, en concomitance avec l'envoi de données par la première unité de commande via le moyen d'interface et la première liaison spécifique.

Le moyen d'interface peut réaliser la transmission et la réception de données en duplex intégral sur la ligne extérieure de transmission de données (34), les données de transmission et les données de réception pouvant être l'une ou l'autre soit entrelacées soit non entrelacées.

Dans le cas d'une utilisation normale du dispositif, les échanges de données en duplex intégral s'effectuent :
i) soit par des données non-entrelacées en réception et en transmission. Ceci est notamment le cas lorsque par exemple deux dispositifs (ou plus) en communication échangent simultanément des données de saisie en écriture et qu'il n'y a pas de transmission d'autres données;
ii) soit par la transmission de données entrelacées et par réception de données non-entrelacées. Ceci est le cas lorsque, par exemple, un dispositif de télé-écriture transmet simultanément des données de saisie en écriture et des autres données, celles-ci pouvant être relatives à des pages d'un document au-delà de la première page (pages restantes). On notera que le moyen d'interface du dispositif en communication avec le dispositif fonctionnant dans ce mode précité fonctionnera en mode inverse, c'est-à-dire par réception de données entrelacées et par transmission de données non-entrelacées. Bien entendu, chaque dispositif de télé-écriture sera à même de fonctionner dans ces deux modes inverses.

La présente invention permet également d'envisager une communication en duplex intégral entre deux dispositifs de télé-écriture (ou plus) avec échange de données entrelacées aussi bien en transmission qu'en réception.

Ce fonctionnement peut intervenir, par exemple, lors d'une communication en mode de mise à jour interactive d'un document. Le dispositif initiateur envoi donc vers le dispositif récepteur les données entrelacées qui représentent les données de saisie en écriture et les autres données. Il sera alors possible de permettre au dispositif récepteur d'envoyer en duplex un autre document (par exemple pour archivage sur une unité de stockage fixe du dispositif initiateur) pendant même que s'effectue cette communication.

Dans un tel cas, on peut profiter avantageusement du temps de communication pour l'envoi de cet autre document puisqu'il s'exécutera en concomitance avec l'opération de mise à jour interactive du document de l'initiateur. L'utilisateur du dispositif récepteur n'aura alors pas besoin d'attendre la fin de la commande de mise à jour interactive du document pour transmettre son document vers le dispositif initiateur. Il en résulte une utilisation optimale du temps de communication et donc des coûts d'exploitation.

Dans un premier mode de réalisation de la présente invention, l'entrelaçage des données est réalisé au sein de la première unité de commande, les données de saisie en écriture et lesdites autres données étant envoyées sous forme entrelacée sur la première liaison spécifique vers le moyen d'interface pour transmission sur la ligne externe de transmission de données.

Dans ce mode, la première unité de commande peut également assurer le contrôle du moyen d'interface et de l'accès à ce dernier par la deuxième liaison.

En variante, selon un second mode de réalisation, on peut également réaliser l'invention de manière à ce que l'entrelaçage de données soit réalisé au sein du moyen d'interface, les autres données et les données de saisie en écriture étant alors envoyées au moyen d'interface respectivement par la première liaison et la deuxième liaison.

Cette variante autorise toutes les possibilités fonctionnelles précitées et les avantages qui en découlent. Les données reçues par le dispositif de télé-écriture peuvent alors être envoyées par le moyen d'interface sur l'un ou l'autre des première et deuxième unités de commande, ou sur simultanément les deux.

Si ces données reçues sont entrelacées, comprenant à la fois des autres données (par exemple des données de page d'affichage) et des données de téléécriture, le moyen d'interface décompose ces données entrelacées par un moyen démultiplexage pour envoyer respectivement les autres données sur la première liaison spécifique et les données de télé-écriture sur la deuxième liaison spécifique. Dans ce cas, le dispositif de télé-écriture comprendra des moyens de gestion du flux sur ces première et deuxième liaisons afin d'assurer sur celles-ci un échange bidirectionnelle. Avantageusement, cette gestion du flux est basé sur un partage temporel de la première et/ou la deuxième liaison.

Ce moyen de gestion peut être situé au sein de la première unité de commande ou au sein du moyen d'interface.

De préférence, le moyen d'interface assure l'échange de données vocales par des moyens de prise de son et d'écoute téléphonique connectés à celui-ci indépendamment des premières ou des deuxièmes liaisons.

Dans ce deuxième mode de réalisation, s'il y a concomitance entre lesdites autres données et les données de saisie en écriture pour leur transmission sur la ligne externe de transmission de données, l'accès des données de saisie en écriture au moyen d'interface par la deuxième liaison est prioritaire afin d'assurer l'échange en temps réel de celles-ci.

De manière plus générale, et quelque soit le mode de réalisation précité, le moyen d'interface réalise de préférence la transmission en duplex des données entrelacées et la réception de données sur la ligne externe de transmission de données.

Avantageusement, il est également prévu une liaison bidirectionnelle entre les première et deuxième unités de commande. Cette liaison bidirectionnelle permet d'échanger directement des données de contrôle entre les deux unités de commande, sans perturber les flux de données échangées avec le moyen d'interface.

La liaison bidirectionnelle permet notamment d'échanger des données concernant l'état d'occupation des première et deuxième liaisons dédiées, des demandes d'interruption (pour un accès prioritaire), ainsi que des instructions de commande ou des données d'affichage, par exemple pour un stockage sur une unité de mémoire gérée par la première unité de commande.

Avec cette architecture, il est possible de conférer à la première unité de commande la tâche de contrôle du moyen d'interface et de l'accès à ce dernier par la deuxième liaison dédiée.

De préférence, il est prévu un moyen de contrôle de dialogue entre la première et la deuxième unité de commande sur la liaison bidirectionnelle, ce moyen comprenant : une zone de stockage spécifique à chacune des unités de commande pour les données échangées, chacune des zones de stockage pouvant être lues uniquement par l'une des unités de commande et inscrites par l'autre unité de commande, un moyen permettant d'indiquer à une unité de commande destinataire de la présence de données dans sa zone de stockage, écrite par l'unité de commande émettrice, et un moyen permettant d'indiquer à l'unité de commande émettrice de la lecture des données sur la zone de stockage de l'unité de commande destinataire.

Le moyen de contrôle de dialogue peut comprendre en outre un moyen d'interdiction d'inscription de données sur une zone de stockage si celle-ci contient déjà des données non lues.

Bien entendu, les première et deuxième unités de commande peuvent servir à gérer d'autres tâches supplémentaires à celles précitées. Selon un mode préféré de l'invention, la première unité de commande servira principalement à contrôler les entrées et les sorties du dispositif de télé-écriture. A ce titre, elle peut assurer la gestion d'au moins l'un des composants périphériques ou internes suivants : un moyen amovible de stockage de données, un moyen fixe de stockage de données, une imprimante, et une liaison série.

La deuxième unité de commande est de préférence dédiée à des fonctions concernant les applications du dispositif de télé-écriture. Celle-ci concerne bien entendu les fonctions liées à la saisie en écriture et de préférence les fonctions liées à l'affichage des données qu'elles proviennent d'une saisie en écriture ou de données d'affichage préexistantes, ainsi que des commandes relatives à ces fonctions. Elle peut également assurer selon les configurations possibles, la gestion d'au moins l'un des composants suivants : un dispositif analyseur optique de documents (scanner), un dispositif de lecture et/ou d'inscription de données sur une carte de stockage de données, tel qu'une carte à puces, un lecteur d'empreinte digitale, et un clavier.

Avantageusement, le moyen d'interface comprend des propres moyens d'aiguillage et de contrôle, sur la ligne extérieure, de la transmission ou de la réception des données échangées sur la première et/ou la deuxième liaison ainsi que de la transmission ou de la réception des données vocales selon un partage temporel.

Le dispositif de télé-écriture selon l'invention est prévu pour fonctionner sur des lignes téléphoniques classiques (lignes commutées) ou des lignes numériques (par exemple du type RNIS). Dans ce cas, le moyen d'interface sera avantageusement doté de moyens permettant de fonctionner indifféremment sur l'un ou l'autre de ces types de lignes.

A ce titre, le moyen d'interface comprend de préférence des moyens de numérisation des données vocales selon un protocole prédéfini.

La présente invention concerne également un procédé de commande d'un dispositif de télé-écriture permettant un échange d'informations visuelles et vocales en temps réel avec un autre tel dispositif en communication via une ligne externe de transmission de données, le dispositif comprenant :
un moyen d'échange de données vocales,
un moyen d'affichage présentant une surface de visualisation,
un moyen de saisie en écriture pour réaliser l'affichage en temps réel de tracés sur la surface de visualisation,
un moyen de traitement des données de saisie en écriture et d'autres données destinées à être échangées, et
un moyen d'interface assurant l'échange des données de saisie en écriture et desdites autres données sur la ligne externe de transmission de données,
ledit procédé étant caractérisé en ce qu'il consiste à répartir les tâches du moyen de traitement de données en assurant en parallèle :
d'une part la gestion et l'échange desdites autres données sur la ligne externe de transmission de données via le moyen d'interface, et
d'autre part la gestion et l'échange de données de saisie en écriture sur la ligne externe de transmission de données via le moyen d'interface.

De préférence, lorsque les autres données constituent un document à afficher sur un autre tel dispositif et occupant plus d'une page d'affichage sur écran, ledit moyen de traitement de données de saisie en écriture et desdites autres données est commander pour assurer en ordre croissant de priorité : i) la transmission d'une partie desdites autres données constituant une page d'affichage sur l'écran, ii) l'échange de données en télé-écriture et iii) la transmission de données du restant desdites autres données, de manière à permettre la superposition des données de saisie en écriture sur une page de document affichée dès la réception de cette dernière.

Selon un mode de réalisation préféré de l'invention, lorsque les autres données et les données de saisie en écriture doivent être transmises simultanément, elles sont transmises en mode de partage d'accès sur la ligne externe de transmission de données. De préférence, ce mode de partage s'opère par entrelaçage de façon à permettre la transmission en temps réel des données de saisie en écriture sur la ligne externe de transmission de données.

Avantageusement, lesdites autres données se présentent sous forme de blocs de données successifs. L'entrelaçage peut alors se réaliser en insérant des données de saisie en écriture dans des intervalles entre des blocs desdites autres données, les données de saisie en écriture pouvant être constitués d'un pixel seul, d'un groupe de plusieurs pixels, ou d'une commande relative à la fonction de saisie en écriture.

D'autres avantages et caractéristiques de l'invention ressortiront à la lecture d'un mode de réalisation préféré, présenté uniquement à titre d'exemple, en référence aux dessins en annexe, dans lesquels :
la figure 1 est une vue d'ensemble d'un appareil de télé-écriture avec représentation des diverses possibilités de connexion, selon un premier mode de réalisation de la présente invention,
la figure 2 représente schématiquement les zones d'écriture, de commande et de contrôle accessibles sur le dispositif de télé-écriture à la figure 1.
la figure 3 est une vue schématisée de deux dispositifs de télé-écriture en communication par une ligne téléphonique externe,
la figure 4 est un schéma bloc simplifié de l'architecture du dispositif de télé-écriture de la figure 1,
la figure 5 est un schéma bloc détaillé de la première unité de commande (processeur entrées/sorties) représenté à la figure 4,
la figure 6 est un schéma bloc détaillé de la deuxième unité de commande (processeur applications) représenté à la figure 4,
la figure 7 est un schéma bloc détaillé du moyen d'interface (modem) représenté à la figure 4,
la figure 8A montre la structure d'un message entre le processeur entrées/sorties et le processeur applications, ou entre deux dispositifs de télé-écriture lorsqu'il est composé d'un nombre variable de mots,
la figure 8B représente la structure d'un message entre deux dispositifs de télé-écriture lorsque le nombre de mots qui le compose est fixe,
la figure 9 est un organigramme de l'opération d'écriture d'un message dans un contrôleur de dialogue assurant le transfert de données entre le processeur entrées/sorties et le processeur applications,
la figure 10 est un organigramme de la lecture d'un message structuré conformément à la figure 8A par l'un des processeurs,
la figure 11 est un organigramme d'une opération de transfert uniquement d'autres données constituant un document via le modem (mode fax/mode données),
la figure 12 est un organigramme de l'opération de transfert d'un document lorsque celui-ci est déjà présent sur l'écran d'un dispositif via le modem (mode fax/mode données),
la figure 13 est un organigramme d'une opération de réception d'un document venant d'un dispositif de type fax ou de type modem.
la figure 14 est un organigramme de la phase d'initialisation de deux dispositifs de télé-écriture lorsque ceux-ci réalisent une communication interactive vocale et de saisie en écriture pour la création d'un document,
la figure 15 est un organigramme de la phase active de communication entre deux dispositifs de télé-écriture après initialisation pour création interactive d'un document,
la figure 16 est un organigramme de la phase de fin de communication entre deux dispositifs de télé-écriture lors d'une création interactive d'un document,
les figures 17A, 17B, 17C et 17D représentent sur quatre planches l'organigramme de la phase d'initialisation de deux dispositifs de télé-écriture lors d'une mise à jour interactive d'un document contenu dans un dispositif de téléécriture,
les figures 18A et 18B représentent sur deux planches l'organigramme de l'activité des processeurs entrées/sorties pendant la phase de communication interactive entre deux dispositifs de télé-écriture en mode de saisie en écriture (mode écriture) et également transmettre des autres données (page restante) lors d'une mise à jour interactive d'un document,
les figures 19A et 19B représentent sur deux planches séparées l'organigramme de l'activité des processeurs applications pendant la phase de communication interactive en mode écriture lorsque le processeur entrées/sorties doit également transmettre des autres données (page restante) lors d'une mise à jour interactive d'un document,
la figure 20 est un organigramme de la phase de communication interactive lorsque les processeurs applications de deux dispositifs de télé-écriture sont raccordés directement à leur modem lors d'une mise à jour interactive d'un document,
la figure 21 est un organigramme de la phase de fin de communication pendant la phase d'envoi de pages restantes,
la figure 22 est un organigramme de la phase de fin de communication lorsque les processeurs applications sont raccordés à leur modem,
la figure 23 est un schéma bloc détaillé d'un processeur de communications utilisé dans un second mode de réalisation de la présente invention.
la figure 24 est un organigramme de la phase d'initialisation du dispositif de télé-écriture selon le second mode de réalisation lors d'une opération de création interactive d'un document,
la figure 25 est un organigramme de la phase de communication interactive du dispositif de télé-écriture selon le second mode de réalisation lors d'une opération de création interactive d'un document,
la figure 26 est un organigramme de la phase de fin de communication interactive du dispositif de télé-écriture selon le second mode de réalisation lors d'une opération de création interactive d'un document,
les figures 27A, 27B et 27C représentent sur trois planches l'organigramme d'une phase d'initialisation du dispositif de télé-écriture selon le second mode de réalisation lors d'une mise à jour interactive d'un document,
les figures 28A et 28B représentent sur deux planches l'organigramme d'une phase de communication interactive du dispositif de télé-écriture selon le second mode de réalisation lors d'une mise à jour interactive d'un document,
la figure 29 est un organigramme d'une phase de fin de communication interactive du dispositif de télé-écriture selon le second mode de réalisation. initiée par l'utilisateur du dispositif initiateur,
la figure 30 est un organigramme d'une phase de fin de communication interactive du dispositif de télé-écriture selon le second mode de réalisation, initiée par l'utilisateur du dispositif récepteur,
la figure 31 est un organigramme représentant l'activité du processeur de communications pendant la phase de communication interactive entre chaque dispositif, selon le second mode de réalisation,
la figure 32 est un organigramme représentant la phase de détermination de transfert de messages vis-à-vis du processeur de communications selon le second mode de réalisation, lorsque les files de stockage ne sont pas vides, et
la figure 33 est un organigramme représentant l'activité du processeur de communications, selon le second mode de réalisation, lorsque celui-ci est en réception d'un message envoyé par le dispositif émetteur.

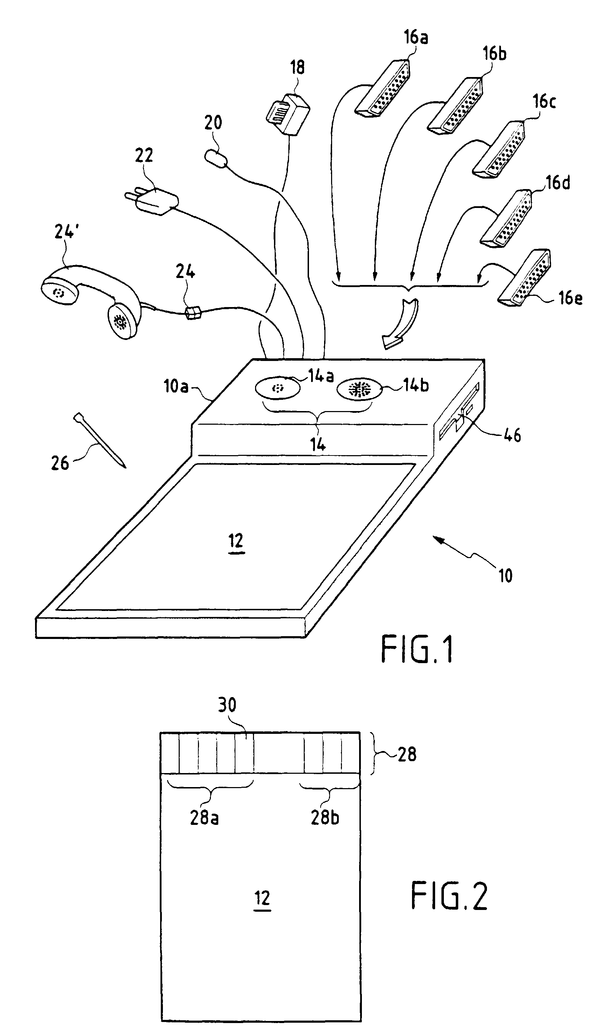

Comme le montre la figure 1, le dispositif de télé-écriture selon le premier mode de réalisation de la présente invention se présente sous la forme d'un boîtier autonome 10 qui rassemble une tablette 12 réalisant la fonction d'affichage et de saisie en écriture, un dispositif de téléphonie de type mains-libres 14a, 14b, une électronique informatisée de commande (non représentée) et un ensemble de connecteurs 16a-16e, 18-24.

La tablette 12 est un écran de visualisation plat à cristaux liquides de grande dimension, correspondant par exemple à un format A4. La saisie en écriture sur cet écran 12 s'effectue à l'aide d'un stylet 26 qui agit sur une membrane tactile au-dessus de cet écran et reliée à un détecteur de coordonnées désignées par le stylet, selon une technique bien établie. De la sorte, les tracés réalisés sur la tablette 12 sont détectés par la membrane tactile et peuvent être reproduits directement sur l'écran.

Le dispositif de téléphonie de type mains-libres présente un microphone 14a et un petit haut-parleur 14b intégrés dans une partie rehaussée 10a du boîtier 10. Cette partie rehaussée 10a contient également un répondeur téléphonique, une partie de l'électronique de commande et deux unités de stockage de données : un lecteur sur support fixe, tel qu'un disque dur (non représenté), et un lecteur sur support amovible, par exemple disquette au format 3,5". L'ensemble des connecteurs 16a-16e, 18-24 permet de relier le dispositif à diverses unités périphériques (connecteurs 16a-16e), à une ligne téléphonique (connecteur 18), à un clavier (connecteur 20), à une prise d'alimentation sur secteur (connecteur 22), ainsi qu'à un combiné téléphonique 24' (connecteur 24) pour une conversation privée.

Dans l'exemple, il est prévu cinq connecteurs informatique permettant une liaison indépendante respectivement avec un lecteur de carte (connecteur 16a), un lecteur d'empreinte digitale (connecteur 16b), un périphérique sur liaison série (connecteur 16c), un scanner (connecteur 16d) et une imprimante (connecteur 16e).

L'accès à l'ensemble des fonctions disponibles s'effectue au moyen d'icônes apparaissant sur l'écran interactif 12 de manière à pouvoir être désignées sélectivement par le stylet 26.

Lors de la mise en marche du dispositif, l'écran interactif présente les icônes nécessaires pour accéder aux fonctions de base : utilisation en mode téléphonie, fax, répondeur, ou de télé-écriture, avec choix de mode de fonctionnement au sein de ces modules. Une fois cette première sélection réalisée, l'utilisateur est guidé dans les sélections par des menus interactifs déroulants offrant différentes possibilités pouvant être désignées par le stylet.

L'organisation de ces commandes est représentée à la figure 2. Une zone d'opérations 28 est définie sur une marge de l'écran 12 (marge supérieure dans l'exemple). Cette zone 28 comporte un ensemble de pictogrammes (ou icônes), et est divisée en une partie 28A dédiée aux icônes accessibles pour entrer des commandes par le stylet 26 et une zone d'état de fonctionnement 28B permettant de visualiser l'activité des différents périphériques du dispositif de télé-écriture.

La zone d'état de fonctionnement 28B est également active, car en plus de donner une indication de l'état d'activité du dispositif (fonctions en cours, modes sélectionnées, etc.) elle permet d'agir sur les différents organes sous commande. Ainsi, une icône qui apparaît sur la zone d'état de fonctionnement 28B peut être accessible par le stylet pour modifier l'état de l'activité qu'elle affiche. Par exemple, une icône indiquant que la ligne téléphonique est ouverte peut être désignée par le stylet 26 pour provoquer la fermeture de la ligne, à la manière d'un interrupteur. D'autre icônes sur la zone d'état 28B peuvent être désignées pour ouvrir un menu déroulant permettant de modifier sélectivement l'état indiqué.

Le reste de l'écran 12 reste accessible pour la saisie en écriture.

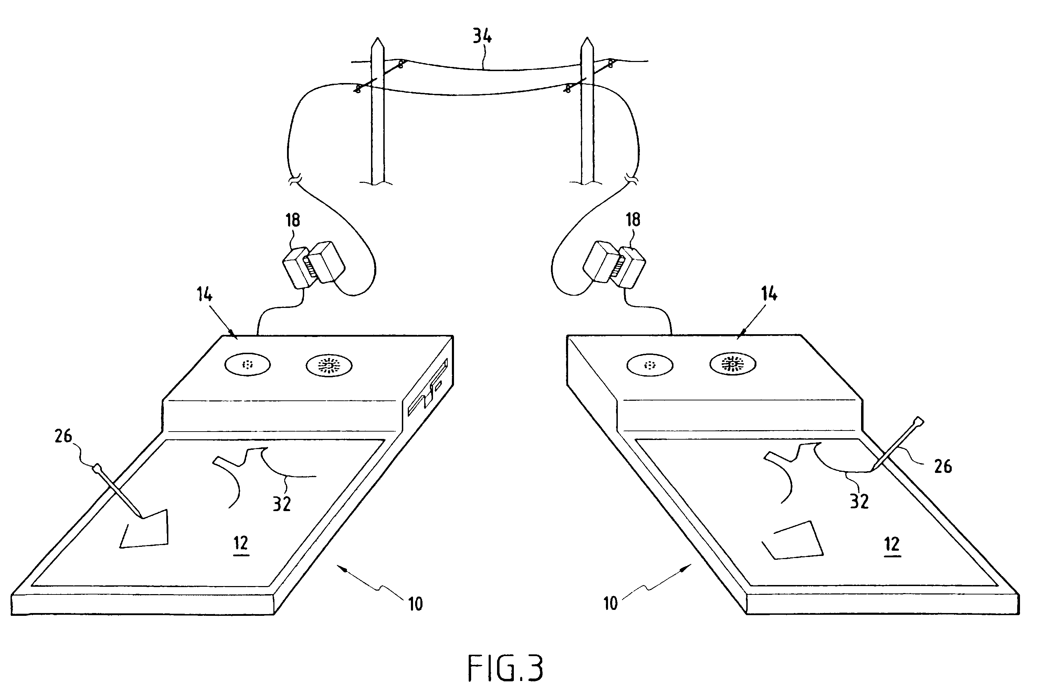

Comme le montre la figure 3, le dispositif de télé-écriture 10 permet un échange en temps réel d'informations vocales et visuelles entre deux utilisateurs ou plus. Les échanges vocaux et visuels peuvent s'effectuer simultanément aussi bien dans le sens de l'émission que dans celui de la réception, ce qui correspond au mode dit "duplexe intégral".

Ainsi, un tracé 32 effectué par le stylet 26 sur l'écran 12 de l'un des dispositifs s'affiche sur ce dernier et simultanément sur celui du correspondant, et inversement. Les données relatives au tracé 32 effectuées sur l'un des écrans 12 sont transmises sur la ligne téléphonique 34 sous forme de signaux ayant un format préétabli. Ces signaux peuvent être analogiques ou numériques selon le protocole de transmission utilisé sur la ligne téléphonique.

L'écran 12 peut également afficher des données sous forme d'images ou de textes provenant d'une source autre que le stylet et de l'écran tactile. On les désignera communément "autres données", s'agissant généralement d'informations déjà stockées sur un support (mémoire, unité de stockage ou imprimé) par rapport aux données formées (et généralement transmises) en temps réel lors d'une saisie en écriture. Ces données peuvent provenir par exemple d'un dispositif périphérique par l'intermédiaire d'un des connecteurs 16A-16E ou 20 (figure 1), ou de l'unité de stockage sur une disquette 46.

Lorsqu'il est nécessaire d'échanger ces autres données (images ou texte) en même temps que les tracés réalisés par le stylet 26, la ligne 34 fonctionne en mode partagé. Dans ce cas, un protocole est mis en oeuvre pour permettre la transmission et la réception en alternance de ces deux types de données.

Conformément à la présente invention, l'électronique de commande permet une gestion optimale des échanges de données dans ces conditions de transmission en mode partagé.

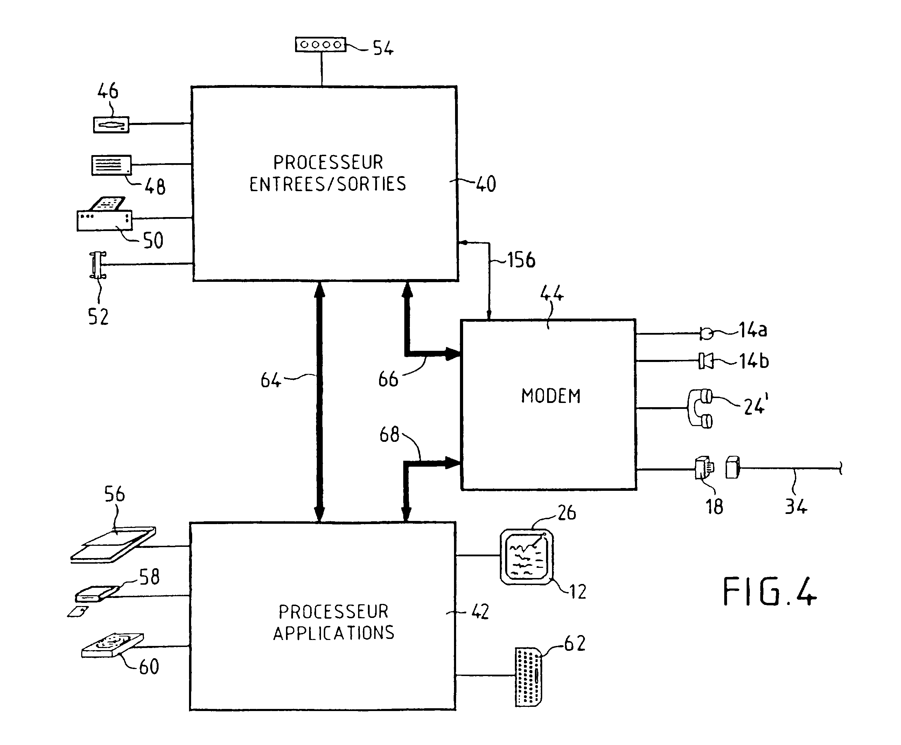

L'architecture globale de l'électronique de commande est représentée de manière simplifiée à la figure 4.

Elle se décompose en trois blocs principaux, à savoir : un bloc processeur entrées/sorties 40 (première unité de commande), un bloc processeur applications 42 (deuxième unité de commande) et un bloc modem 44 (moyen d'interface).

Les processeurs entrées/sorties 40 et application 42 fonctionnent indépendamment l'un de l'autre pour exécuter une ou plusieurs tâches spécifiques. Le processeur entrées/sorties 40 est dédié plus particulièrement à l'exécution de toutes les tâches de gestion d'autres données, telles que des documents, ou de fonctionnalité interne au dispositif de télé-écriture. Le processeur entrées/sorties 40 gère notamment le dispositif de stockage sur disquette 46 (qui est interne au dispositif de téléécriture), et les échanges de données avec des dispositifs périphériques, notamment un dispositif de stockage sur disque dur 48, une imprimante 50 et une liaison série 52 qui sera principalement pour établir une connexion sur un ordinateur personnel. Il gère également les commandes de base du dispositif de télé-écriture et les divers voyants lumineux 54 qui signalent son état de fonctionnement.

Comme il sera expliqué plus bas, le processeur entrées/sorties contrôle aussi l'échange de données entre les trois blocs et le fonctionnement du modem 44.

Le processeur applications 42 est dédié plus particulièrement à l'exécution d'applications fonctionnelles du dispositif de télé-écriture. A ce titre, il gère toutes les fonctions liées à la saisie en écriture et à l'affichage de données sur l'écran tactile 12. Le processeur applications 42 gère également les fonctions d'interface homme-machine avec des dispositifs externes pouvant se connecter sur le dispositif de téléécriture. Dans l'exemple, ces dispositifs sont un analyseur de documents (scanneur) 56, un lecteur de cartes bancaires 58, un lecteur d'empreintes digitales 60, ainsi qu'un clavier 62.

Les deux processeurs 40, 42 dialoguent entre eux par l'intermédiaire de messages transitant sur un bus bidirectionnel 64 les reliant directement.

Le modem 44 permet la connexion du dispositif de télé-écriture au réseau de lignes téléphoniques. Il gère également toutes les fonctions liées à la téléphonie, notamment les fonctions mains-libres ou par combiné confidentiel. Il effectue notamment la numérotation et le transfert de la voix, ainsi que de l'échange de données avec le processeur entrées/sorties 40 ou le processeur applications 42. Il permet la transmission et la réception des données dans les différents modes : télécopies, modem, interactif voix/données, etc..

Le processeur entrées/sorties 40 et le processeur applications 42 sont reliés séparément au modem 44 par un bus dédié respectif 66 et 68. Le processeur entrées/sorties 40 peut ainsi dialoguer avec le modem 44 par son bus dédié 66 indépendamment du processeur applications 42. De même, le processeur applications 42 peut dialoguer avec le modem 44 par son bus dédié 68 indépendamment du processeur entrées/sorties 40.

Les fonctions directement liées au téléphone sont contrôlées sur le modem 44 par le processeur entrées/sorties 40 via des lignes de commande 156 qui sont distinctes du bus dédié 66 de ce dernier.

Grâce à cette architecture, l'accès au circuit modem 44 permettant la communication avec un correspondant est partagé de façon totalement transparente entre les processeurs entrées/sorties 40 et applications via leurs bus dédiés respectifs 66 et 68.

Le processeur applications 42 peut effectuer des transferts de données sur la ligne téléphonique concernant par exemple la saisie en écriture ou l'affichage sur l'écran tactile 12, directement par son bus dédié 68. Cette liaison entre le modem 44 et le processeur applications 42 permet ainsi d'établir une communication en duplex intégral (voix et données en écriture), réalisant ainsi une interactivité optimale.

En mode duplex intégral, le modem 44 assure le partage de transmission et de réception de la voix et des données en écriture sur la ligne téléphonique, grâce à des commandes du processeur entrées/sorties transitant respectivement par les lignes de commande 156 et le bus dédié 66.

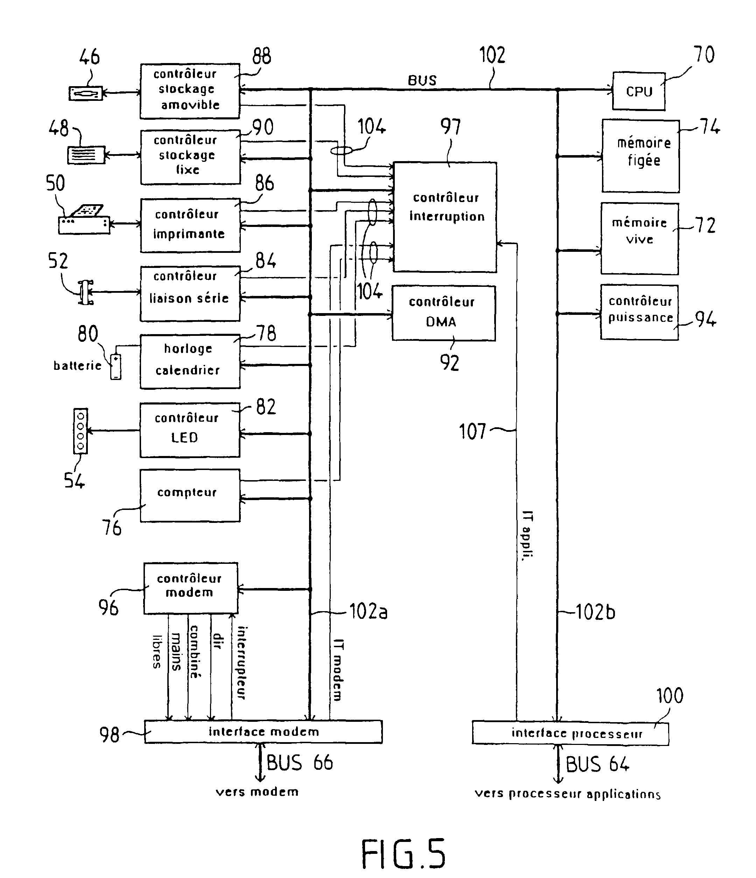

Le schéma bloc détaillé du processeur entrées/sorties 40 est représenté à la figure 5.

La gestion interne du processeur entrées/sorties 40 est réalisée par une unité centrale de calcul (CPU) 70 qui est utilisée pour piloter les différents contrôleurs d'entrée et de sortie du dispositif de télé-écriture, ainsi que les unités de stockage 46 et 48. Le CPU 70 est mis en oeuvre par un système d'exploitation dit "temps réel" qui lui permet d'exécuter toutes les demandes des divers contrôleurs des entrées et sorties pour garantir un traitement sans délai des données échangées.

Le système d'exploitation temps réel est contenu sous forme de logiciel dans une mémoire vive 72 qui comporte également des zones de stockage transitoires d'informations. Le logiciel d'exploitation est chargé dans la mémoire vive 72 sous forme de modules ou de fichiers actifs nécessaires pour une configuration de fonctionnement donnée.

Le programme d'initialisation du processeur entrées/sorties ainsi que les programmes de gestion de bas niveau des contrôleurs, qui sont fixes, sont stockés dans une mémoire figée 74.

Un compteur 76 est utilisé pour déterminer des durées de temps permettant d'assurer, entre autres, des fonctions de "chien de garde" pour éviter les blocages dans l'échange de données entre les divers organes constitutifs du processeur entrées/sorties.

Une horloge/calendrier 78 réalise la fonction de calcul de la date et de l'heure pour le fonctionnement du dispositif de télé-écriture. Il est relié à une batterie 80 permettant ainsi de conserver les informations même en cas de coupure de courant.

Un contrôleur de diodes électroluminescentes (LED) 82 réalise l'allumage ou l'extinction des différentes diodes 54, donnant ainsi une indication visuelle des différents états de fonctionnement du dispositif de télé-écriture. Ces diodes 54 peuvent par exemple afficher les états de : marche/arrêt, l'affichage qu'un message a été reçu, que le mode répondeur est actif, ou que le mode en appel différé est actif.

Un contrôleur de liaison série 84 permet au dispositif de télé-écriture d'échanger des données avec un autre appareil externe utilisant le même type de liaison. Ce contrôleur sert notamment pour l'échange de données avec un ordinateur personnel, par exemple pour le transfert de fichiers.

Un contrôleur d'imprimante 86 assure l'interface de connexion du dispositif de télé-écriture à une imprimante 50 pour l'impression de documents, ceux-ci pouvant provenir aussi bien d'une saisie en écriture par l'écran tactile 12 que d'une source externe. Le contrôleur d'imprimante sert également pour l'impression de télécopies.

Un contrôleur de stockage sur support amovible 88 assure le protocole d'échange de données avec le lecteur de disquette 46 pour l'enregistrement ou la lecture de données.

De même, un contrôleur de stockage sur support fixe 90 assure le protocole d'échange de données avec le lecteur de disque dur 48. Ce lecteur de disque dur 48 contient l'intégralité du système d'exploitation, les programmes d'application et des zones de stockage de document.

Un contrôleur d'accès direct en mémoire (DMA) 92 permet d'effectuer des transferts de données entre les différents contrôleurs ou la mémoire sans utiliser l'unité centrale 70, selon des techniques bien établies.

Un contrôleur de puissance 94 permet de gérer et de réduire la consommation électrique des différents périphériques du processeur lorsque ceux-ci sont inutilisés pendant une certaine période de temps.

Un contrôleur modem 96 permet de définir l'utilisation du combiné téléphonique 24' et/ou de la fonction mains-libres de l'appareil de téléphonie 14 intégré au dispositif de télé-écriture, ainsi que la connexion du modem 44 avec soit le processeur entrées/sorties 40 (via le bus dédié 66), soit le processeur applications 42 (via le bus dédié 68) pour le transfert de données.

Un contrôleur d'interruption 97 permet de recevoir des signaux d'interruption issus des différents contrôleurs puis d'interrompre le CPU 70 en lui indiquant le contrôleur qui doit être servi.

Une interface modem 98 relie le contrôleur modem 96 au bus dédié 66 pour assurer la mise en forme des signaux échangés sur ce dernier.

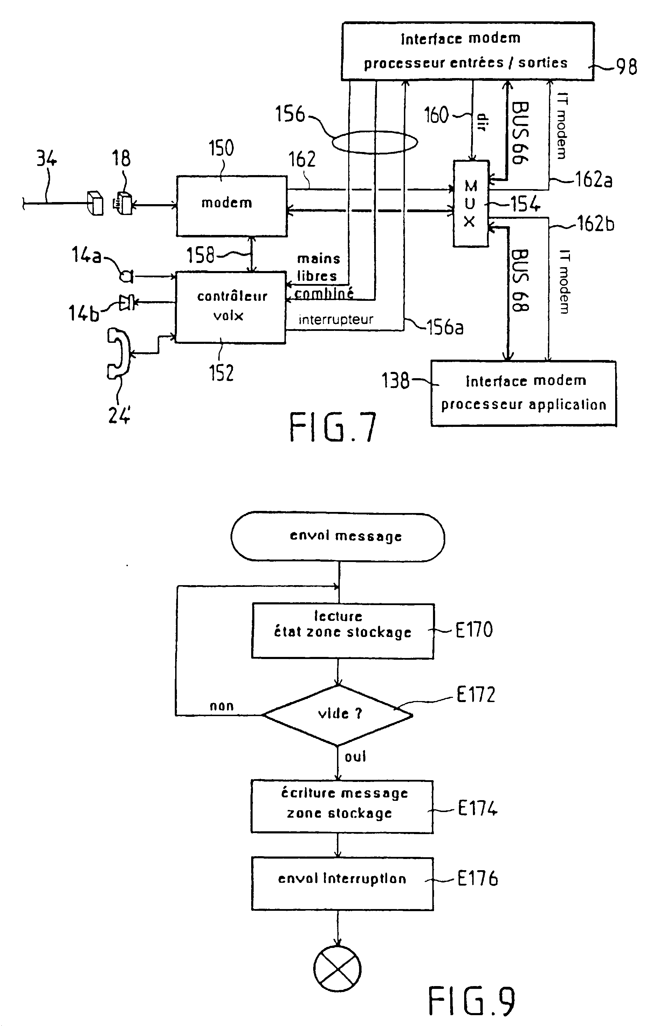

Le contrôleur modem 96 agit directement sur l'interface modem 98 pour commander les opérations de téléphonie soit en mode mains-libres ou en mode combiné, le signal interrupteur 156a (fig. 7), issu du modem 44, indiquant l'état décroché ou raccroché du combiné téléphonique 24'.

Une interface processeur 100 permet de réaliser la connexion avec le processeur applications 42 par l'intermédiaire du bus bidirectionnel 64 qui relie les deux processeurs.

L'ensemble des organes constitutifs du processeur entrées/sorties 40 est relié directement par un bus commun 102 qui comporte également deux branches 102a et 102b avec terminaison respectivement à l'interface modem 98 et l'interface processeur 100.

Le contrôleur d'interruptions 97 est également relié directement par des câblages spécifiques 104 aux différents contrôleurs 82 à 90 ainsi qu'au compteur 76, l'interface modem 98 et l'interface processeur 100.

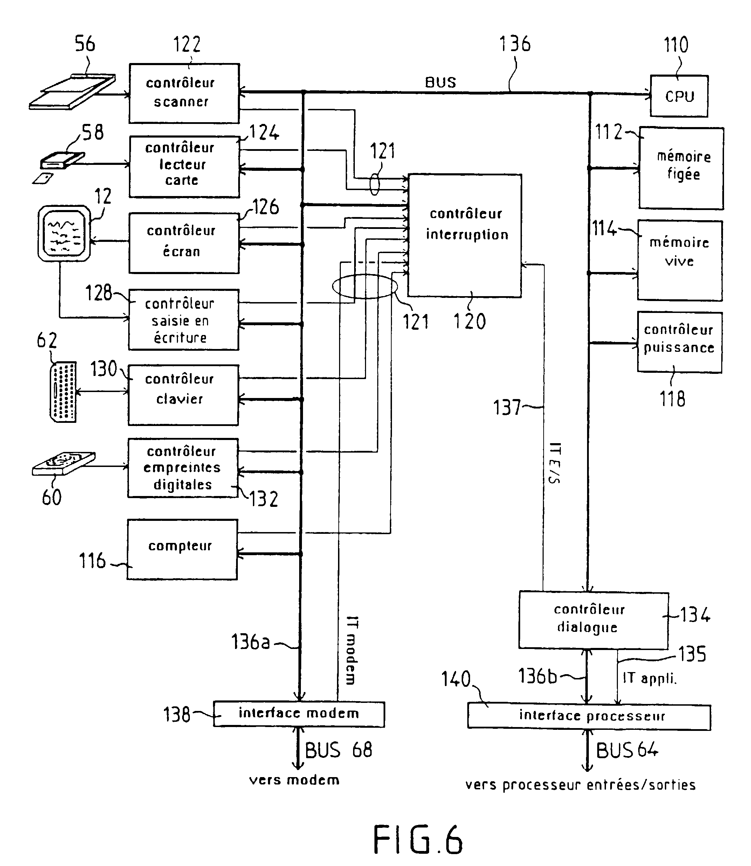

La figure 6 est un schéma bloc de la structure interne du processeur applications 42.

De même que le processeur entrées/sorties 40, le processeur applications 42 comporte une unité centrale (CPU) 110, une mémoire figée 112, une mémoire vive 114, un compteur 116, un contrôleur de puissance 118 et un contrôleur d'interruptions 120.

L'unité centrale 110 sert à l'exécution des programmes applicatifs du dispositif de télé-écriture, ainsi que de la gestion des différents contrôleurs dédiés aux applications. Elle gère notamment toutes les opérations liées au fonctionnement de l'écran tactile 12 et des interfaces homme-machine telles que le scanner 56, le lecteur de carte 58 et le lecteur d'empreinte digital 60 ainsi que le clavier 62.

La mémoire figée 112 contient le programme d'initialisation propre au processeur applications ainsi que les programmes de gestion de bas niveau des contrôleurs gérés par le processeur applications.

La mémoire vive 114 est utilisée pour le stockage de programmes d'application spécifiques au processeur applications 42 ainsi que pour le stockage transitoire d'informations.

Le compteur 116, le contrôleur de puissance 118 et le contrôleur d'interruptions 120 ont les mêmes fonctionnalités que leurs homologues dans le processeur entrées/sorties 40. Comme pour le processeur entrées/sorties 40, le contrôleur d'interruptions 120 du processeur applications est relié directement aux différents contrôleurs et au compteur de ce dernier par des câblages spécifiques 121.

Un contrôleur scanner 122 assure l'échange de données avec le scanner 56 afin de permettre la lecture d'un document imprimé et le transformer en informations utilisables par le processeur.

Un contrôleur de lecteur de cartes 124 assure la connexion avec le lecteur de cartes à puce 58 afin de permettre la lecture d'informations contenues sur la carte et de les envoyer au CPU 110. De même, le CPU 110 peut envoyer des informations au lecteur de cartes à puce 58 afin d'écrire lesdites informations sur la carte.

L'écran tactile 12 est géré par un contrôleur écran 126 et un contrôleur de saisie en écriture 128, ce dernier commandant la membrane tactile au-dessus de l'écran. Le contrôleur écran 126 réalise la connexion avec l'écran 12 pour la transmission d'informations de visualisation. Ce contrôleur 126 transmet notamment des pictogrammes et des messages de commande permettant d'assurer l'interface homme-machine via l'écran tactile 12, ainsi que des pixels à visualiser dont les coordonnées sont issues du contrôleur de saisie en écriture 128.

Le contrôleur de saisie en écriture 128 assure la transmission des coordonnées de position du stylet 26 sur l'écran tactile 12 pour permettre le suivi des tracés inscrits.

Un contrôleur de clavier 130 réalise la connexion avec le clavier alphanumérique 62. Ce contrôleur 130 transmet au CPU 110 les codes correspondant aux touches pressées.

Un contrôleur d'empreinte digitale 132 réalise la connexion avec le lecteur d'empreinte digitale 60. Ce lecteur 60 lit une empreinte puis, après transformation, transmet les informations correspondantes au CPU 110 via ce contrôleur 132.

Le processeur applications 42 intègre également un contrôleur de dialogue 134 qui permet de réaliser directement le transfert de messages ou de données entre ce processeur 42 et le processeur entrées/sorties 40 au moyen du bus bidirectionnel 64. Le contrôleur de dialogue 134 est accessible simultanément par les deux processeurs 40, 42. Il signale la présence d'un message d'un processeur émetteur 42 ou 40 en envoyant un signal d'interruption IT Appl. ou IT. E/S au contrôleur d'interruption 97 ou 120 du processeur récepteur 40 ou 42.

Dans le cas d'une demande d'interruption du processeur entrées/sorties 40 à l'initiative du processeur applications 42, le contrôleur 134 émet l'ordre d'interruption IT appl. sur son interface processeur 140 par un câblage direct 135. L'interface processeur 140 retransmet cet ordre d'interruption IT. appl. sur le bus bidirectionnel 64 à l'interface processeur 100 du processeur entrées/sorties, d'où il est envoyé au contrôleur d'interruptions 97 de ce dernier par un câblage direct 107.

Dans le cas d'une demande d'interruption du processeur applications 42 à l'initiative du processeur entrées/sorties, celui-ci est transmis au contrôleur de dialogue via le bus bidirectionnel 64 et la section terminale 136b du bus interne 136 du processeur applications 42. En réponse, le contrôleur de dialogue 134 retransmet l'ordre d'interruption IT E/S au contrôleur d'interruptions 120 par un câblage direct 137.

Chaque processeur 40, 42 possède une zone de stockage qui lui est réservée à l'intérieur du contrôleur de dialogue 134.

Les deux processeurs peuvent écrire simultanément dans leur zone de stockage et également lire simultanément les informations contenues dans la zone de stockage de l'autre processeur au sein du contrôleur de dialogue 134.

L'ensemble des organes géré par le processeur applications est relié par un bus commun 136 ayant deux terminaisons 136a, 136b respectivement à l'interface modem 138 et à l'interface processeur 140. La terminaison 136b à l'interface processeur 140 dépend du contrôleur de dialogue 134.

L'interface modem 138 permet de réaliser la connexion avec le modem 44 sur le bus dédié 68.

L'interface processeur 140 permet de réaliser la connexion avec le processeur entrées/sorties sur le bus bidirectionnel 64 pour relier les interfaces 100, 140 des deux processeurs 40, 42.

La structure interne du modem 44 est représentée à la figure 7.

Le modem 44 est composé d'un circuit modem de base 150, d'un contrôleur de voix 152 et d'un multiplexeur de transfert de données 154.

Le circuit modem de base 150 permet de réaliser la connexion au réseau téléphonique au moyen de la prise téléphonique 18 de façon à relier les différentes informations possibles avec le dispositif de télé-écriture, à savoir : uniquement de la voix, uniquement des données, soit en mode fax, soit en mode télé-écriture, ou encore simultanément la voix et les données de télé-écriture.

Le contrôleur voix 152 est relié directement au circuit modem de base 150 par une ligne de transfert spécifique 158. Il assure l'échange de données vocales de la partie téléphonie du dispositif de télé-écriture permettant notamment le fonctionnement en utilisant uniquement de la fonction mains-libres, de l'utilisation uniquement du combiné confidentiel 24 ou de l'utilisation simultanément de la fonction mains-libres et du combiné confidentiel. Ces modes d'utilisation en téléphonie sont réalisés par le contrôleur de voix 152 à partir de commandes transmises sur un câblage spécifique 156 à partir du contrôleur de modem 96 au sein du processeur entrées/sorties 40, via l'interface modem 98 de ce dernier.

Le contrôleur de voix 152 transmet à l'interface modem 98 du processeur entrées/sorties 40, via une ligne 156a du câblage 156, un signal interrupteur (interrupteur) qui indique au contrôleur modem 96 du processeur entrées/sorties l'état du combiné confidentiel 24' : soit à l'état décroché, soit à l'état raccroché.

Le transfert de données sur la ligne téléphonique 34 peut être dirigé soit vers le processeur entrées/sorties 40 par l'intermédiaire du bus 66, soit vers le processeur applications 42 par l'intermédiaire du bus 68. Un signal dir issu du contrôleur modem 96 du processeur entrées/sorties vers le multiplexeur 154 par un câblage spécifique 160 permet de diriger la connexion du circuit modem de base 150 vis-à-vis des deux processeurs via le multiplexeur 154.

Les demandes de transfert issues du modem 44 sont également dirigées. par l'intermédiaire d'un signal IT modem, vers le processeur concerné. Le circuit modem de base 150 émet la demande de transfert par l'intermédiaire d'une ligne de signal 162 vers le multiplexeur 154, lequel la transmet à l'interface modem 98 ou 138 par des câblages spécifiques 162a et 162b reliant le multiplexeur 154 respectivement à l'interface modem 98 du processeur entrées/sorties et à l'interface modem 138 du processeur applications.

### Modes de fonctionnement

Il sera maintenant expliqué les divers modes de fonctionnement possibles avec un appareil de télé-écriture conformément au mode de réalisation présenté par référence aux figures 1 à 7. Ces modes de fonctionnement font appel à divers protocoles de communication soit de transfert interne de données entre les processeurs entrées/sorties et applications 40 et 42, soit entre l'un ou l'autre de ces derniers et le modem 44 via le bus dédié correspondant 66 ou 68.

### Transfert entre processeurs

Le contrôleur de dialogue 134 intégré au processeur applications 42 permet de réaliser le transfert d'informations entre le processeur entrées/sorties 40 et le processeur applications 42. Le transfert d'informations entre ces processeurs se réalise par l'intermédiaire de messages ayant une structure prédéterminée. La structure d'un tel message est représentée schématiquement à la figure 8A.

Un message est constitué par un ou plusieurs mots ( mot 1 - mot n+2), le premier mot (mot 1) représentant toujours un ordre indiquant l'opération à effectuer.

Le message incorpore éventuellement un ou plusieurs mots de données ( mot 2 - mot n+2). Lorsqu'un mot de données est incorporé dans le message, le mot (mot 2) suivant l'ordre (mot 1) représente le nombre de mots de données contenus dans le message. Le bit de poids fort du mot d'ordre indique si le message contient des données à lire.

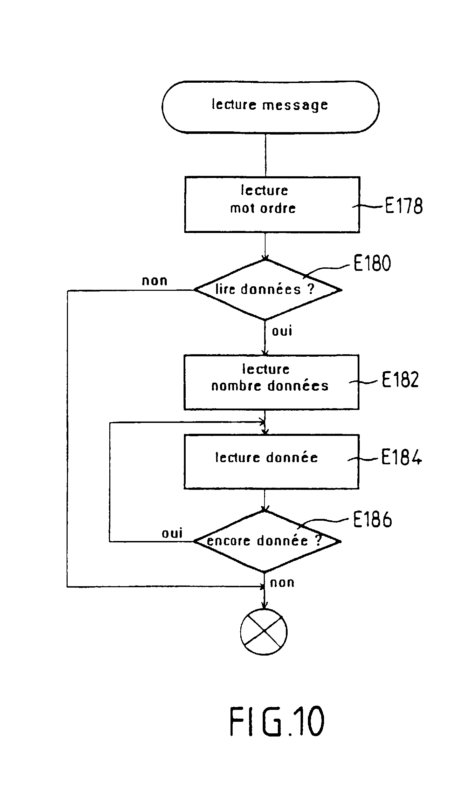

La procédure d'envoi d'un message d'un processeur à un autre sera maintenant expliquée par référence aux organigrammes des figures 9 et 10. Cette procédure comprend une phase d'inscription du message dans le contrôleur de dialogue 134 par le processeur émetteur (figure 9) et la lecture de ce message par le processeur récepteur (figure 10). Comme le montre la figure 9, lorsqu'un processeur doit envoyer un message ou des données à l'autre processeur. il vérifie au préalable par une lecture de l'état de stockage (E170) que sa zone de stockage spécifique au sein du contrôleur de dialogue 134 ne contient pas d'informations n'ayant pas été lues par le processeur destinataire (E172). Si tel est le cas, il écrit le message ou les données dans sa zone de stockage (E174) et indique ensuite au contrôleur de dialogue que celui-ci doit signaler à l'autre processeur qu'un message ou des données sont disponibles dans la zone de stockage. Le contrôleur de dialogue prévient alors le processeur destinataire par l'intermédiaire d'un signal d'interruption (E176) IT application si le destinataire est le processeur entrées/sorties 40, ou d'un signal IT E/S si le destinataire est le processeur application 42 en utilisant les chemins décrits précédemment.

Le processeur destinataire lit les informations contenues dans la zone de stockage puis indique au contrôleur de dialogue 134 que l'opération de lecture est terminée, autorisant ainsi l'envoi d'autres informations.

Comme le montre la figure 10, le processeur récepteur reçoit et lit le mot d'ordre d'interruption et cherche le message dans sa zone de stockage du contrôleur de dialogue 134. Le message est alors analysé selon sa structure décrite par référence à la figure 8A. Cette opération consiste à lire d'abord le mot d'ordre (mot 1) (E178) et ensuite à déterminer si cet ordre est suivi de données (E180). Si tel est le cas, le processeur récepteur lit le mot (mot 2) indiquant le nombre de données (E182) et les mots de données ( mot 3-mot n+2) successivement avec vérification après chaque lecture de l'existence d'une donnée supplémentaire à lire (E186).

De préférence, le niveau d'interruption du contrôleur de dialogue 134 se verra attribuée la plus haute priorité pour chaque processeur, assurant ainsi le service de cette interruption sans attente.

Chaque zone de stockage est uniquement écrite par un processeur et uniquement lue par l'autre processeur. L'écriture peut être effectuée uniquement si la zone de stockage ne contient pas d'informations n'ayant pas été lues par l'autre processeur. De même, la lecture peut être effectuée uniquement si la zone de stockage contient des informations écrites par l'autre processeur.

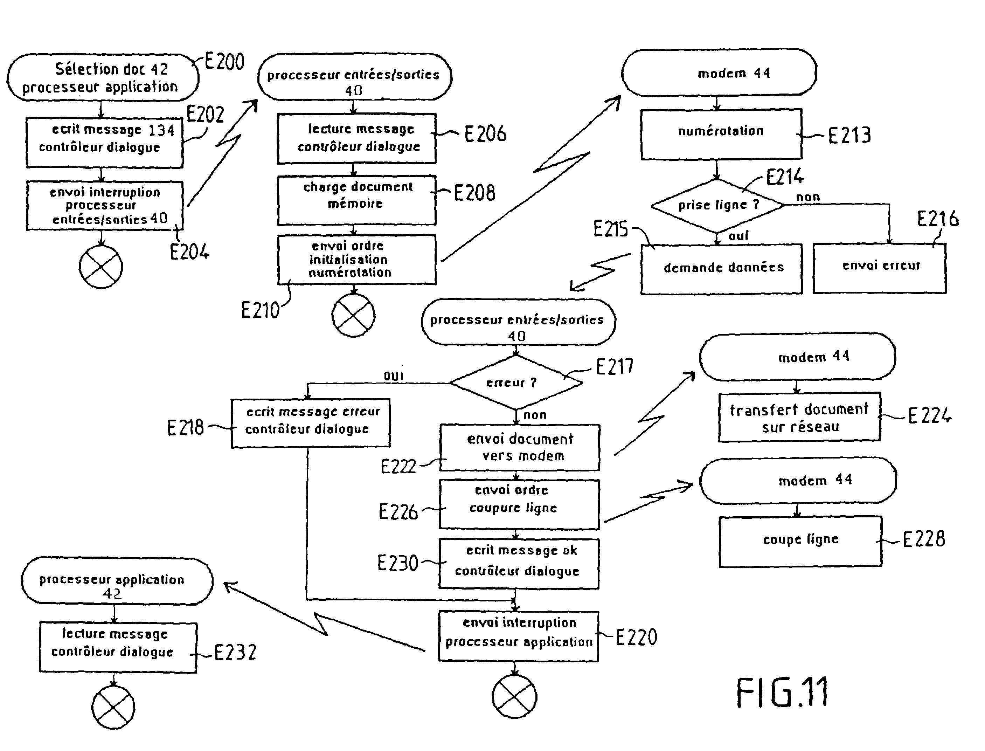

Dans les exemples de fonctionnement du dispositif par report aux figures 11 à 22, il sera entendu que les échanges de données entre les processeurs entrées/sorties 40 et applications 42 au sein d'un même dispositif s'opère selon le protocole décrit par référence aux figure 9 et 10.

### Transfert entre dispositifs de télé-écriture

Le transfert d'informations ou de données entre deux dispositifs de télé-écriture ou plus s'effectue par l'intermédiaire du modem 44 de chacun de ces dispositifs. Chaque transfert d'informations est constitué par un message. Une information est constituée d'un ou de plusieurs mots chacun étant formé par un nombre fixe d'octets. Le premier mot représente toujours un ordre indiquant une opération à effectuer. Ce mot d'ordre peut éventuellement être succédé de mots de données incorporées dans le message. Suivant le type d'ordre, le message peut contenir un nombre variable de mots de données dans lequel cas le message aura une structure semblable à celui représenté à la figure 8A.

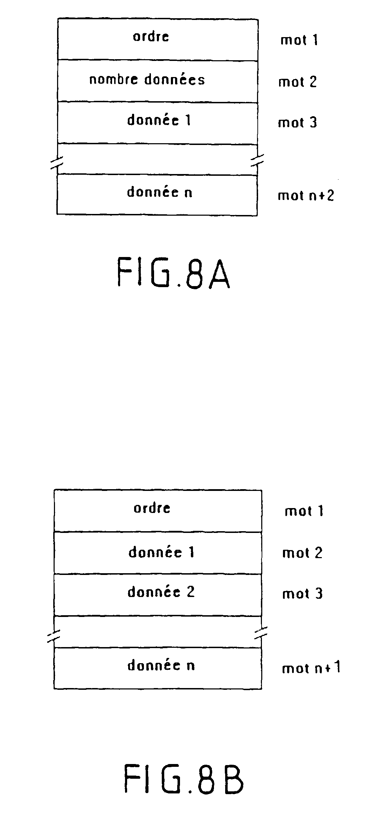

Le message peut également définir implicitement un nombre fixe de données incluses après le mot d'ordre, évitant ainsi l'incorporation d'un mot de nombre de données. La structure correspondant à ce dernier type de message est représentée à la figure 8B.

### Fonction en mode fax ou en mode d'échange d'autres données (mode données)

Le mode fax et le mode données sont des modes dans lesquels le dispositif de télé-écriture transfert ou reçoit des données uniquement sur une ligne externe de téléphone 34 (figure 3) via le modem 44. Dans ce cas, le processeur entrées/sorties 40 effectue la transaction et le transfert ou la réception des données avec le modem utilisant le bus dédié 66.

Les opérations de transfert d'un dispositif de télé-écriture à un dispositif de type fax ou modem ou autre mode de transmission de données (en sens unique) constituant un document enregistré dans une unité de stockage seront maintenant décrites en détail par référence à la figure 11.

Dans le cas de l'envoi d'un document enregistré sur une unité de stockage du dispositif de télé-écriture émetteur, l'utilisateur de ce dispositif sélectionne les informations nécessaires par l'intermédiaire du logiciel d'application fonctionnant sur le processeur applications 42 (E200). Lorsque toutes les informations requises sont saisies, le processeur applications 42 transmet par l'intermédiaire du contrôleur de dialogue 134 au processeur entrées/sorties 40 un message indiquant que celui-ci doit effectuer un envoi de documents (E202). Comme expliqué par référence à la figure 9, ce message est succédé d'une instruction d'interruption du processeur entrées/sorties (E204), signifiant à ce dernier qu'un message doit être lu. Ensuite, le processeur applications sera libre d'effectuer une autre tâche. Dans ce cas, le message est constitué d'un ordre et des données signifiant : le numéro à appeler, la désignation de l'unité de stockage contenant le document et le nom du document.

Le processeur entrées/sorties lit le message (E206), charge en mémoire le document à envoyer (E208) puis envoie un ordre d'initialisation et de numérotation au modem 44 (E210). En réponse, le modem 44 effectue une numérotation pour établir la communication avec le correspondant (E213). Si la prise de ligne est réussie (E214), le modem demandera au processeur entrées/sorties de recevoir les données (E215). En cas d'échec de prise de ligne, le modem émet un message d'erreur notifiant à l'utilisateur que le numéro est momentanément inaccessible (E216-E218), provoquant alors l'interruption de l'envoi (E220) qui sera notifiée au processeur applications 42.

Lorsque la ligne est prise, le processeur entrées/sorties effectue l'envoi du document vers le modem (E222), ce dernier transférant le document sur le réseau téléphonique 134 (E224). A la terminaison de l'envoi du document, le processeur entrées/sorties transmet au modem l'ordre de coupure de ligne (E226) autorisant ce dernier à terminer la communication (E228).

Ensuite, le processeur entrées/sorties écrit un message au contrôleur de dialogue 134 signifiant que la transmission a été réussie (E230) suivie d'un ordre d'interruption au processeur applications (E220) selon la procédure décrite par référence à la figure 9 permettant à ce dernier de lire le message sur le contrôleur de dialogue (E232) selon la procédure décrite par référence à la figure 10.

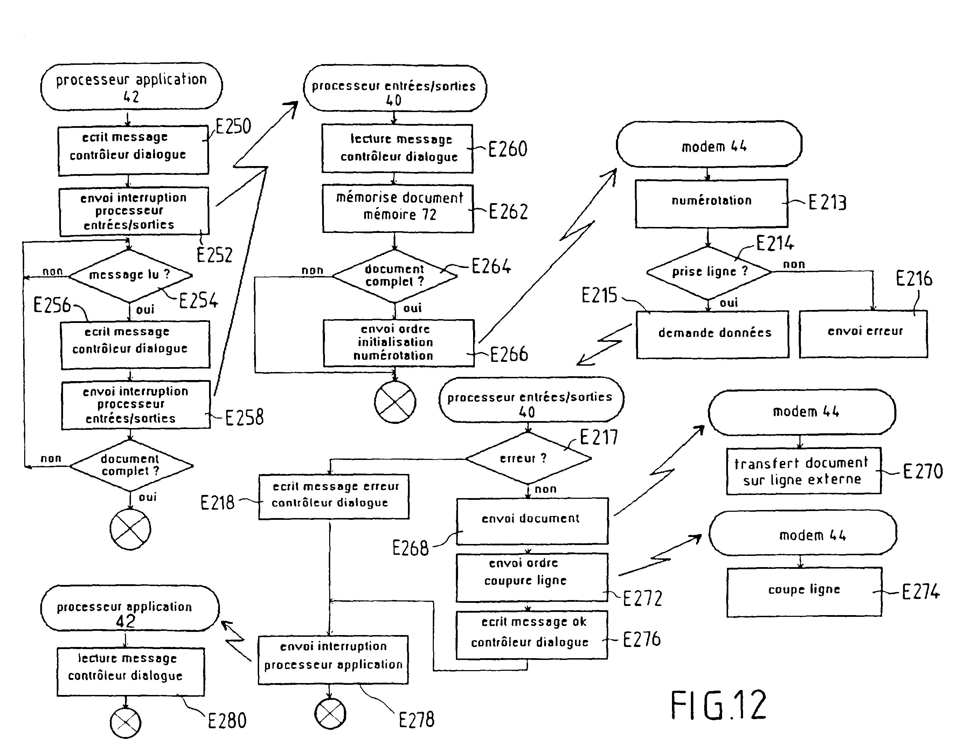

Les opérations de transfert d'un dispositif de télé-écriture à un dispositif de type fax ou modem ou autre mode de transmission de données (en sens unique) constituant un document contenu sur l'écran 12 géré par le processeur applications seront maintenant décrites par référence à la figure 12.

Dans le cas de l'envoi d'un document contenu sur l'écran 12 du dispositif de télé-écriture, après sélection des informations requises, le processeur applications 42 envoie au processeur entrées/sorties 40 selon la procédure décrite par référence à la figure 9 un message indiquant que celui-ci doit effectuer un envoi du document contenu dans le processeur applications (E250-E252).

Ce message est constitué d'un ordre et des données signifiant le numéro à appeler et le bloc de données représentant le document.

Si la taille du document est plus grande que la taille de la zone de stockage du contrôleur de dialogue 134, plusieurs messages sont envoyés vers le processeur entrées/sorties. Dans ce cas, les messages qui suivent sont constitués d'un ordre et du bloc de données représentant la suite du document. Le dernier message de données comporte un ordre indiquant la fin du document.

Après vérification que ce message est lu (E254) par le processeur entrées/sorties conformément à la procédure décrite par référence à la figure 10, le processeur applications envoie les données correspondant à la sélection requise au contrôleur de dialogue (E256) suivi d'un ordre d'interruption du processeur entrées/sorties (E258).

A la réception de cet ordre, le processeur entrées/sorties lit le message dans le contrôleur de dialogue (E260) et en extrait le document ou la partie du document pour l'entrer dans sa mémoire vive 72 (E262).

Si le message correspondant à l'information sélectionnée n'est pas complet, celui-ci étant par exemple trop long pour être contenu intégralement dans l'espace mémoire du contrôleur de dialogue, le processeur applications répète les opérations de chargement de cet espace mémoire (E256, E258) pour que celles-ci soient lues à nouveau par le processeur entrées/sorties (E260, E262). Ces opérations (E256-E262) sont répétées aussi souvent que nécessaire pour charger l'intégralité des informations sélectionnées.

Une fois qu'il est vérifié que le document complet a été transféré au processeur entrées/sorties 40 (E264), celui-ci transmet au modem 44 par le bus dédié 66 l'ordre d'initialisation et de numérotation (E266).

A réception de cet ordre, le modem effectue la numérotation et la prise de ligne, éventuellement avec signification d'erreur en cas d'échec, comme expliqué précédemment par référence à la figure 11 (étapes E216 à E220). Une fois la communication établie (E214), le modem demande des données au processeur entrées/sorties, ce dernier transmettant alors au modem le document par le bus dédié 66 (E268) pour transfert sur la ligne téléphonique externe 34 (E270). A la fin de la transmission du document, le processeur entrées/sorties transmet au modem un ordre de coupure de ligne (E272). Le modem effectue alors une routine de coupure de ligne (E274), et le processeur entrées/sorties écrit alors un message indiquant que le transfert a été effectué avec succès (E276), suivi d'un ordre d'interruption au processeur applications (E278), permettant à ce dernier de lire un message de compte rendu dans le contrôleur de dialogue 134 (E280).

Les étapes terminales de cette opération (E274 à E280) s'effectuent de la même manière que pour les étapes respectives E228 à E240 décrites par référence à la figure 11.

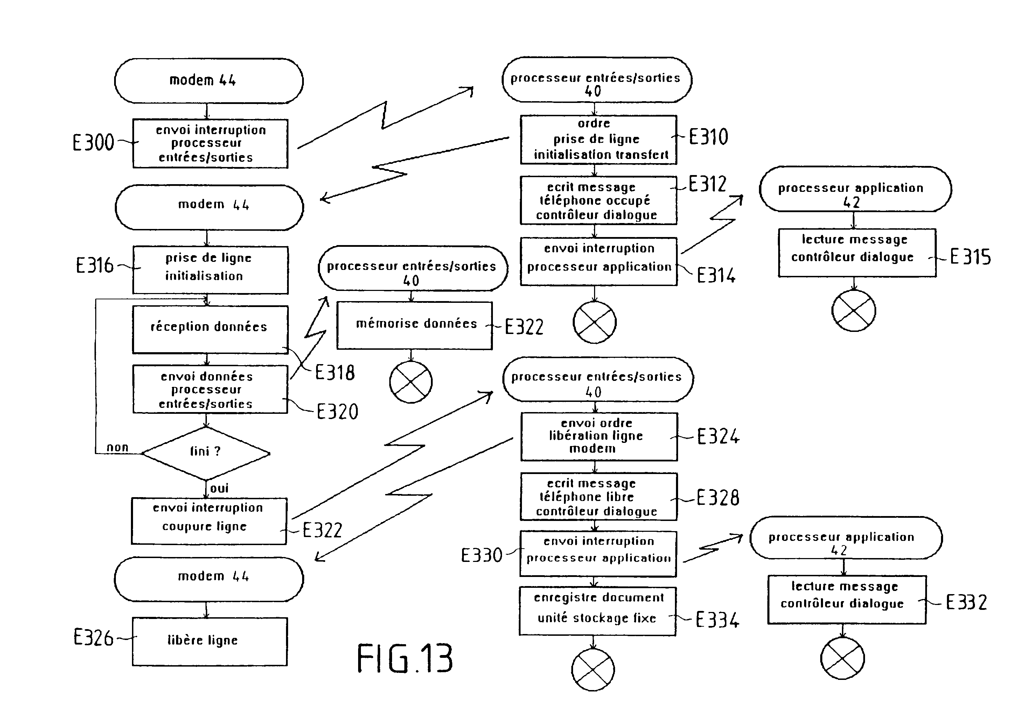

Les opérations de réception par un dispositif de télé-écriture de données constituant un document envoyées à partir d'un dispositif de type fax ou modem seront maintenant décrites par référence à la figure 13. Dans ces figures, le modem 44, le processeur entrées/sorties 40 et le processeur applications 42 appartiennent au dispositif de télé-écriture en réception de données.

Lorsque le modem 44 reçoit un appel d'un autre dispositif de type fax ou modem sur la ligne téléphonique, il envoie un ordre d'interruption au processeur entrées/sorties (E300). En réponse, ce dernier commande au modem de prendre la ligne et d'initialiser le transfert (E310). En même temps, le processeur entrées/sorties écrit un message signalant que le téléphone est occupé (E312) et envoie un ordre d'interruption au processeur applications (E314) permettant à ce dernier de lire ce message à partir du contrôleur de dialogue 134 (E315) (cf. figures 9 et 10).

Après en avoir reçu l'ordre, le modem du dispositif récepteur prend la ligne, effectue l'initialisation (E316) et se met à recevoir les données transférées sur la ligne téléphonique (E318). Ces données sont transférées par le bus dédié 66 vers le processeur entrées/sorties pour y être mémorisées (E320, E322).

A la fin de la transmission des données, le modem envoie au processeur entrées/sorties un ordre de coupure de ligne et d'interruption (E322), ce dernier transmettant en retour l'ordre de libération de ligne (E324) qui sera exécuté par le modem 44 (E326).

Ensuite, le processeur entrées/sorties écrit un message au contrôleur de dialogue signalant que le téléphone est libre (E328), suivi d'un ordre d'interruption du processeur applications (E330), permettant à ce dernier de lire le message contenu dans le contrôleur de dialogue (E332) (cf. figures 9 et 10).

Enfin, le processeur entrées/sorties enregistre le document transféré sur l'unité de stockage fixe 48 (E334).

On remarque que lors de la réception d'un document le processeur applications 42 du dispositif récepteur n'est en aucune façon sollicité, si ce n'est pour être informé de l'état de la ligne externe de téléphone. De ce fait, le déroulement d'une tâche utilisateur, par exemple la saisie ou l'impression d'un document, etc. peut s'effectuer sans discontinuité. Cet avantage est dû à l'architecture spécifique conformément à l'invention basée sur l'utilisation de deux processeurs dédiés respectivement aux tâches d'entrée et de sortie et aux tâches de gestion des applications, ces deux processeurs étant reliés indépendamment au modem 44.

### Fonctionnement du dispositif de télé-écriture en mode interactif

Le dispositif de télé-écriture conformément à la présente invention permet de réaliser une communication interactive vocale et manuscrite (saisie en écriture) entre deux correspondants ou plus. La communication des données est réalisée en duplexe intégral. Ce mode interactif est initialisé par un correspondant après la prise de ligne. Dans la description qui suit, le dispositif de télé-écriture initialisant le mode sera appelé "initiateur", l'autre dispositif de télé-écriture sera appelé "récepteur".

Le mode interactif permet deux fonctionnalités : la création interactive d'un document, et la mise à jour interactive d'un document existant.

Selon la fonctionnalité choisie, l'interaction des processeurs sera différente vis-à-vis de la réception et de l'émission des informations.

### Création interactive document

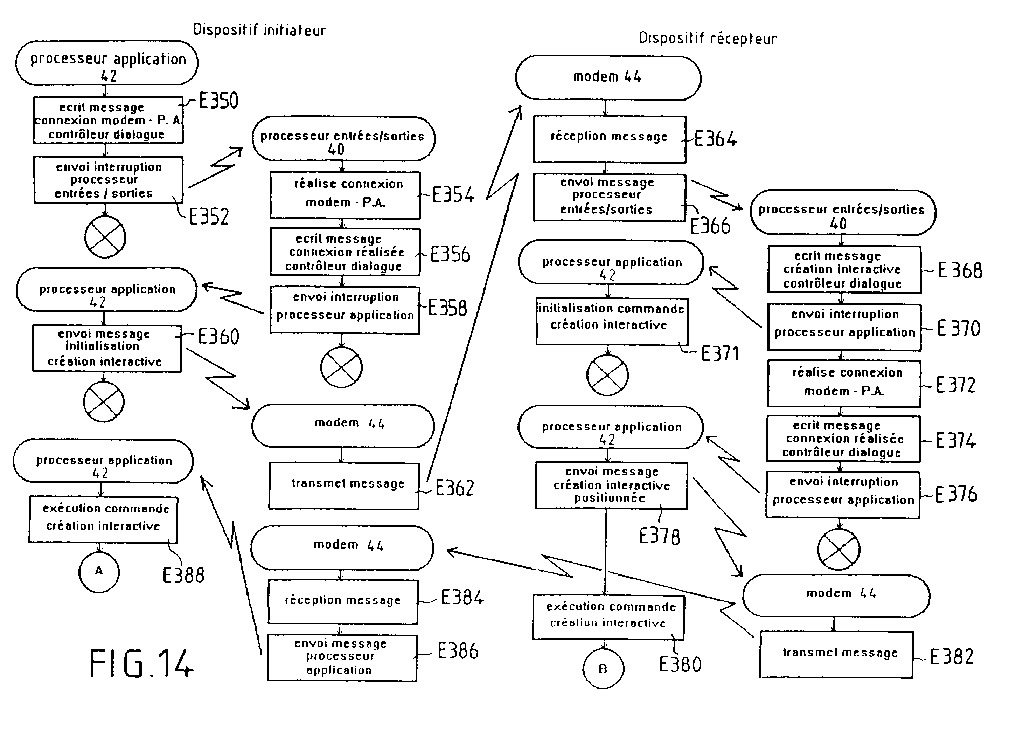

Il sera maintenant présenté les séquences d'opérations dans le cas d'une création interactive de documents par référence aux organigrammes des figures 14, 15 et 16 qui se rapportent respectivement à la phase d'initialisation, la phase de communication interactive et la phase de fin de communication.

Dans la phase d'initialisation (figure 14), le processeur applications 42 d'un dispositif de télé-écriture initiateur transmet au contrôleur de dialogue 134 de son processeur entrées/sorties 40 une demande d'établir et de maintenir une connexion entre le modem 44 et le processeur applications via le bus dédié 68 (E350), suivi d'un ordre d'interruption du processeur entrées/sorties (E352). A la réception de cette demande et de l'ordre d'interruption, le processeur entrées/sorties réalise la connexion entre le modem 44 et le processeur applications via le bus dédié 68 (E354). Il transmet ensuite au contrôleur de dialogue 134 le message signifiant que la connexion a été ouverte (E356) suivie d'un ordre d'interruption au processeur applications (E358).

Une fois la connexion établie, le processeur applications envoie au modem un message d'initialisation de la création interactive afin que ce dernier le transmette au modem 44 du dispositif de télé-écriture récepteur (E360, E362).

Ce dernier reçoit le message d'initialisation de création interactive (E364). A sa réception, le message est transmis au processeur entrées/sorties 40 du récepteur (E366) qui le relaye au processeur applications du dispositif récepteur 42 (E368, E370) afin de permettre à ce dernier d'initialiser la commande de création interactive (E371).

Ensuite, le processeur entrées/sorties du dispositif récepteur réalise la connexion entre le modem et le processeur applications par le bus dédié 68 (E372), et transmet au contrôleur de dialogue 134 un message indiquant que la connexion est réalisée (E374, E376)).

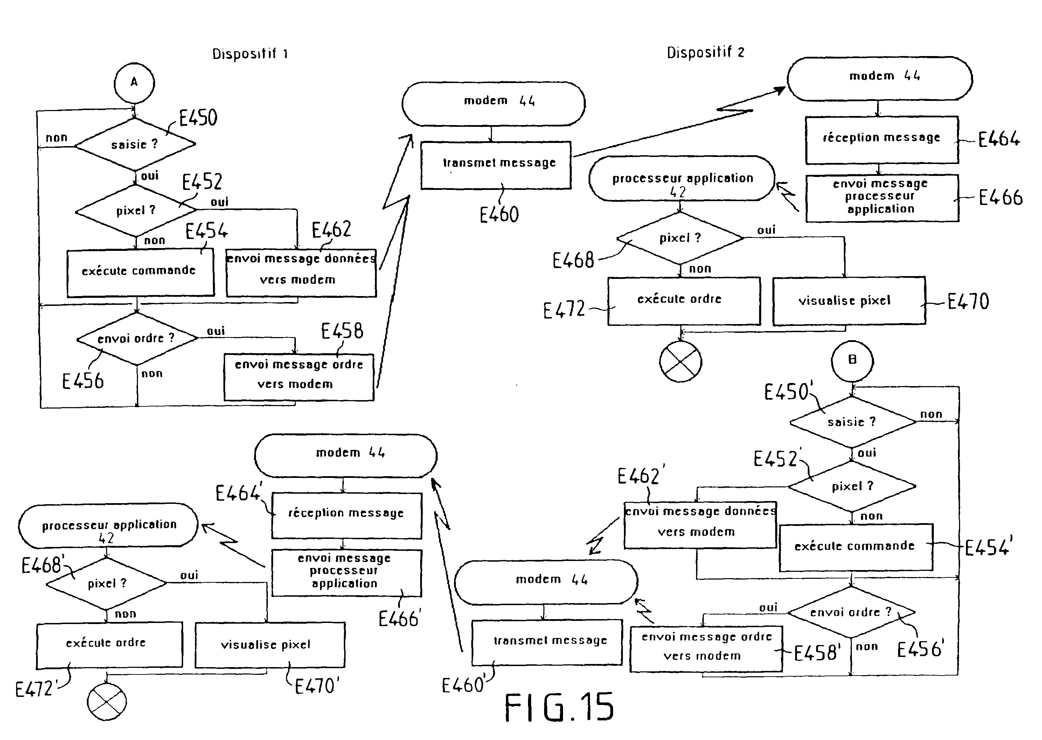

Le processeur applications du dispositif récepteur envoie alors au modem 44 du récepteur un message indiquant que la création interactive est positionnée (E378). Ensuite, le processeur applications du dispositif récepteur se met en mode d'exécution de commande de création interactive (E380), en exécutant une séquence d'opérations interactives avec le dispositif de télé-écriture initiateur qui sera décrit par référence à la branche B de l'organigramme de la figure 15.

Le message de positionnement de création interactive est transmis par le modem du dispositif récepteur (E382) au modem du dispositif initiateur qui, après réception (E384), le transmet au processeur applications du dispositif initiateur (E386). A la réception de ce message, le processeur applications se met en mode d'exécution des commandes de création interactives (E388) en exécutant une séquence d'opérations interactives qui seront décrites par référence à la branche A de l'organigramme de la figure 15.

Après l'établissement de la phase d'initialisation entre les dispositifs de téléécriture, ces derniers peuvent engager la phase de communication interactive.

Dans cette phase, chaque passage du stylet 26 sur l'écran tactile 12 dans la zone d'écriture aura pour effet d'afficher une série de pixels correspondant au tracé effectué sur ce même écran tactile et d'envoyer par la ligne téléphonique 34 la valeur et l'adresse de cette série de pixels au correspondant pour l'affichage du tracé en temps réel sur son écran. Cet échange peut s'effectuer dans les deux sens en temps réel. De même, chaque passage du stylet sur l'écran tactile dans la zone de commande 28A ou sur la zone d'état 28B (figure 2) aura pour effet de faire exécuter la sous-commande sélectionnée.

Après détection du stylet dans la zone d'écriture, le processeur applications 42 associé à l'écran tactile 12 affichera la série de pixels pour visualisation sur ce dernier et enverra vers son modem 44, par le bus dédié 68, un message contenant les adresses et les valeurs des pixels constituant le tracé. Ce modem 44 transmettra ensuite ce message vers le correspondant.

Lorsque le stylet est utilisé pour valider des commandes ou des états, le processeur applications exécute la sous-commande correspondante puis, suivant les cas, transmettra vers son modem 44 par le bus dédié 68 un message d'exécution de cette commande. Le modem transmettra ensuite ce message vers le correspondant.

Au niveau du dispositif de télé-écriture récepteur, le modem 44 recevra le message et le transmettra vers le processeur applications 42 du récepteur directement par son bus dédié 68. Après réception du message, le processeur applications exécutera l'ordre contenu dans le message.

Les commandes de création interactives de documents mettent en oeuvre plusieurs sous-commandes qui permettent la gestion du document en cours de réalisation, comme par exemple : effacement de zone, changement de couleur. etc. Certaines commandes ont pour effet d'envoyer au correspondant un ordre d'exécution de commande précisant la nature à effectuer.

Un exemple de communication en phase interactive entre deux dispositifs de télé-écriture sera maintenant décrit par référence à la figure 15.

Dans ce qui suit, la communication est effectuée par deux dispositifs désignés dispositif 1 et dispositif 2, qui fonctionnent tant en transmission qu'en réception selon les phases de déroulement du procédé d'échange.

On considérera le cas d'une communication où le dispositif 1 transmet une séquence de pixels correspondant à une saisie en écriture sur ce dernier vers le dispositif 2 pour affichage sur son écran de visualisation. Après la phase d'initialisation, le dispositif 1 (qui se trouve être dans l'exemple le dispositif initiateur) entame la séquence d'envoi de données (branche A). A chaque détection d'un point de coordonnées désigné par le stylet 26 sur l'écran interactif 12 (E450), le processeur applications détermine s'il s'agit d'une désignation sur l'écran de saisie ou bien sur l'une des zones de commande ou d'état 28A, 28B (E452). Dans ce dernier cas, il exécute la commande correspondante (E454). Il détecte alors s'il s'agit d'un ordre à transmettre (E456) et, dans l'affirmatif, l'envoi au modem 44 par le bus dédié 68 (E458). Ce modem le retransmet alors au modem du dispositif 2 du correspondant (E460).

Si le stylet 26 effectue un tracé sur la surface d'écriture, les pixels correspondants sont détectés sous forme d'une séquence de coordonnées pouvant constituer un message de données. Ce message sera transmis vers le modem 44 (E462), également par le bus dédié 68, pour transmission au dispositif 2 du correspondant (E460).

A la réception, le modem 44 du dispositif 2 réceptionne le message (E464) et le transmet directement au processeur applications 42 via le bus dédié 68 (E466).

Le processeur applications détermine alors si le message concerne des données de pixels (E468). Dans l'affirmatif, il effectue les opérations permettant la visualisation de la série de pixels afin de reproduire le tracé sur son écran (E470). Dans le cas contraire, le processeur applications détermine qu'il s'agit d'un ordre et l'exécute (E472).

Le dispositif 2 peut, à tout moment, transmettre des données de saisie en écriture suivant exactement le même protocole. Il est alors possible à l'un des dispositifs communicants de transmettre des tracés vers un autre dispositif alors même que ce dernier transmet d'autres tracés vers sont correspondant. La communication en saisie en écriture est alors totalement interactive et se déroule en temps réel (à l'échelle de la perception humaine).

Le cas de la transmission de données en saisie en écriture par le dispositif 2 vers le dispositif 1 est représentée à la partie inférieure de l'organigramme de la figure 15, commençant par la branche B de fin de la phase d'initialisation pour le dispositif 2. Ces opérations étant parfaitement symétriques vis-à-vis des opérations décrites précédemment pour la transmission depuis le dispositif 1 vers le dispositif 2, elles ne seront pas expliquées à nouveau par souci de concision. Les étapes correspondantes sont repérées par les mêmes références accompagnées du symbole "'".

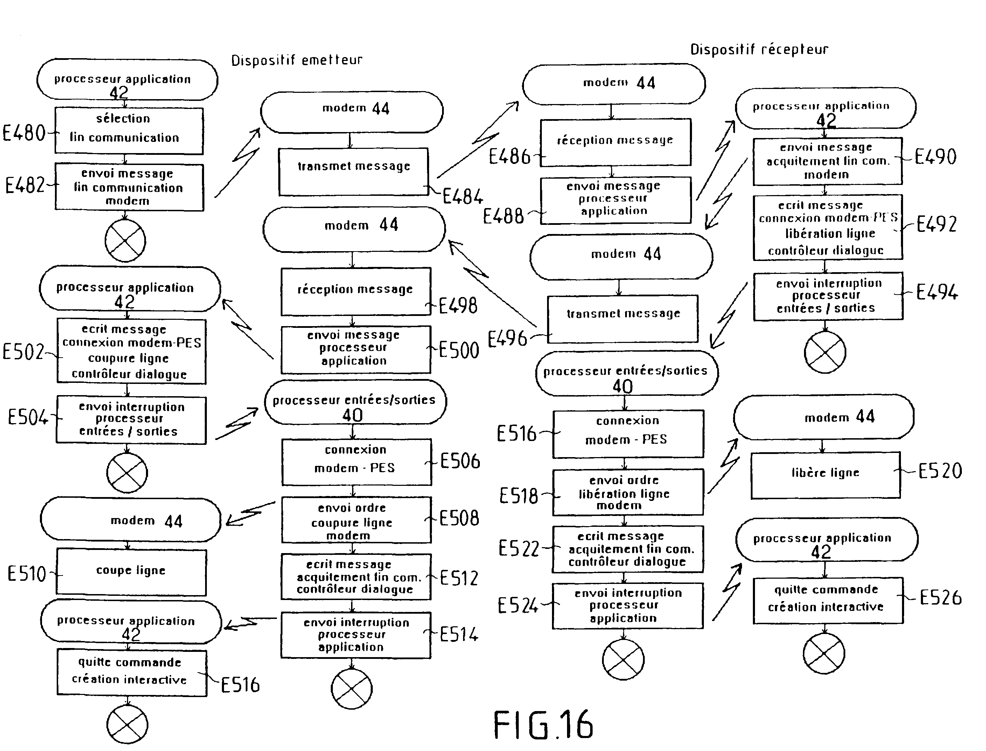

La phase de fin de communication sera maintenant décrite par référence à la figure 16.

Dans ce qui suit, on désignera le dispositif signalant la fin de la communication interactive le dispositif émetteur, et le dispositif recevant l'ordre de fin de communication interactive le dispositif récepteur.

Après sélection de la commande de fin de communication entrée par le stylet 26 sur l'écran interactif 12 du dispositif émetteur (E480), le processeur applications 42 de celui-ci envoie un message de fin de communication au modem 44 par le bus 68 (E482), lequel transmet le message au modem 44 du dispositif récepteur (E484). Ce dernier réceptionne le message (E486) et le transmet au processeur applications du dispositif récepteur (E488). En réponse, le processeur applications retourne au modem 44 du dispositif récepteur un message d'acquittement de fin de communication (E490) et écrit dans le contrôleur dialogue un message requérant la connexion entre le modem et le processeur entrées/sorties sur le bus dédié 66 et la libération de la ligne (E492), ce message étant signalé par l'envoi d'un ordre d'interruption au processeur entrées/sorties (E494).

En parallèle, le modem 44 du dispositif récepteur transmet au dispositif émetteur le message d'acquittement reçu du processeur applications (E496). Après réception de ce message (E498), le modem du dispositif émetteur le transmet au processeur applications par le bus dédié 68 (E500). En réponse, le processeur applications écrit un message au contrôleur de dialogue 134 requérant la connexion entre le modem et le processeur entrées/sorties du dispositif émetteur par le bus dédié 66 et la coupure de la ligne au contrôleur de dialogue 96 (E502), ce message étant suivi de l'envoi d'un ordre d'interruption du processeur entrées/sorties (E504).

A la réception de ce message, le processeur entrées/sorties du dispositif émetteur établit la connexion directe entre celui-ci et le modem 44 (E506) et envoie l'ordre de coupure de ligne au modem via le bus dédié 66 (E508). En même temps que cet ordre est exécuté par le modem (E510), le processeur entrées/sorties du dispositif émetteur écrit un message d'acquittement de fin de communication au contrôleur de dialogue 134 (E512) suivi de l'envoi d'un ordre d'interruption au processeur applications (E514). En réponse, le processeur applications quitte la commande de création interactive et retourne au mode d'attente d'une sélection de commande (E516).

Au niveau du dispositif récepteur, l'envoi de la commande de libération de ligne (E492, E494) transmise au processeur entrées/sorties fait établir par ce dernier la connexion entre le modem 44 et le processeur entrées/sorties du dispositif récepteur sur le bus dédié 66 (E516). Le processeur entrées/sorties envoie alors l'ordre de libération de ligne au modem (E518) en réponse auquel ce dernier libère la ligne (E520).

Le processeur entrées/sorties du dispositif récepteur écrit alors un message d'acquittement de fin de communication au contrôleur de dialogue 134 suivi d'un ordre d'interruption du processeur applications (E522, E524) en réponse auquel le processeur applications quitte la commande de création interactive (E526).

### Mise à jour interactive d'un document

Cette fonction permet à deux correspondants ou plus de mettre à jour un document d'une façon interactive. Le document initial est contenu dans le dispositif de télé-écriture désigné dispositif initiateur. Il peut comprendre une ou plusieurs pages successives formées de textes et/ou de graphismes. La page du document visualisée sur l'écran 12 du dispositif initiateur sera appelée page active.

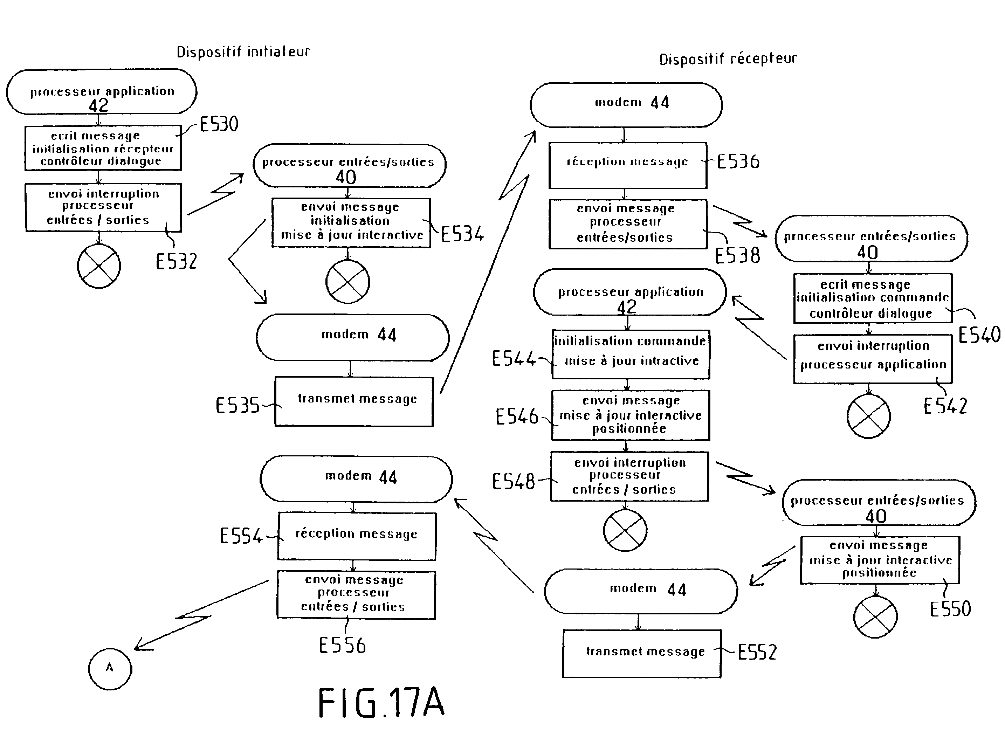

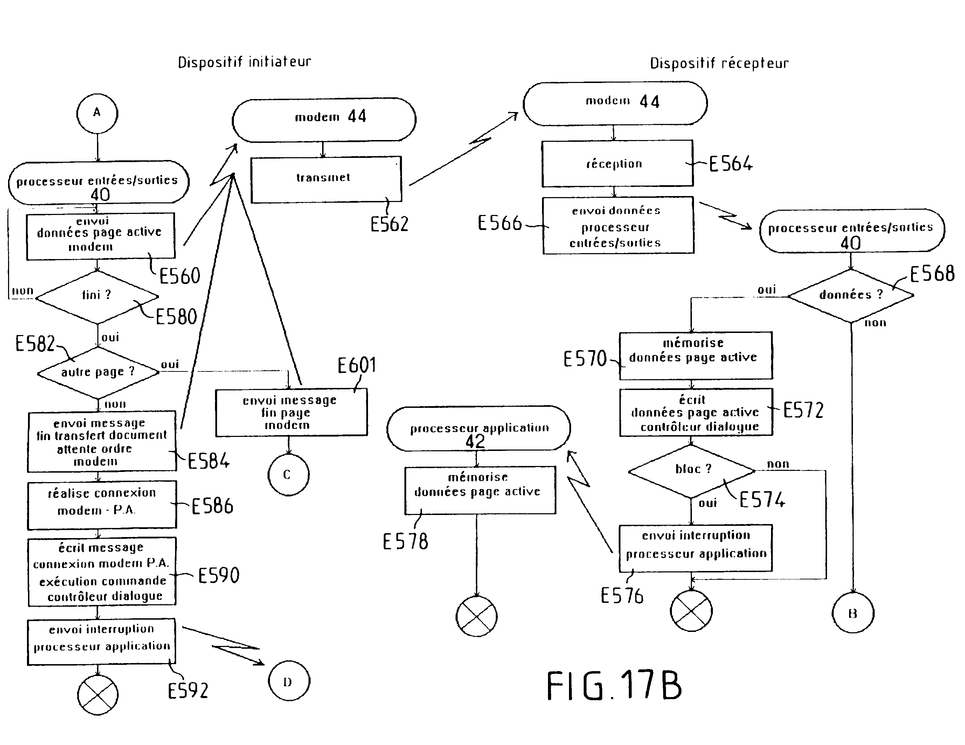

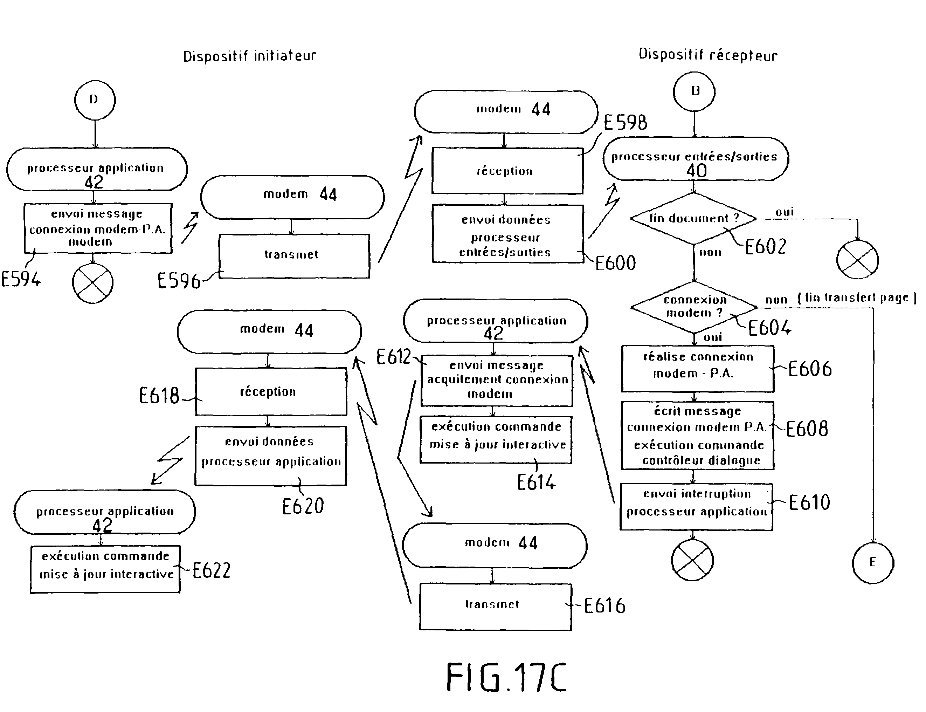

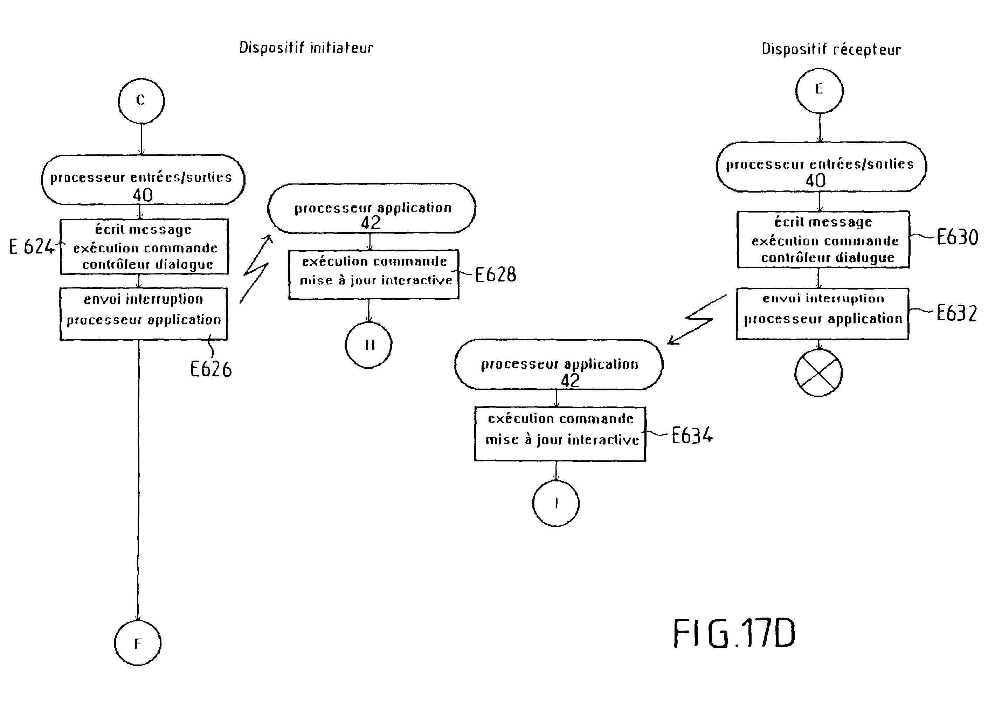

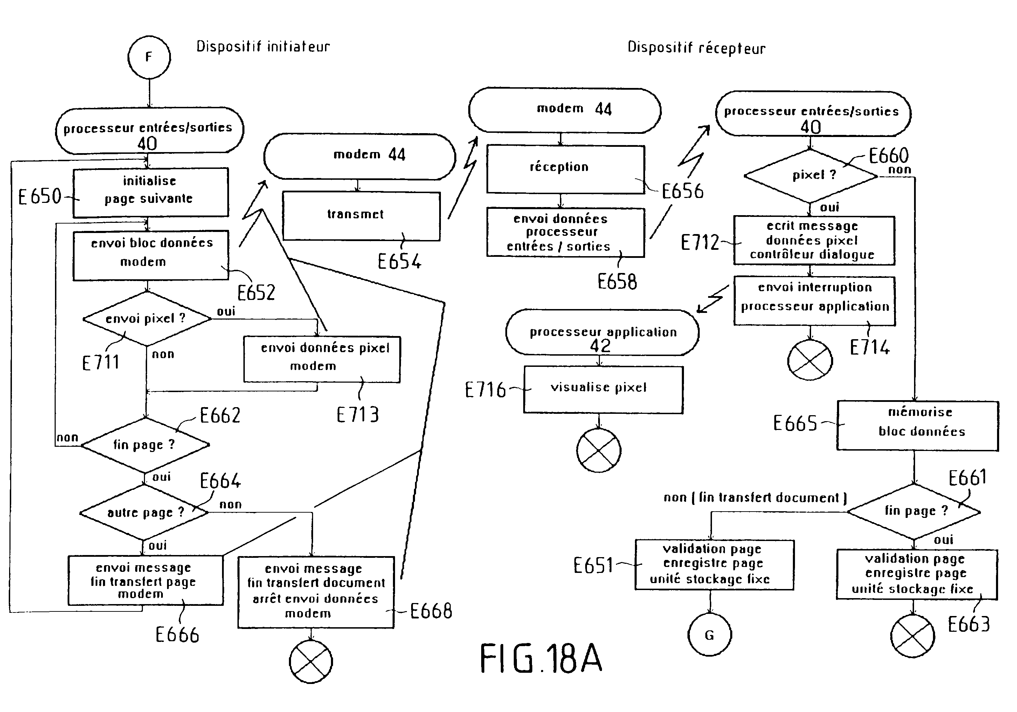

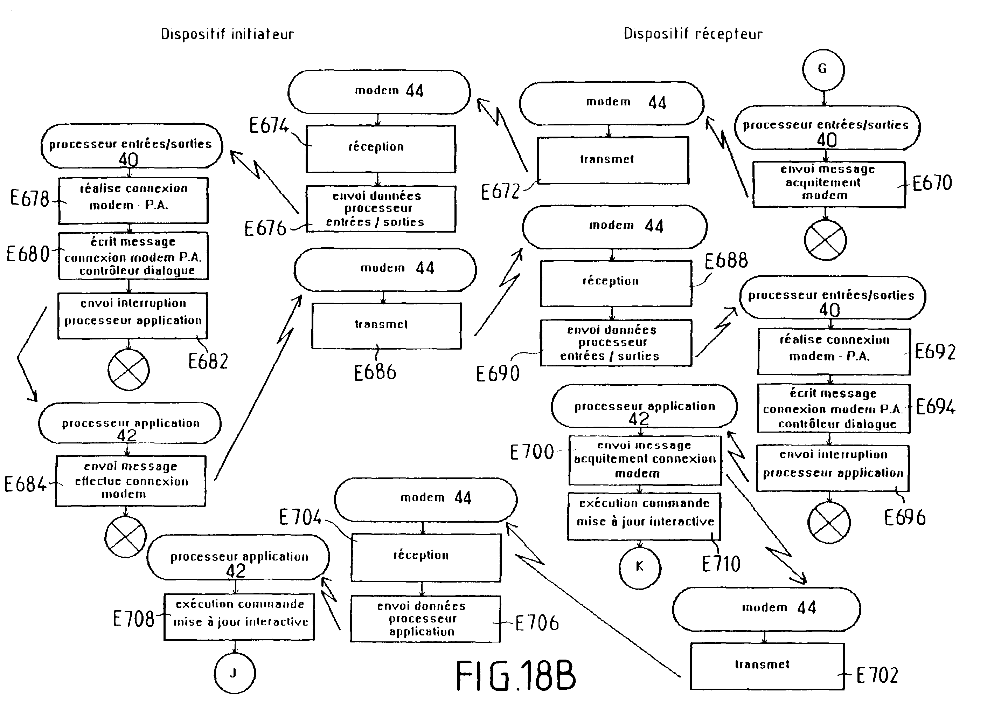

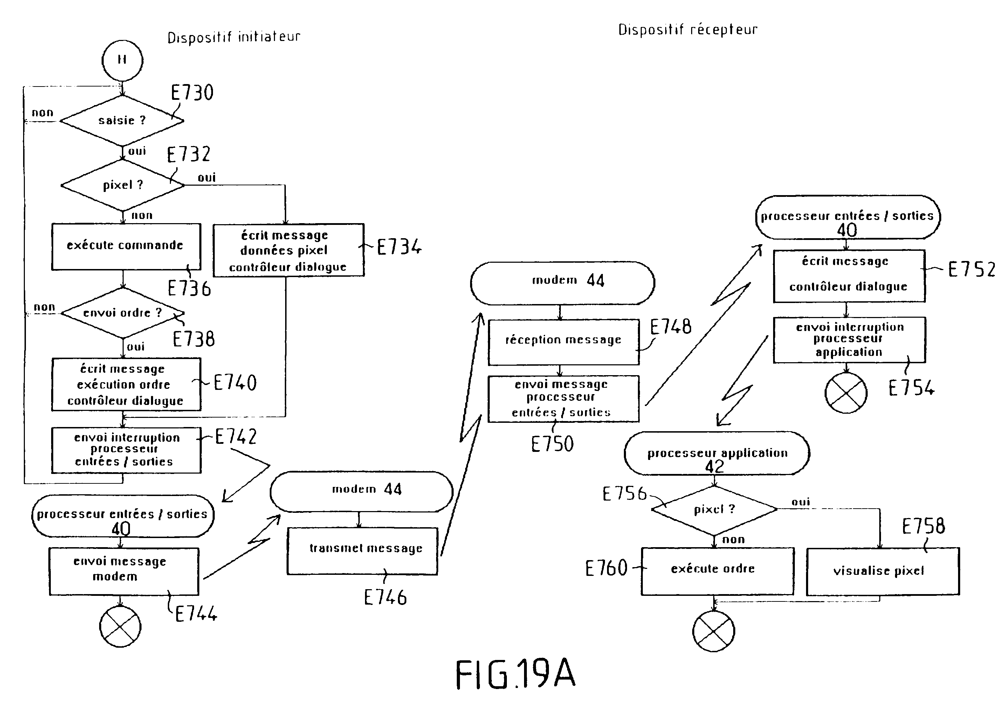

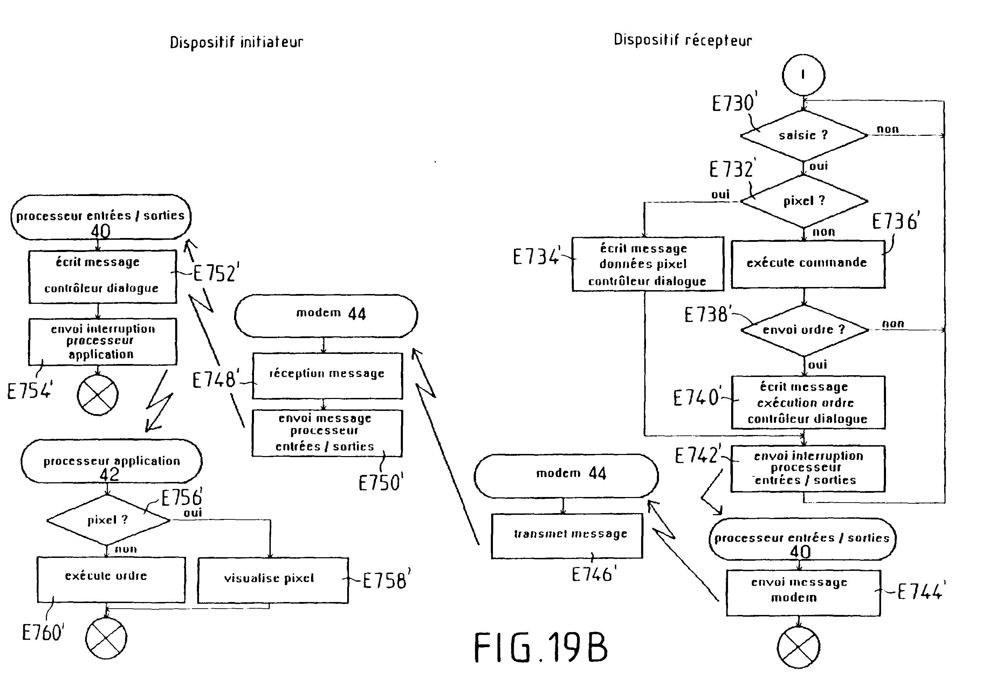

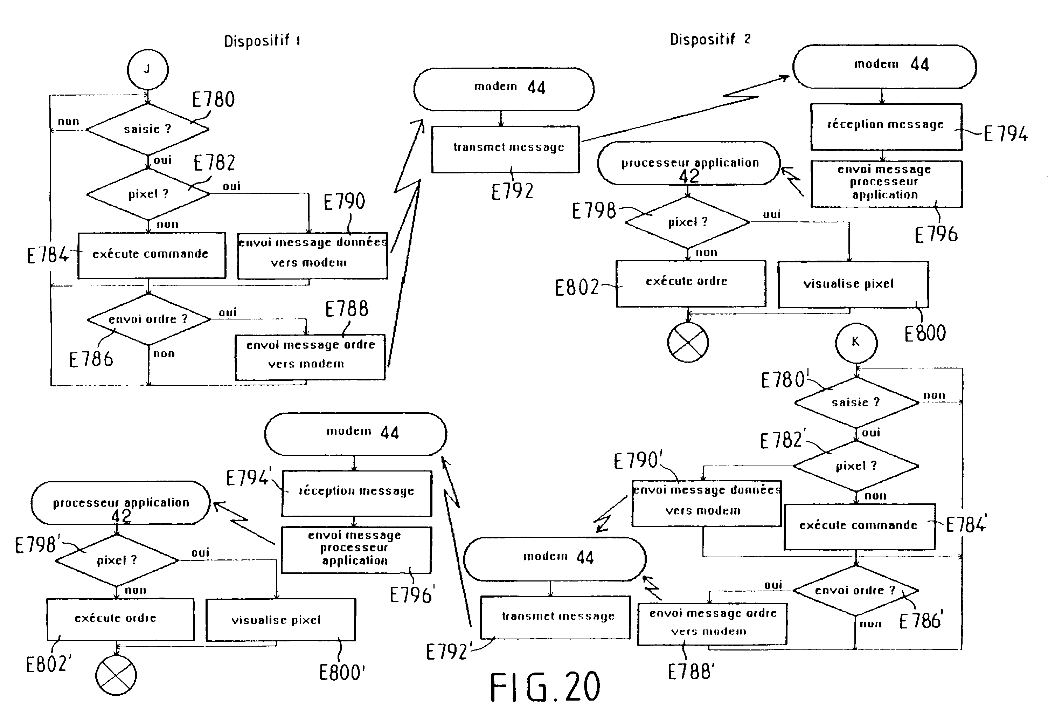

Cette fonction comporte une phase d'initialisation (figures 17A, 17B, 17C, 17D), une phase de communication interactive (figures 18A, 18B et 19) et une phase de fin de communication (figure 20).

La phase d'initialisation sera maintenant décrite par référence à la figure 17A.

A l'initialisation du mode de mise à jour interactive d'un document, le processeur applications 42 du dispositif initiateur transmet au processeur entrées/sorties de celui-ci un message requérant l'initialisation via le contrôleur de dialogue 134 suivi d'un ordre d'interruption du processeur entrées/sorties (E530, E532).

A la réception de ce message, le processeur entrées/sorties envoie au modem 44 un message d'initialisation et de mise à jour interactive (E534) pour que ce dernier le transmette au modem du dispositif récepteur (E535).

Le modem du dispositif récepteur reçoit le message (E536) et l'envoie au processeur entrées/sorties du dispositif récepteur par le bus dédié 66 (E538). Le processeur entrées/sorties écrit alors un message d'initialisation de commande au contrôleur de dialogue (E540) suivi d'un ordre d'interruption du processeur d'application (E540,E542) permettant à ce dernier de lire le message et d'effectuer l'initialisation de la commande de mise à jour interactive (E544).

Une fois que ce message de mise à jour interactive est positionné, cet état est signalé au processeur entrées/sorties par l'envoi d'une interruption de ce dernier (E546, E548). Le processeur entrées/sorties envoie alors au modem 44 le message signalant que la mise à jour interactive a été positionnée au niveau du dispositif de télé-écriture récepteur (E550), ce message étant transmis au modem du dispositif initiateur (E552). Une fois reçu par le dispositif initiateur, (E554) ce message est envoyé au processeur entrées/sorties de ce dispositif (E556).

La procédure d'initialisation continue alors par le transfert de données constituant le document à mettre à jour du dispositif initiateur au dispositif récepteur (branche A). Dans l'exemple, la page active étant affichée sur l'écran de visualisation du dispositif initiateur.

Le processus de transfert d'une ou de plusieurs pages de données sera maintenant décrit par référence à la figure 17B.

Une fois que le message indiquant que la mise à jour interactive a été positionnée au niveau du dispositif récepteur (E550) et a été retransmis au processeur entrées/sorties du dispositif initiateur (E556) (figure 17A), le processeur entrées/sorties du dispositif initiateur commence l'envoi des données de la page active vers le modem 44 via le bus dédié 66 (E560). Celles-ci sont d'abord transmises au modem du dispositif initiateur (562) d'où elles sont envoyées au modem du dispositif récepteur. Ce dernier les réceptionne (E564) et les transmet au processeur entrées/sorties (E566). Le processeur entrées/sorties détecte la présence des données (E568), et lorsqu'ils sont présents, les mémorise en tant que données de page active (E570). Ces données sont écrites dans le contrôleur de dialogue 134 (E572) pour qu'elles soient reprises par le processeur applications. Les données de page active sont accumulées dans le contrôleur de dialogue en unités de bloc de taille appropriée (E574) avant que leur présence soit signalée au processeur applications par l'envoi d'un ordre d'interruption à ce dernier (E576). Les données reçues par le processeur applications sont mémorisées (E578) dans la mémoire vive 114 de ce dernier (figure 6).

Lorsque le processeur entrées/sorties du dispositif initiateur détecte la fin de l'envoi des données de la page active vers le modem (E580), il détermine si oui ou non une autre page doit être transmise (E582).

Si le document ne possède qu'une seule page, c'est-à-dire seulement la page active, le processeur entrées/sorties envoie à son modem un message de fin de transfert de document et d'attente d'ordre (E584) pour transmission, via les modems au processeur entrées/sorties du dispositif récepteur. Cette commande d'attente d'ordre a pour effet de signifier au dispositif récepteur qu'il doit attendre un message pour valider l'exécution de la commande de mise à jour interactive du document.

Ensuite, le processeur entrées/sorties du dispositif initiateur réalise la connexion du modem vers le processeur applications via le bus dédié 68 (E586). Après la connexion du modem, le processeur entrées/sorties envoie au processeur applications, par le bus bidirectionnel 64 les reliant directement, un message indiquant la connexion du modem et l'exécution de commande interactive du document (E590), cette demande étant signalée par l'envoi d'ordre d'interruption du processeur applications (E592). Après réception du message, suivant la branche D de l'organigramme de la figure 17C, le processeur applications envoie au récepteur, via les modems, un message lui indiquant de procéder à la connexion de son modem vers son processeur applications (E594 à E596, figure 17C). Le processeur applications du dispositif initiateur est ensuite en attente d'un message d'acquittement de connexion modem/processeur applications du dispositif récepteur.

Si le document possède plusieurs pages (E582) (cf. figure 17B), le processeur entrées/sorties envoi à son modem un message de fin de transfert page (E601), qui sera envoyé au dispositif récepteur, via son modem (E562, E564). Ce message a pour effet d'indiquer au dispositif récepteur la fin du transfert de la page active et qu'une ou plusieurs autres pages seront transférées, mais qu'il peut effectuer la commande mise à jour interactive document sur la page active sans attendre la réception de la ou des autres pages du document. Ensuite, le processeur entrées/sorties du dispositif initiateur envoie au processeur applications, par le bus bidirectionnel 64 les reliant directement, un message indiquant l'exécution de commande interactive document sur la page active (E624), suivant la branche C de l'organigramme de la figure 17D, cette demande étant signalée par l'envoi d'ordre d'interruption du processeur applications (E626). Après l'envoi du message d'exécution de commande interactive document, le processeur entrées/sorties garde la connexion du modem afin de procéder à l'envoi de la ou des autres pages suivantes pendant la phase de communication interactive document, qui sera décrite plus bas, et suivant la branche F de l'organigramme 18A. Après réception du message. le processeur applications exécute la commande interactive document (E628), laquelle sera explicitée plus bas, et suivant la branche H de l'organigramme 19A.

Après le transfert de la page active, le processeur entrées/sorties du dispositif récepteur effectue différentes actions suivant la réception du message :
i) - Lorsque le processeur entrées/sorties du dispositif récepteur détecte le message de fin de transfert du document et d'attente d'ordre (E602), il attend l'ordre de connexion de son modem vers le processeur applications via le bus spécifique 68 (E604). Après réception de l'ordre de connexion, le processeur entrées/sorties réalise la connexion du modem vers le processeur applications. Le flux de données est alors maintenu entre le modem et le processeur applications sur le bus 68 (E606). Après la connexion du modem, le processeur entrées/sorties envoie au processeur applications un message indiquant la connexion du modem et l'exécution de la commande interactive de document, (E608), ceci étant signifié au processeur applications par l'envoi d'un ordre d'interruption de ce dernier (E610).
   A la réception de ce message, le processeur applications envoie, par l'intermédiaire du modem, à l'initiateur un message d'acquittement de connexion (E612) et exécute la commande de mise à jour interactive du document (E614). Le modem du dispositif récepteur transmet le message d'acquittement de connexion de modem vers le modem du dispositif initiateur (E616), lequel le reçoit (E618) et le transmet au processeur d'application (E620). Ce dernier exécute alors la commande de mise à jour interactive (E622).
ii) - Lorsque le processeur entrées/sorties du dispositif récepteur détecte le message de fin transfert page (E604), et suivant la branche E de la figure 17D, il écrit un message d'exécution de commande interactive document au contrôleur de dialogue 134 (E630) suivi d'un ordre d'interruption du processeur applications (E632). Après réception du message, le processeur applications exécute la commande interactive document (E634), laquelle sera explicitée plus bas, et suivant la branche I de l'organigramme 19B. Le processeur entrées/sorties garde la connexion du modem afin de recevoir la ou les pages suivantes pendant l'exécution de la commande interactive document.

### Phase de communication interactive

Pendant la phase de communication interactive faisant intervenir l'échange de saisie en écriture entre les écrans tactiles et un transfert de données de page, le processeur entrées/sorties du dispositif initiateur garde la connexion du modem par son bus dédié 66 si le document n'a pas été complètement envoyé. De même le processeur entrées/sorties du dispositif récepteur garde la connexion du modem par son bus dédié 66. Cette disposition permet d'envoyer au dispositif récepteur les pages restantes. Dans ce cas, les données des pages seront entrelacées avec les données des pixels à visualiser à partir des tracés de saisie en écriture du dispositif initiateur. De façon à ne pas pénaliser le transfert des pixels de saisie en écriture, le temps maximum du transfert d'un bloc de données de page sera égal au temps entre deux acquisitions de pixels moins le temps de transfert des données de pixels vers le correspondant.

Ce procédé de transfert des pages restantes permet d'employer le temps inutilisé entre deux acquisitions de pixels. Le processeur applications de chacun des dispositifs en communication se trouve ainsi déchargé de cette tâche de transfert, celle-ci étant effectuée intégralement par le processeur entrées/sorties. Le processeur applications peut ainsi exécuter d'autres sous-commandes inhérentes à l'application fonctionnelle de mise à jour interactive d'un document, ou s'occuper d'autres tâches liées à ces organes sous contrôle.

Cette phase de communication interactive sera maintenant décrite par référence aux figures 18A et 18B qui montrent l'activité des processeurs entrées/sorties de chaque dispositif. Pendant cette phase, chaque processeur applications des dispositifs peut envoyer des pixels relatifs à un tracé de saisie en écriture à visualiser sur l'écran du dispositif récepteur. La figure 18A montre l'entrelacement des données pixels et des données de pages restantes du document du processeur entrées/sorties de l'initiateur. L'envoi des pixels à visualiser du dispositif récepteur est montré à la figure 19B et décrit plus bas.

Cette communication interactive commence par la branche F de la figure 17D vers la figure 18A, après les étapes de transfert du message d'exécution de commande du processeur entrées/sorties au processeur applications (E624, E626).

Le processeur entrées/sorties du dispositif initiateur charge en sa mémoire vive 72 la page suivante à transférer (E650) puis envoie les blocs de données de cette page vers le modem (E652) qui les transmet au modem du dispositif récepteur (E654). Ce dernier les réceptionne (E656) et les envoie au processeur entrées/sorties (E658). Le processeur entrées/sorties du dispositif récepteur détermine si les données correspondent à des pixels de tracé en écriture ou à des blocs de données (E660). S'agissant de blocs de données de page, ceux-ci seront mémorisés au fur et à mesure de leur réception (E665).

Lorsque le processeur entrées/sorties du dispositif initiateur détecte la fin de la page à transmettre (E662), il détermine si une autre page est à transférer (E664). Si une autre page est à transférer, le processeur entrées/sorties envoie un message de fin de transfert de page vers le modem (E666), lequel le transmet au modem du dispositif récepteur (E654). Puis, il initialise le transfert de la page suivante (E650) et procède à l'envoi des données au dispositif récepteur (E652 - E658). Après réception du message de fin de transfert de page (E661), le processeur entrées/sorties du dispositif récepteur valide la page reçue et l'enregistre sur son unité de stockage fixe (E663).

Si plus aucune page n'est à transférer, le processeur entrées/sorties du dispositif initiateur envoie, par l'intermédiaire du modem, un message de fin de transfert de documents et d'arrêt d'envoi de données au processeur entrées/sorties du dispositif récepteur (E668, E654-E658). Le message fin de transfert a pour effet de signifier au processeur entrées/sorties du dispositif récepteur que le ou les blocs de données page reçus forment la dernière page du document et l'arrêt de l'envoi de données a pour effet de signifier de ne plus envoyer de données pixels afin d'assurer la connexion du modem vers le processeur applications de manière constante. Le processeur entrées/sorties du dispositif initiateur est alors en attente de l'acquittement du récepteur. Le procédé continue alors suivant la branche G de l'organigramme à la figure 18B.

Après réception du message de fin de transfert de document et d'arrêt d'envoi de données, le processeur entrées/sorties du dispositif récepteur valide la page reçue, l'enregistre sur son unité de stockage fixe (E651) puis envoie un message d'acquittement (E670) vers son modem, lequel le transmet au modem du dispositif initiateur (E672) qui, après réception (E674) l'envoie au processeur entrées/sorties du dispositif initiateur (E676). Le processeur entrées/sorties du dispositif initiateur réalise alors la connexion du modem vers le processeur applications par le bus dédié 68 (E678), maintenant ainsi le flux de données entre le modem et le processeur applications en continu sur ce bus.

Après la connexion du modem, le processeur entrées/sorties du dispositif initiateur envoie au processeur applications, par le bus bidirectionnel 64 les reliant directement, un message indiquant la connexion du modem, ce message étant signifié sur le contrôleur de dialogue 134 avec envoi d'une commande d'interruption au processeur applications (E680 et E682).

Après réception de ce message, le processeur applications envoie à son modem un message commandant la connexion du modem du dispositif récepteur avec son processeur applications (E684). Le processeur applications du dispositif initiateur est alors en attente d'un message d'acquittement de connexion modem du dispositif récepteur. Ce message est transmis depuis le modem du dispositif initiateur (E686) vers le modem du dispositif récepteur (E688), lequel le transmet au processeur entrées/sorties (E690). Le processeur entrées/sorties réalise alors la connexion entre le modem et le processeur applications du dispositif récepteur (E692) et écrit un message sur le contrôleur de dialogue 134 signifiant cette connexion au processeur applications (E694), ce message étant suivi d'un ordre d'interruption du processeur applications (E696).

Après réception de ce message, le processeur applications envoie au dispositif initiateur un message d'acquittement de connexion modem (E700). Ce message est envoyé à partir du modem du dispositif récepteur (E702) à celui du dispositif initiateur (E704), ce dernier le retransmettant au processeur d'application (E706).

Après réception du message d'acquittement de connexion modem envoyé par le dispositif récepteur, les processeurs applications des dispositifs initiateurs et récepteurs seront à même de reprendre l'exécution de la commande de mise à jour interactive du document (E708 et E710).

Le flux de données est alors maintenu entre le modem et le processeur applications sur le bus dédié 68 de chaque dispositif.

Comme indiqué plus haut, pendant l'envoi des données de pages suivantes, il est possible d'envoyer des pixels correspondant au tracé de saisie en écriture en mode interactif. Pour ce qui concerne le dispositif initiateur, la procédure correspondante emprunte le chemin à partir d'une étape de détection d'envoi de pixel (E711) par le processeur entrées/sorties du dispositif initiateur (figure 18A, branche F). Dans ce cas, le processeur entrées/sorties commande le modem pour permettre l'envoi à celui-ci des données de pixels provenant directement du bus reliant le processeur applications au modem (E713). Ces pixels sont alors transmis au modem récepteur comme pour le cas de l'envoi de blocs de données (E654). Le modem retransmet ces données de pixel au processeur entrées/sorties (E656, E658), celui-ci les chargeant dans le contrôleur de dialogue (E712) et les transmettant au processeur applications après notification par l'envoi d'un ordre d'interruption (E714). Le processeur applications procède alors au traitement des données en vue de leur présentation sur l'écran de visualisation (E716).

On notera que dans ce mode, il s'effectue un entrelacement des blocs de données et des pixels au niveau des étapes E652 et E713 sur le flux transmis entre les dispositifs en communication. Dans l'exemple, un ou plusieurs blocs de données sont ainsi entrelacé(s) entre chaque pixel transmis. Pour assurer le bon fonctionnement de cet entrelaçage sans nuire à la qualité "temps réel" de la transmission des pixels, le processeur entrées/sorties s'assure que le temps de transmission du ou des bloc(s) de données entre chaque pixel est inférieure à l'intervalle de temps normal entre deux pixels consécutifs (environ 5 ms).

Il sera maintenant décrit à l'aide des organigrammes des figures 19A et 19B de l'activité des processeurs applications pendant la phase de communication interactive entre deux dispositifs de télé-écriture avec l'envoi de pages restantes par un dispositif initiateur à un dispositif récepteur. Ces deux organigrammes montrent également l'échange de données pixel en temps réel et en duplex intégral des deux dispositifs.

Il est à noter que les phases de communications identifiées dans les figures 19A et 19B sont réalisées en concomitance avec les phases identifiées dans le figures 18A et 18B, comme en témoignent notamment les branches I et H de ces figures.

Ainsi, les figures 18A, 18B, 19A et 19B permettent ensemble de comprendre comment un dispositif de télé-écriture conforme à la présente invention permet simultanément l'envoi de pages et une communication interactive de saisie en écriture.

L'utilisation d'une architecture basée sur deux processeurs indépendants 40 et 42, chacun utilisant un bus dédié séparé 66 et 68 pour l'échange de données spécifiques avec le modem 44, permet une totale transparence vis-à-vis des utilisateurs lors de transfert de données de saisie en écriture sur les écrans tactiles 12 alors même que l'on procède à des transferts des pages de données d'un dispositif à l'autre. Ainsi, de même que pour l'exemple précédent, chaque utilisateur pourra à la fois faire exécuter des commandes de mise à jour interactives d'une ou de plusieurs pages actives et en même temps inscrire et visualiser en temps réel des tracés sur leur écran respectif par l'intermédiaire du stylet 26. Comme dans le mode précédent, chaque passage du stylet 26 sur l'écran tactile 12 dans la zone d'écriture aura pour effet d'afficher le pixel sur l'écran où s'effectue l'écriture et d'envoyer la valeur et l'adresse du pixel au correspondant pour permettre un affichage identique et simultané à l'écran de ce dernier. Chaque passage du stylet sur l'écran tactile dans la zone de commande ou d'état aura pour effet d'exécuter la sous-commande sélectionnée.

Dans l'exemple de la figure 19A, un transfert de données en écriture (données pixels) s'effectue à partir d'un dispositif de télé-écriture (dispositif initiateur) alors même que celui-ci est en cours de transmission de données de page restante vers un autre dispositif (dispositif récepteur).

Cette procédure débute à la suite de l'étape de l'exécution de la commande de mise à jour interactive (E628) par le processeur applications du dispositif initiateur (figure 17D, branche H). Dans ce cas, le processeur applications du dispositif initiateur détecte la présence du stylet 26 dans sa zone d'écriture (E730). Le processeur applications détermine alors s'il s'agit d'une désignation d'un pixel ou d'une commande sur la zone d'état 28 de l'écran tactile 12 (E732). S'il s'agit d'un pixel, le processeur applications écrit le message de données correspondant à ce pixel au contrôleur de dialogue 134 (E734). S'il s'agit en revanche d'une commande, le processeur applications l'exécute (E736) et détermine si l'exécution de cette commande fait intervenir l'envoi d'un ordre (E738). Si un ordre doit être transmis, le message correspondant à l'exécution de cet ordre est envoyé au contrôleur de dialogue 134 (E740).

Lorsque le message est inscrit dans le contrôleur de dialogue - qu'il s'agisse d'un ordre ou de données de pixels -, sa présence est signalée au processeur d'entrées/sorties par l'envoi à ce dernier d'un ordre d'interruption (E742).

Ce message est ainsi lu par le processeur entrées/sorties du dispositif initiateur et est transmis par ce dernier au modem (E744). Le modem transmet alors ce message vers le dispositif récepteur (E746) qui le réceptionne (E748) et l'envoie à son processeur entrées/sorties (E750). Le processeur entrées/sorties transmet ce message au contrôleur de dialogue 134 (E752) et envoie un ordre d'interruption au processeur applications (E754) en vue de lui signaler la présence de ce message. A la réception de ce message, le processeur applications détermine si son contenu concerne un pixel (E756). Dans l'affirmatif, il effectue les calculs nécessaires pour permettre son affichage au point correspondant de l'écran de visualisation (E758). Dans le cas contraire, le processeur applications déterminera l'ordre contenu dans le message et effectuera son exécution (E760).

La figure 19B est un organigramme représentant exactement le même cas d'échange de données que représenté à la figure 19A à la différence que les rôles des dispositifs émetteur et récepteur sont inversés. Dans ce cas, la procédure débute à la suite de l'exécution de la commande de mise à jour interactive (E634) du processeur applications du dispositif récepteur (figure 17D, branche I). Les étapes de cette procédure sont ainsi identiques et repérées par les mêmes références suivies d'un signe "'". Ces opérations ne seront pas décrites à nouveau par souci de concision.

Dans le cas où la communication interactive s'effectue lorsque les processeurs applications de chaque dispositif de télé-écriture en communication sont connectés à leur modem respectif par le bus dédié 68, la phase de communication interactive a le même comportement que la phase de communication interactive de la commande de création interactive de documents décrite plus haut.

Cette phase de communication interactive lorsque les processeurs applications 42 sont connectés à leur modem 44 sera maintenant expliquée par référence à l'organigramme de la figure 20. Cet organigramme montre également l'échange de données pixel en temps réel et en duplex intégral des deux dispositifs.

Cette description sera faite pour le cas de figure où l'envoi de données de saisie en écriture (pixels) s'effectue à partir du dispositif de télé-écriture initiateur. Ces opérations s'effectuent donc à la suite de l'exécution de commande de mise à jour interactive (E708) décrit plus haut par référence à la figure 18B (branche J).

Comme dans le cas précédent, le dispositif initiateur (dispositif I) détecte la présence du stylet 26 sur son écran tactile 12 (E780) et détermine s'il s'agit de désignations de pixels sur la surface de saisie en écriture ou d'une désignation de commande sur la zone d'opérations 28 (E782). S'il s'agit d'une commande, le processeur applications l'exécute (E784) et détermine s'il y a lieu de transmettre un ordre relatif à cette commande vers le dispositif récepteur (E786). Si tel est le cas, le processeur applications envoie le message d'ordre vers le modem (E788).

Si la saisie correspond à un pixel, le processeur applications envoie dans ce cas un message de données correspondant à ce pixel vers le modem (E790).

Le modem du dispositif initiateur transmet alors le message (soit de commande, soit de pixel) vers le modem du dispositif récepteur (E792). Le modem du dispositif récepteur réceptionne le message (E794) et le transmet directement à son processeur applications (E796), la voie de communication directe entre ce dernier et le modem ayant été établie sur le bus dédié 68. A la réception de ce message, le processeur applications du dispositif récepteur détermine s'il correspond à un pixel (E798). Si tel est le cas, il effectue les opérations nécessaires à sa visualisation sur son écran 12 (E800). Dans le cas contraire, il exécute l'ordre correspondant à ce message (E802).

Ces opérations de communication interactive lorsque les processeurs applications sont connectés à leur modem par leur bus dédié 68 sont identiques lorsque le flux de données est inversé, c'est-à-dire lorsque les données de pixels ou de commandes sont transmises à partir du dispositif récepteur (dispositif 2) vers le dispositif initiateur (dispositif 1). Dans ce cas, le déroulement du processus de transmission de message s'effectuera après l'exécution de commande de mise à jour interactive (E710) réalisé par le processeur application du dispositif récepteur représenté à la figure 18B (branche K). Le déroulement de ces opérations étant identique, ils ne seront pas répétées par souci de concision. Les étapes correspondantes seront désignées par les mêmes numéros de référence suivis d'un signe "'".

On notera que les commandes de mise à jour interactive de document possède plusieurs sous-commandes permettant la gestion du document en cours de réalisation comme par exemple : effacement de zone, changement de couleur, etc. Certaines commandes auront pour effet d'envoyer au correspondant un ordre d'exécution de commande précisant la nature de l'opération à effectuer.

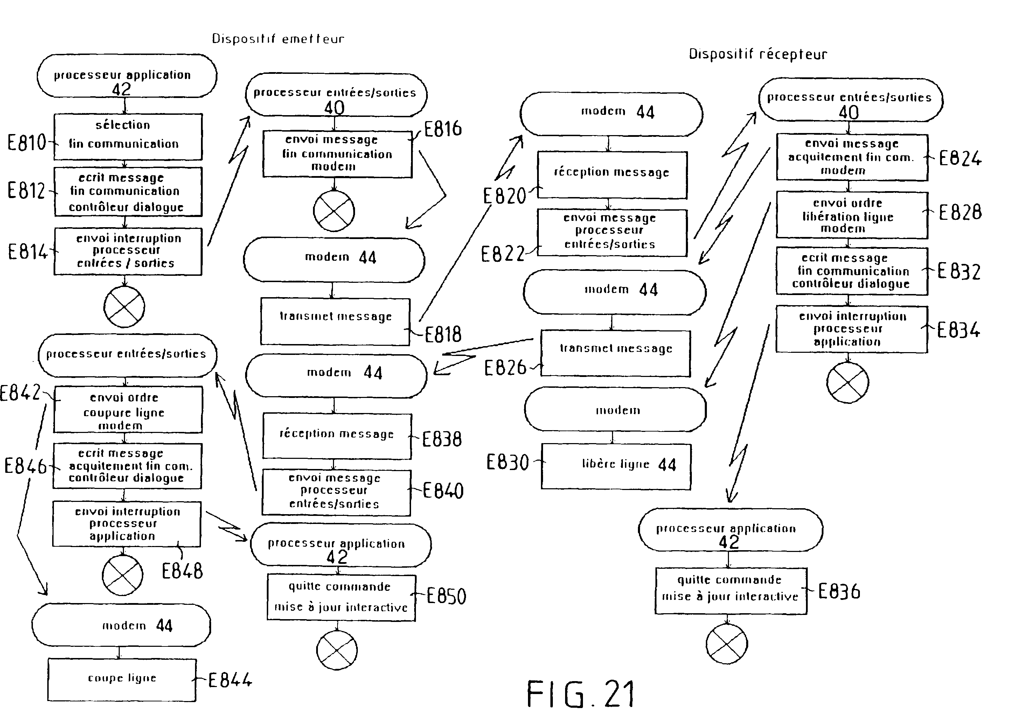

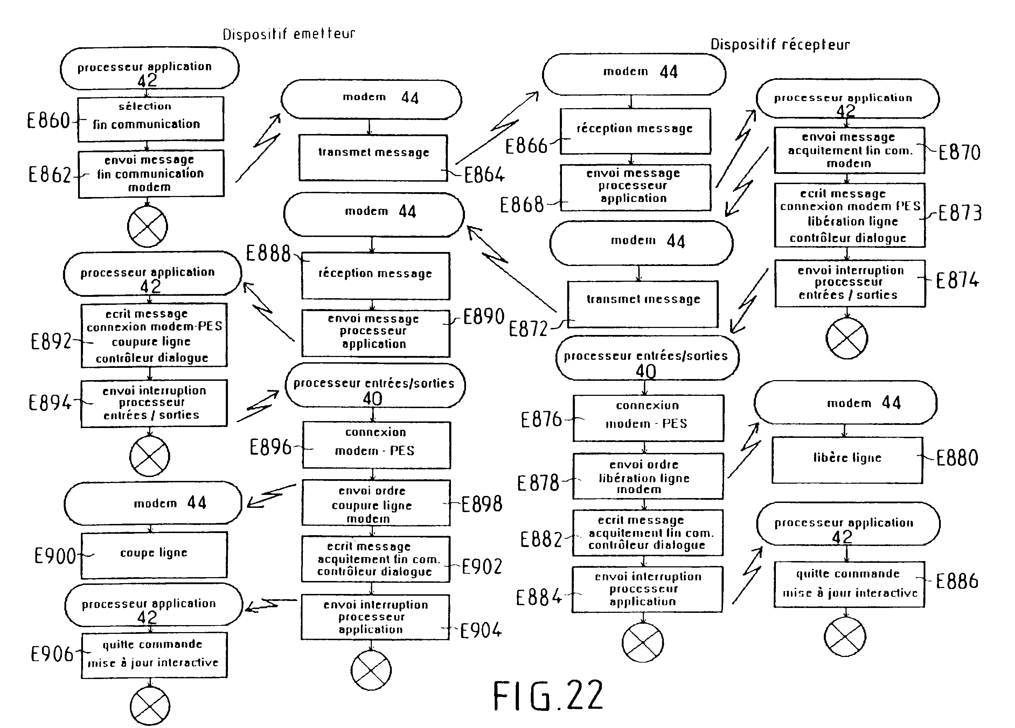

Il sera maintenant décrit les opérations de phase de fin de communication interactive par référence aux organigrammes des figures 21 et 22.

L'organigramme de la figure 21 décrit la phase de fin de communication pendant le déroulement de la phase d'envoi de page restante par le dispositif initiateur. Dans ce cas, les processeurs entrées/sorties de chaque dispositif sont connectés à leur modem respectif par le bus dédié 66.

Dans ce cas, l'utilisateur au niveau du dispositif émetteur aura sélectionné la commande de fin de communication (E810). Le processeur applications écrit alors ce message de fin de communication au contrôleur de dialogue suivi d'un ordre d'interruption du processeur entrées/sorties (E812, E814), permettant à ce dernier de lire le message de fin de communication. Ce message est alors transmis du processeur entrées/sorties au modem du dispositif émetteur (E816) afin qu'il soit transmis vers le modem du dispositif récepteur (E818).

Le modem du dispositif récepteur réceptionne ce message (E820) et l'envoie au processeur entrées/sorties (E822) qui, en retour envoie un message d'acquittement de fin de communication à son modem (E824). Le modem du dispositif récepteur transmet alors le message d'acquittement au modem du dispositif émetteur (E826). Ensuite, le processeur entrées/sorties transmet au modem l'ordre de libération de ligne (E828), en réponse auquel le modem libère la ligne (E830).

Le processeur entrées/sorties du dispositif récepteur communique à son processeur applications l'état de fin de communication via le contrôleur de dialogue 134 et d'un message d'interruption (E832, E834).

A la réception de ce message, le processeur applications quitte alors la commande de mise à jour interactive (E836).

Le modem du dispositif émetteur (E838) réceptionne le message d'acquittement de fin de communication et le retransmet à son processeur entrées/sorties (E840). En réponse, le processeur entrées/sorties du dispositif émetteur envoie l'ordre de coupure de ligne à son modem (E842). Le modem coupe alors la ligne et termine ainsi la communication entre les dispositifs émetteur et récepteur (E844). Ensuite, le processeur entrées/sorties du dispositif émetteur communique cet état de fin de communication à son processeur applications en écrivant un message d'acquittement de fin de communication au contrôleur de dialogue 134 suivi d'une demande d'interruption (E846, E848). A la réception de ce message d'acquittement de fin de communication, le processeur applications quitte la commande de mise à jour interactive (E850).

L'organigramme de la figure 22 décrit la phase de fin de communication lorsque les processeurs applications de chacun des dispositifs communicants sont connectés à leur modem respectif par le bus dédié 68.

Dans l'exemple, la fin de communication est initiée par le dispositif émetteur. Le processeur applications du dispositif émetteur reçoit alors la commande de fin de communication sélectionnée par l'utilisateur (E860) et transmet ce message de fin de communication au modem par le bus dédié 68 (E862). Le modem transmet ce message au modem du dispositif récepteur (E864), qui le réceptionne (E866) et le transmet au processeur applications directement par le bus dédié 68 (E868). A la réception de ce message par le processeur applications du dispositif récepteur, celuici envoie le message d'acquittement de fin de communication à son modem (E870). Le modem transmet alors ce message d'acquittement vers le modem du dispositif émetteur (E872).

Le processeur applications du dispositif récepteur écrit ensuite le message de connexion entre le modem et le processeur entrées/sorties et de libération de la ligne sur le contrôleur de dialogue 134 (E873), suivi de l'envoi d'un ordre d'interruption du processeur entrées/sorties (E874) afin que ce dernier puisse lire le message.

En réponse, le processeur entrées/sorties effectue la connexion entre le modem et le processeur entrées/sorties (E876) et envoie l'ordre de libération de ligne vers le modem (E878), cet ordre étant transmis directement par le bus dédié 66. A la réception de cet ordre, le modem libère la ligne (E880).

Ensuite, le processeur entrées/sorties du dispositif récepteur écrit un message d'acquittement de fin de communication sur le contrôleur de dialogue 134 (E882) suivi d'un ordre d'interruption du processeur applications (E884) afin que celui-ci puisse lire le message. A la réception de ce message, le processeur applications du dispositif récepteur quitte la commande de mise à jour interactive (E886).

Au niveau du dispositif émetteur, le message d'acquittement de fin de communication transmis par le dispositif récepteur (E872) est réceptionné (E888) et envoyé directement au processeur applications par le bus dédié 68 (E890). A la réception de ce message, le processeur applications du dispositif émetteur écrit un message de connexion entre le modem et le processeur entrées/sorties et de coupure de ligne au contrôleur de dialogue 134 (E892) suivi d'un ordre d'interruption du processeur entrées/sorties (E894) afin que ce message puisse être lu par ce dernier.

En réponse à ce message, le processeur entrées/sorties effectue la connexion directe entre le modem et le processeur entrées/sorties par le bus dédié 66 (E896) et envoie au modem l'ordre de coupure de ligne (E898). En réponse à cet ordre, le modem coupe la ligne terminant ainsi la communication entre le dispositif récepteur et émetteur (E900).

Ensuite, le processeur entrées/sorties du dispositif émetteur écrit un message d'acquittement de fin de communication au contrôleur de dialogue 134 (E902) suivi de l'envoi d'un ordre d'interruption du processeur applications (E904) afin que ce dernier puisse lire le message. A la réception de ce message, le processeur applications du dispositif émetteur quitte la commande de mise à jour interactive (E906) terminant ainsi le dialogue entre les dispositifs communicants.

Il sera maintenant présenté une variante de l'invention permettant de décharger la première unité de commande de l'entrelaçage des données, a savoir lesdites autres données et les données de saisie en écriture.

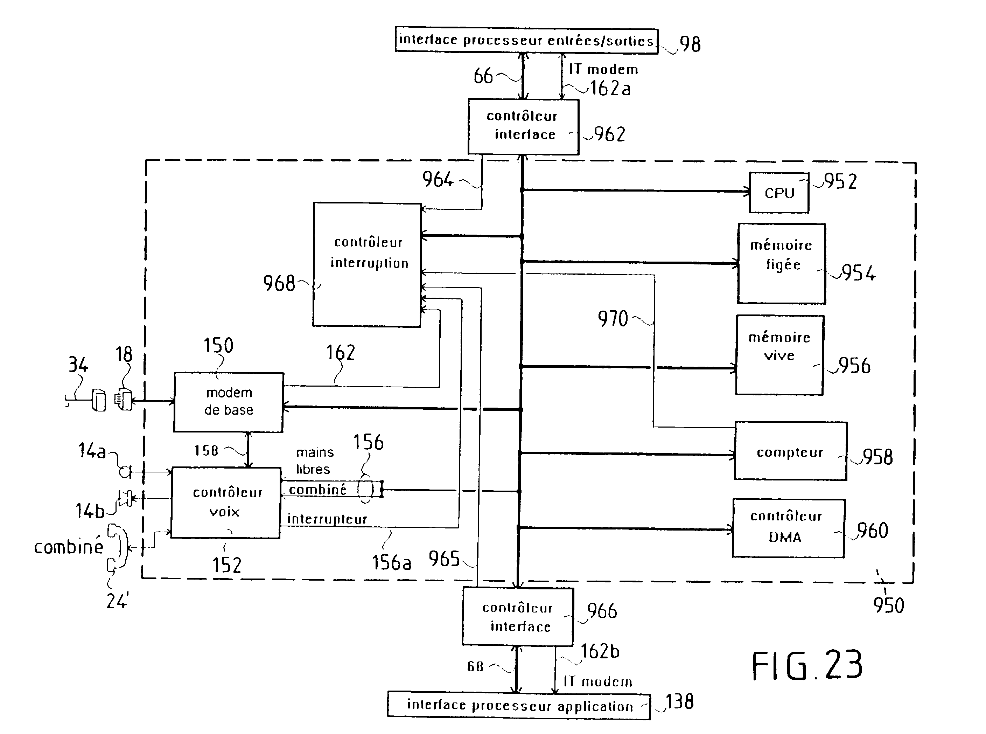

Cette variante fait appel à un moyen d'interface comportant une "intelligence autonome", assurant l'échange des données de saisie en écriture et des autres données sur la ligne externe de transmission de données. Ce moyen d'interface sera appelé processeur de communications et désigné par le repère 950 (figure 23).

De plus, le processeur de communications 950 prend en charge l'exécution des programmes de bas niveau des différents mode de communication ainsi que les traitements spécifiques des données. Le processeur entrées/sorties 40 est alors déchargé de ces tâches. L'avantage d'une telle structure est de conférer au dispositif de télé-écriture une indépendance vis-à-vis des différents modes, protocoles ou support de communications présent ou avenir. En effet, les processeurs entrées/sorties 40 et applications 42 seront considérés comme un ensemble applicatif vis-à-vis du processeur de communications. Seul le processeur de communication 950 pourra être interchangeable, permettant ainsi une évolution future du dispositif de télé-écriture.

Le schéma bloc détaillé du processeur de communications 950 est représenté à la figure 23.

On notera que la variante qui sera maintenant décrite reprend sensiblement l'architecture du dispositif selon le mode de réalisation précédemment décrit, notamment pour ce qui concerne le dispositif dans son ensemble, le processeur entrées/sorties et le processeur applications représentés respectivement aux figures 4, 5 et 6. Ces figures et la description correspondante doivent ainsi être considérées comme comprises dans l'explication de cette variante, bien que pas répétées par souci de concision. Les modifications par rapport à ces figures et à la description correspondante, et qui sont spécifiques à cette variante, seront explicitées ou apparaîtront à l'évidence.

La gestion interne du processeur de communications 950 est réalisée par une unité centrale de calcul (CPU) 952 qui est utilisée pour piloter les différents contrôleurs ainsi que le modem de base 150. Le CPU 952 est mis en oeuvre par un système d'exploitation dit "temps réel" qui lui permet d'exécuter toutes les demandes des différents contrôleurs pour garantir un traitement sans délai des différentes ressources.

Le système d'exploitation temps réel est contenu sous forme de logiciel dans une mémoire figée 954 qui comporte également le programme d'initialisation du processeur de communications ainsi que les programmes de gestion de bas niveau des contrôleurs.

Les programmes de bas niveau de communication et de traitement des données sont contenus sous forme de logiciel dans une mémoire vive 956. Ces différents programmes seront chargés dans la mémoire vive 956 sous forme de modules ou de fichiers actifs nécessaires pour un mode de communication donné. Suivant le mode de communication à exécuter, le processeur de communications 950 enverra une demande de chargement de programme au processeur entrées/sorties 40, ces différents programmes étant contenus dans le lecteur de disque dur 48.

Un compteur 958 est utilisé pour déterminer des durées de temps permettant d'assurer l'exécution du système d'exploitation temps réel ainsi que, entre autres, des fonctions de "chien de garde" pour éviter les blocages de fonctionnement.

Un contrôleur d'accès direct en mémoire (DMA) 960 permet d'effectuer des transferts de données entre les différents contrôleurs ou vis-à-vis de la mémoire sans utiliser l'unité centrale 952, selon des techniques bien établies.

Un contrôleur interface 962 relie l'interface modem 98 du processeur entrées/sorties 40 au bus dédié 66 (cf. figure 5). Le flux des données échangées entre le processeur entrées/sorties 40 et le processeur de communications 950 transite par ce contrôleur, ceci en duplex intégral entre les deux processeurs (émission et réception de données en même temps). Le contrôleur possède deux zones interfaces de stockage tampon de données : une zone de stockage tampon en réception et une zone de stockage tampon en émission, permettant d'assurer un échange de données sans rupture, même si d'aventure un des deux processeurs n'est pas en mesure d'acquitter immédiatement la demande de transfert. Le rythme du transfert des données est orchestré par des signaux d'interruption transmis sur les lignes 964 et 162a de la façon suivante :
- Lorsque le processeur de communications 950 émet des données vers le processeur entrées/sorties 40, le processeur de communications 950 écrira un ensemble de données dans le contrôleur interface 962 jusqu'au remplissage de la zone de stockage tampon en émission. Celui-ci, dès réception de la première donnée, préviendra le processeur entrées/sorties 40 par l'intermédiaire du signal d'interruption IT modem sur la ligne 162a, qu'une donnée est disponible et qu'il doit la lire. Avant que la zone de stockage tampon en émission soit vide, le contrôleur interface 962, préviendra le processeur de communications 950, par l'intermédiaire du signal d'interruption sur la ligne 964, qu'il doit fournir d'autres données ou, s'il n'y a plus de données à transférer, qu'il doit initialiser la fin de transfert.
- Lorsque le processeur entrées/sorties 40 émet des données vers le processeur de communications 950, le processeur entrées/sorties 40 écrira un ensemble de données dans le contrôleur interface 962 jusqu'au remplissage de la zone de stockage tampon en réception. Celui-ci, dès réception de la première donnée, préviendra le processeur de communications 950 par l'intermédiaire du signal d'interruption sur la ligne 964 qu'une donnée est disponible et qu'il doit la lire. Avant que la zone de stockage tampon en réception soit vide, le contrôleur interface 962 préviendra le processeur entrées/sorties 40, par l'intermédiaire du signal d'interruption IT modem sur la ligne 162a, qu'il doit fournir d'autres données ou, s'il n'y a plus de données à transférer, qu'il doit initialiser la fin de transfert.

Les deux étapes précédentes fonctionnement simultanément, permettant ainsi un échange de données en duplex intégral entre le processeur entrées/sorties 40 et le processeur de communications 950.

Un contrôleur interface 966 relie l'interface modem 138 du processeur applications 42 au bus dédié 68. Le flux des données échangées entre le processeur applications 42 et le processeur de communications 950 transite par ce contrôleur, ceci en duplex intégral entre les deux processeurs (émission et réception de données en même temps). La fonctionnalité de ce contrôleur d'interface 966 est identique au contrôleur interface 962 et, par souci de concision, elle ne sera pas expliquée. Le signal d'interruption sur la ligne 965 et le signal IT modem sur la ligne 162b sont analogues aux signaux 964 et IT modem sur la ligne 162a, respectivement.

Le circuit modem de base 150 ainsi que le contrôleur voix 152 réalisent les fonctions de connexion au réseau téléphonique, véhiculant les différentes informations possibles. Ils sont identiques au moyen d'interface modem 44 décrit plus haut par référence à la figure 4. Ils ne seront donc pas expliqués par souci de concision. Cependant le contrôleur voix n'est plus commandé par le contrôleur modem 96 du processeur entrées/sorties 40. Les signaux mains libres et combiné véhiculés sur la ligne 156 sont maintenant pilotés par le CPU 952 et le signal interrupteur 156a est directement relié au contrôleur d'interruption 968, permettant ainsi de prévenir le CPU 952 de l'état décroché ou raccroché du combiné 24'.

Un contrôleur d'interruption 968 permet de recevoir les différents signaux d'interruption issus des contrôleurs, du modem de base 150 et du compteur 958, via une ligne de signal 970, puis d'interrompre le CPU 952 en lui indiquant l'élément qui doit être servi.

### Modes de fonctionnement

Il sera maintenant expliqué les différences de fonctionnement apportés par le processeur de communications 950 par rapport au moyen d'interface 44 décrit plus haut par référence à la figure 4.

### Transfert entre processeur de communications 950 et les processeurs 40 et 42

Le processeur de communications étant une unité comparable aux processeurs entrées/sorties 40 et applications 42, le transfert de données entre ce premier et ces deux derniers est constitué de messages. La structure des messages est identique à celle représentée schématiquement à la figure 8A et ne sera donc pas expliquée par souci de concision.

Les messages transitent par l'intermédiaire des contrôleurs interfaces 962 et 966, dont la fonctionnalité a été décrite plus haut, ces interfaces reliant respectivement le processeur entrées/sorties 40 par le bus 66 et le processeur applications 42 par le bus 68. Les connexions entre le processeur de communications 950 et les processeurs entrées/sorties 40 et applications 42 sont toujours établies et ne sont pas sous le contrôle du processeur entrées/sorties 40 comme dans le cas d'utilisation avec le moyen d'interface 44.

Cette architecture du dispositif de télé-écriture permet un parallélisme des trois unités, celles-ci ayant chacune une ou plusieurs tâches spécifiques à exécuter. Dans cette architecture, on peut définir les fonctionnalités principales de chaque unité :
- Le processeur entrées/sorties 40 est dorénavant dédié uniquement à la gestion des différents périphériques internes au dispositif de télé-écriture, à l'organisation et la gestion des documents et, pendant une communication interactive, à l'envoi des autres données vers le processeur de communications 950. Il exécutera également les ordres émis par le processeur applications pour l'envoi de données vers le processeur de communications dans le cas de communications non interactives, comme par exemple les échanges en mode fax ou en mode données.
- Le processeur applications 42 est, comme auparavant, dédié aux fonctions telles que décrites précédemment.
- Le processeur de communications 950 est dédié au contrôle des différents types et protocoles de communications ainsi qu'à la gestion des fonctions directement liées au téléphone. De plus il réalise l'entrelaçage des autres données, issues du processeur entrées/sorties 40, lors d'une communication interactive.

Les processeurs entrées/sorties 40 et applications 42 peuvent communiquer simultanément, si nécessaire, avec le processeur de communications 950 par l'intermédiaire de leur bus respectif 66 et 68 sans nécessiter un arbitrage par l'un quelconque des processeurs 40 et 42. Le processeur de communication 950 accepte, en temps réel, les demandes de l'un des quelconques processeurs 40 et 42 puis exécute les messages envoyés par l'un des quelconques processeurs 40 et 42.

### Transfert en mode fax ou mode données

Dans ces modes, les fonctionnalité sont identiques à celles précédemment décrites et ne seront pas expliquées à nouveau par souci de concision.

### Transfert entre dispositifs de télé-écriture

Le transfert d'informations ou de données entre deux dispositifs de télé-écriture ou plus s'effectue par l'intermédiaire du processeur de communications 950 de chacun de ces dispositifs. Chaque transfert d'informations est constitué par un message ayant la structure représentée en figure 8A et qui ne sera donc pas expliquée à nouveau par souci de concision. Le contenu du message indiquera au processeur de communications 950 si ce message le concerne uniquement ou si le processeur de communications doit le transmettre à son processeur entrées/sorties 40 via le bus dédié 66 ou à son processeur applications 42 via le bus dédié 68, ou à la fois au processeur entrées/sorties 40 et au processeur applications 42, via leur bus dédié 66 et 68 respectivement. Le transfert est ainsi maintenu en permanence entre les trois processeurs.

De même que précédemment décrit plus haut, le mode interactif permet deux fonctionnalités : la création interactive d'un document, et la mise à jour interactive d'un document existant. La communication des données est toujours réalisée en duplex intégral aussi bien en vocale qu'en données.

Dans les descriptions qui suivent, le dispositif de télé-écriture initialisant le mode sera appelé "initiateur", l'autre dispositif de télé-écriture sera appelé "récepteur".

### Création interactive d'un document

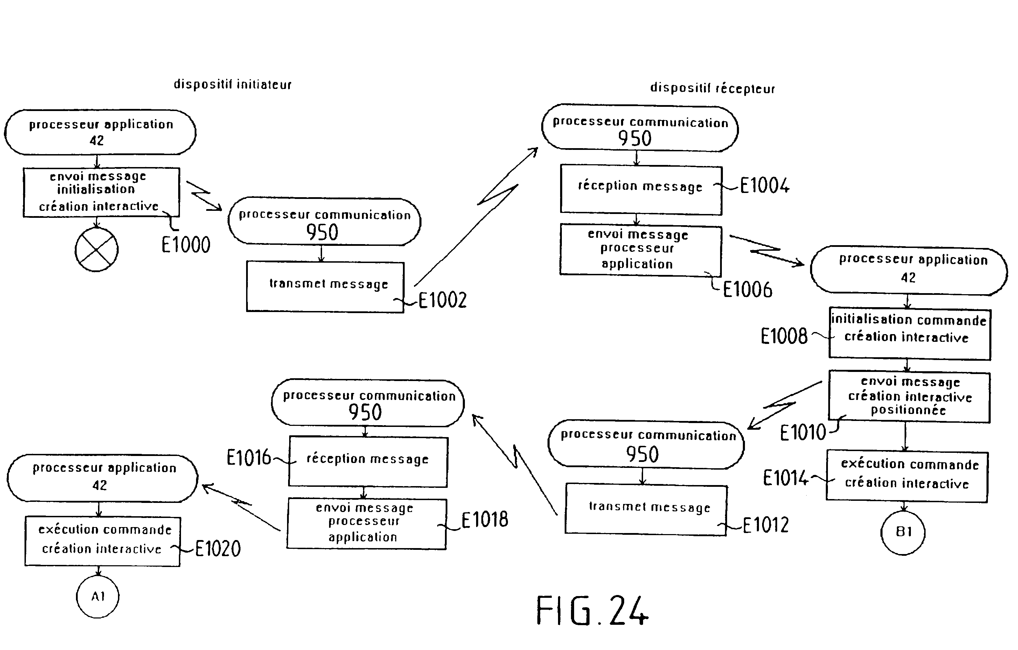

Il sera maintenant présenté les séquences d'opérations dans le cas d'une création interactive d'un document par référence aux organigrammes des figures 24, 25 et 26, qui se rapportent respectivement à la phase d'initialisation, la phase de communication interactive et la phase de fin de communication.

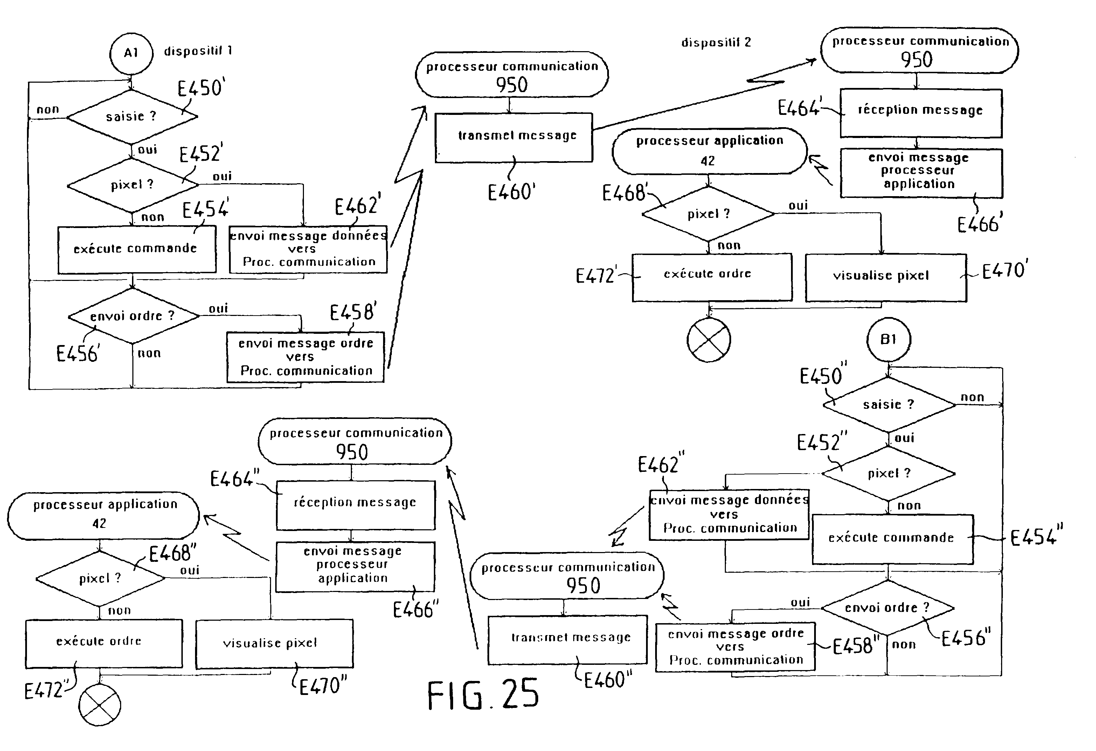

Dans la phase d'initialisation (figure 24), le processeur applications 42 d'un dispositif de télé-écriture initiateur transmet au processeur de communications 950, via le bus dédié 68. un message d'initialisation de création interactive (E1000) afin que ce dernier le transmette au processeur de communications 950 du dispositif récepteur (E1002). Ce dernier reçoit le message d'initialisation de création interactive (E1004), et le transmet à son processeur applications 42 (E1006) afin que celui-ci initialise la commande création interactive. Après réception de ce message, le processeur applications 42 initialise la commande création interactive (E1008) puis envoie à son processeur de communications 950 un message indiquant que la création interactive est positionnée (E1010), lequel transmet ce message au processeur de communications 950 du dispositif initiateur (E1012). Ensuite, le processeur applications 42 du dispositif récepteur se met en mode d'exécution de commande de création interactive (E1014), en exécutant une séquence d'opérations interactives qui sera décrit par référence à la branche B1 de l'organigramme de la figure 25.

Après réception du message de positionnement de création interactive (E1016), le processeur de communications 950 du dispositif initiateur transmet ce message à son processeur applications (E1018), lequel se met en mode d'exécution des commandes de création interactive (E1020) en exécutant une séquence d'opérations interactives qui seront décrites par référence à la branche A1 de l'organigramme de la figure 25.

Il est ainsi montré dans le cas d'utilisation d'un processeur de communications 950 que, pendant la phase d'initialisation, il n'y a pas de lien fonctionnel avec le processeur entrées/sorties 40, par contraste avec le cas d'utilisation d'un modem 44 tel que décrit dans le premier mode de réalisation.

Après l'établissement de la phase d'initialisation entre les dispositifs de télé-écriture, ces derniers peuvent engager la phase de communication interactive. La figure 25 décrit cette phase. Il est à noter que cette phase est identique à celle qui a été décrite plus haut dans le cas de fonctionnement avec un modem 44 (cf. figure 15) et ne sera donc pas reproduite par souci de concision. La lecture de la figure 25 peut être faite en se reportant à la description de la figure 15, les étapes étant repérées dans la figure 25 suivant la même numérotation, accompagnée d'un signe "prime".

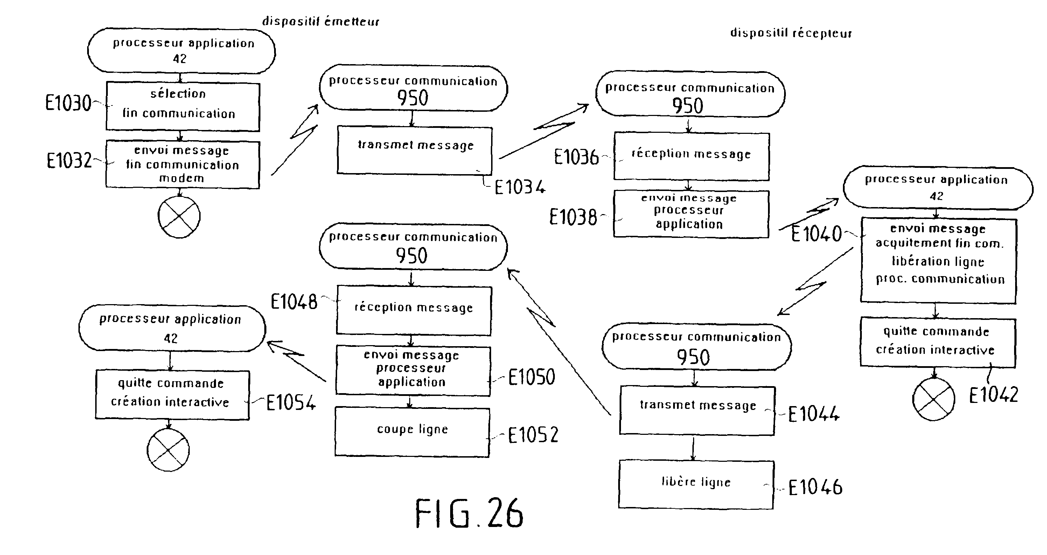

La phase de fin de communication sera maintenant décrite par référence à la figure 26. Dans ce qui suit, on désignera le dispositif signalant la fin de la communication interactive le dispositif émetteur, et le dispositif recevant l'ordre de fin de communication interactive le dispositif récepteur.

Après sélection de la commande de fin de communication entrée par le stylet 26 sur l'écran interactif 12 du dispositif émetteur (E1030), le processeur applications 42 de celui-ci envoie un message de fin de communication à son processeur de communications 950 par le bus 68 (E1032), lequel transmet le message au processeur de communications 950 du dispositif récepteur (E1034). Ce dernier réceptionne le message (E1036) et le transmet au processeur applications 42 du dispositif récepteur (E1038). En réponse, le processeur applications 42 lui retourne un message d'acquittement de fin de communication, destiné au dispositif émetteur, puis un ordre de libération de ligne (E1040). Ensuite il quitte la commande de création interactive (E1042). Le processeur de communications 950 du dispositif récepteur envoie alors le message d'acquittement de fin de communication au processeur de communications 950 du dispositif émetteur (E1044), puis libère la ligne (E1046).

A la réception du message d'acquittement de fin de communication (E1048), le processeur de communications 950 du dispositif émetteur transmet le message à son processeur applications 42 par le bus 68 (E1050) puis coupe la ligne (E1052) terminant ainsi la communication interactive. Le processeur application 42 quitte alors la commande création interactive (E1054).

Comme pour la phase d'initialisation de communication, il est ainsi montré que l'utilisation d'un processeur de communications 950 pendant la phase de fin de communication n'a pas de lien fonctionnel avec le processeur entrées/sorties 40 comme dans le cas d'utilisation d'un modem 44.

### Mise à jour interactive d'un document

Comme précédemment écrit, cette fonction permet à deux correspondants ou plus de mettre à jour un document d'une façon interactive. Le document initial étant contenu dans le dispositif de télé-écriture désigné dispositif initiateur.

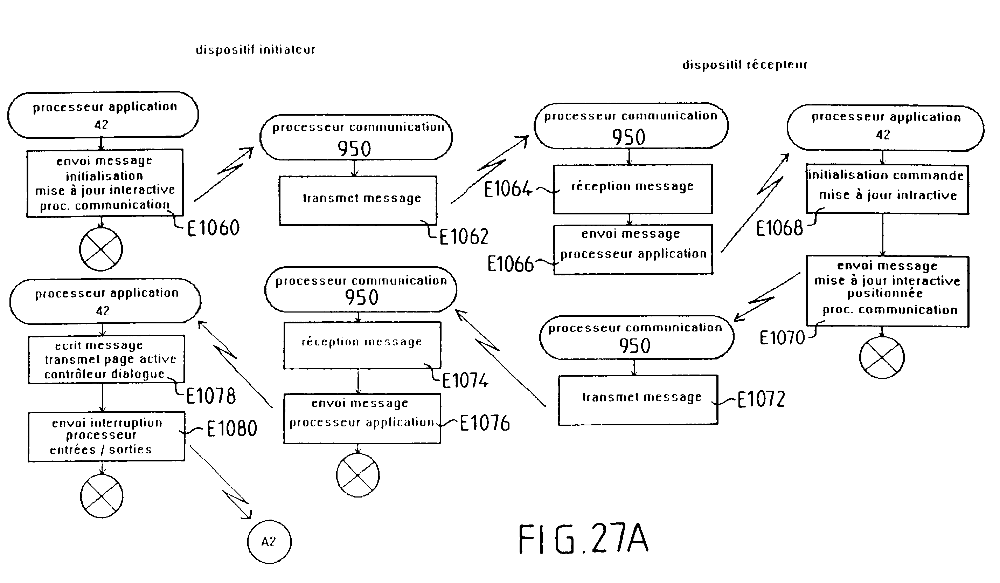

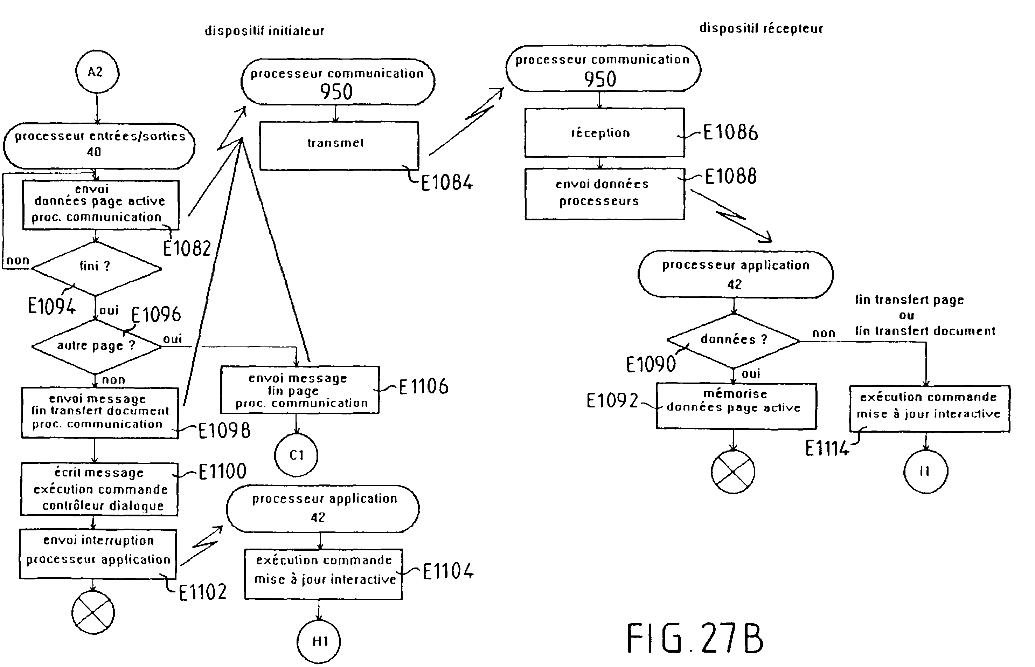

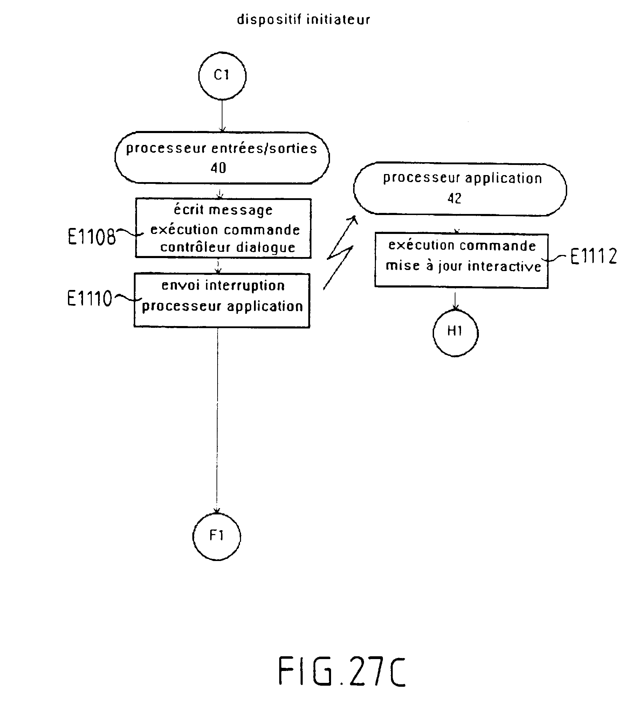

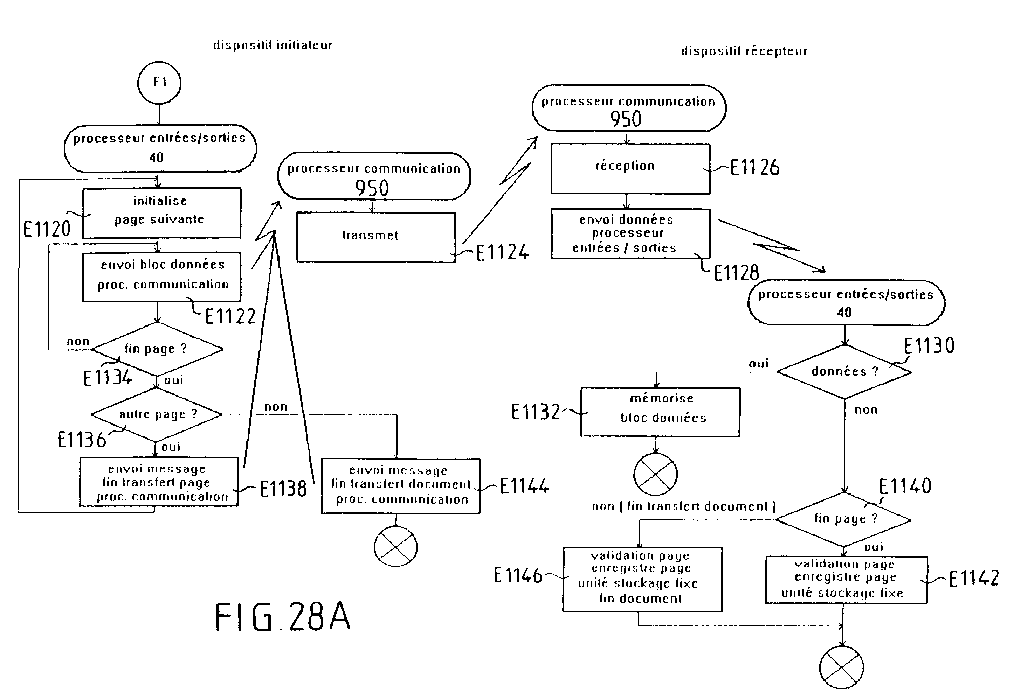

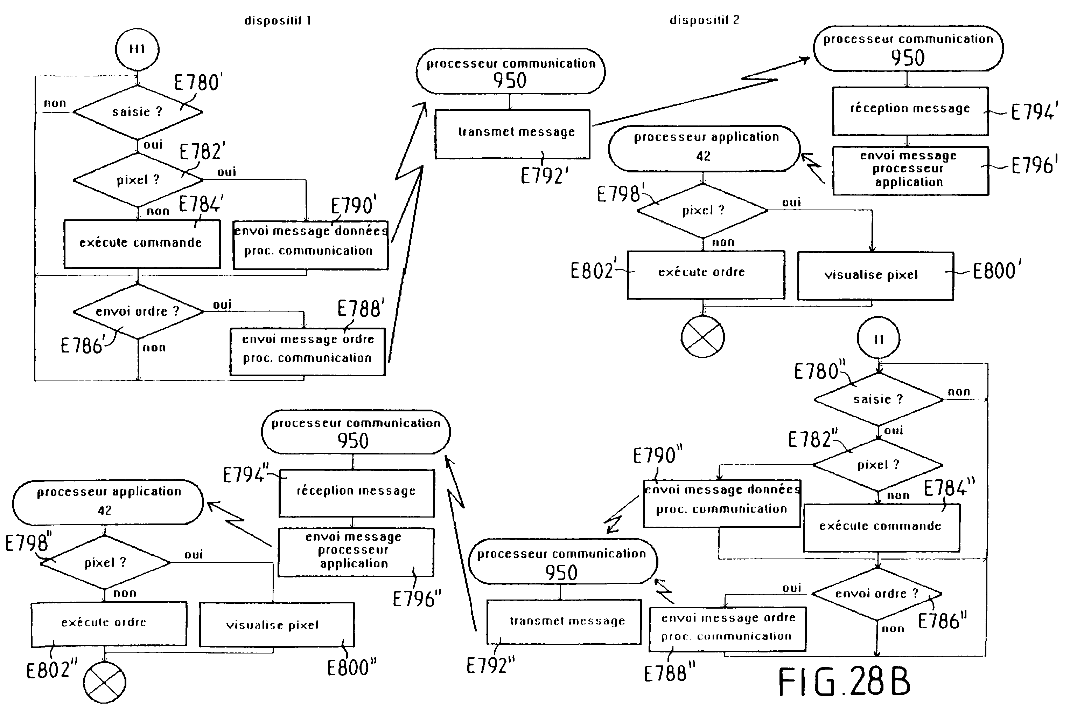

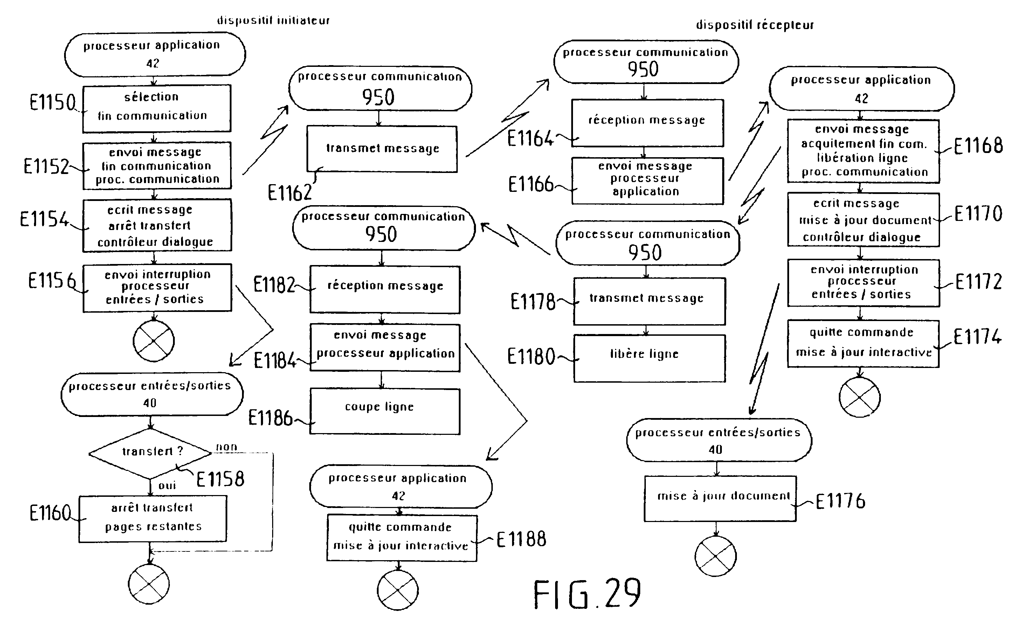

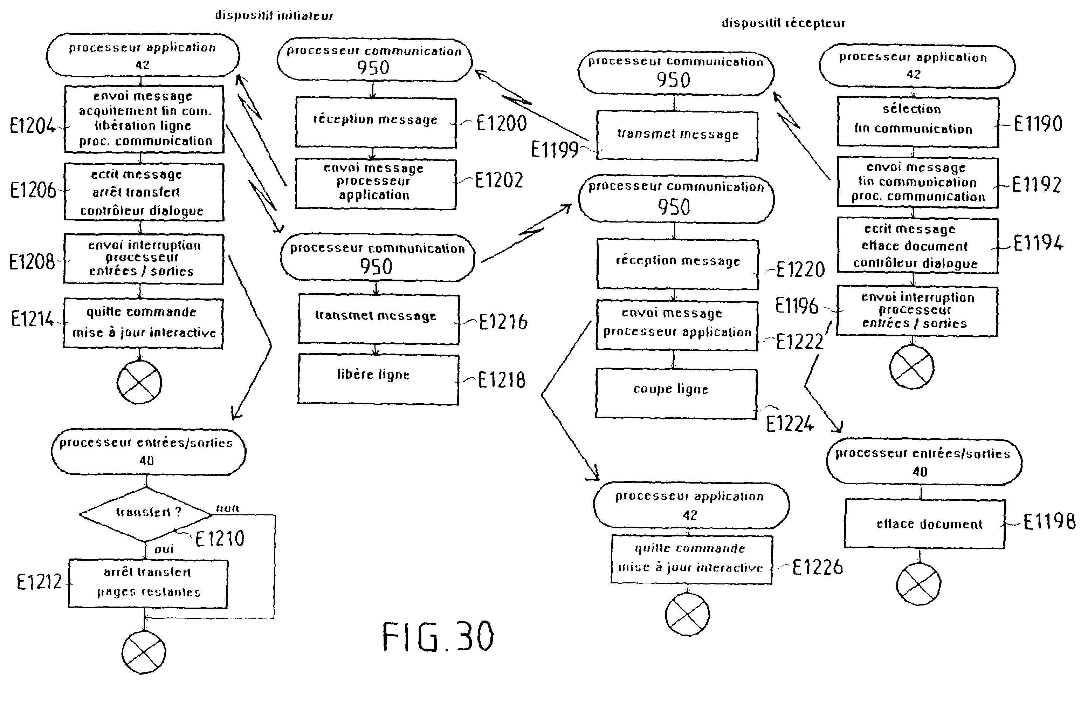

Cette fonction comporte une phase d'initialisation (figures 27A, 27B et 27C), une phase de communication interactive (figures 28A et 28B) et une phase de fin de communication (figures 29 et 30).
La phase d'initialisation sera maintenant décrite par référence à la figure 27A. A l'initialisation du mode de mise à jour interactive d'un document, le processeur applications 42 du dispositif initiateur transmet à son processeur de communications 950, via le bus dédié 68, un message requérant l'initialisation du dispositif récepteur (E1060). Celui-ci transmet le message au processeur de communications 950 du dispositif récepteur (E1062), lequel, après réception (E1064), transmet le message à son processeur applications 42 via son bus dédié 68 (E1066). Lorsque le processeur applications 42 reçoit ce message, celui-ci effectue l'initialisation de la commande de mise à jour interactive (E1068) puis envoie à son processeur de communications 950, via le bus dédié 68, un message de positionnement de commande mise à jour interactive (E1070) à destination du dispositif initiateur. Le processeur de communications 950 transmet ce message au processeur de communications 950 du dispositif initiateur (E1072), lequel, après réception (E1074), le transmet à son processeur applications 42 (E1076). Après réception du message de positionnement de commande, le processeur applications 42 du dispositif initiateur écrit alors un message de transfert de page active au contrôleur de dialogue 134 (E1078) suivi d'un ordre d'interruption du processeur entrées/sorties 40 (E1080), permettant ainsi de continuer la procédure d'initialisation par l'envoi des données constituant le document, suivant la branche A2 de la figure 27B. Les premières données sont celles de la page active. Le processeur applications 42 sera alors en attente d'un message d'exécution de commande mise à jour interactive.

On remarque que, dans le cas d'utilisation d'un processeur de communications 950 pendant cette phase d'initialisation, il n'y a pas de lien fonctionnel avec le processeur entrées/sorties 40 par contraste avec le cas d'utilisation d'un modem 44 tel que décrit dans le premier mode de réalisation.

Le processus de transfert d'une ou de plusieurs pages de données par le dispositif initiateur sera maintenant décrit par référence à la figure 27B.

Une fois que le message indiquant que la mise à jour interactive a été positionnée au niveau du dispositif récepteur et a été retransmis au dispositif initiateur, suivant la branche A2 de la figure 27B, le processeur entrées/sorties 40 du dispositif initiateur commence l'envoi des données de la page active vers le processeur de communications 950 via le bus dédié 66. Celles-ci sont d'abord transmises au processeur de communications 950 du dispositif initiateur (E1082) d'où elles sont envoyées au processeur de communications 950 du dispositif récepteur (E1084). Ce dernier les réceptionne (E1086) et les transmet à son processeur applications 42 (E1088), lequel les mémorise, après détermination du type de message (E1090), en tant que données de page active (E1092).

Lorsque le processeur entrées/sorties 40 du dispositif initiateur détecte la fin de l'envoi des données de la page active vers le processeur de communications (E1094), il détermine si oui ou non une autre page doit être transmise (E1096).

Si le document ne possède qu'une seule page, c'est-à-dire seulement la page active, le processeur entrées/sorties 40 du dispositif initiateur envoie à son processeur de communications un message de fin de transfert document (E1098), lequel le transmet au processeur de communications 950 du dispositif récepteur suivant l'étape (E1084). Ensuite le processeur entrées/sorties 40 du dispositif initiateur écrit dans le contrôleur de dialogue 134 (figure 6) un message indiquant l'exécution de la commande mise à jour interactive document (E1100) lequel envoie une interruption au processeur applications 42 (E1102). Après réception du message, le processeur applications 42 exécute la commande de mise à jour interactive document (E1104) et continue en suivant la branche H1 de l'organigramme 28B.

Si le document possède plusieurs pages (cf. figure 27B et étape E1096), le processeur entrées/sorties 40 du dispositif initiateur envoie à son processeur de communications 950 un message de fin de transfert page (E1106), qui sera envoyé au dispositif récepteur, via son processeur de communications 950 et suivant les étapes E1084 - E1088. Ce message a pour effet d'indiquer au dispositif récepteur la fin du transfert de la page active et qu'une ou plusieurs autres pages seront transférées, mais qu'il peut effectuer la commande mise à jour interactive du document sur la page active sans attendre la réception de la ou des autres pages du document.

Ensuite le processeur entrées/sorties 40 du dispositif initiateur, suivant la branche Cl de l'organigramme 27C, envoie à son processeur applications 42, par le bus bidirectionnel 64 les reliant directement, un message indiquant l'exécution de commande mise à jour interactive document sur la page active, cette demande étant signalée par l'écriture du message dans le contrôleur de dialogue 134 (E1108) et par l'envoi de l'ordre d'interruption du processeur applications 42 (E1110). Après l'envoi du message d'exécution de commande mise à jour interactive document, le processeur entrées/sorties 40 enverra la ou les pages suivantes pendant la phase de communication interactive document, qui sera décrite plus bas, et suivant la branche F1 de l'organigramme 28A. Après réception du message, le processeur applications exécute la commande mise à jour interactive document (E1112), laquelle sera explicitée plus bas, et continue en suivant la branche H1 de l'organigramme 28B.

Après le transfert de la page active, le processeur applications 42 du dispositif récepteur, après détermination de l'ordre de fin de transfert document ou fin de transfert page (E1090), exécutera la commande mise à jour interactive document (E1114), laquelle sera décrite suivant la branche I1 de l'organigramme 28B.

De même, pendant les phases décrites dans les organigrammes 27B et 27C, on notera qu'il n'y a pas de lien fonctionnel avec le processeur entrées/sorties 40 du dispositif récepteur.

Il sera maintenant décrit la phase de communication interactive avec l'envoi de pages restantes par le dispositif initiateur.

Suivant que le document, pendant la mise à jour interactive document, possède plusieurs pages, la ou les pages restantes seront envoyées par le processeur entrées/sorties 40 du dispositif initiateur vers le processeur entrées/sorties 40 du dispositif récepteur, lequel la ou les mémorisera. Le transfert de la ou des pages restantes se fait pendant la phase de communication interactive. Pour rappel, on entend par phase de communication interactive, la phase pendant laquelle les utilisateurs peuvent échanger en duplex intégral les données pixels à visualiser. Les données pixels sont traitées par les processeurs applications 42 de chaque dispositifs et envoyées vers leur processeur de communications 950 via le bus dédié 68.

Comme il est indiqué plus haut, le processeur entrées/sorties 40 du dispositif initiateur est chargé de transmettre les pages restantes vers le dispositif récepteur. Le transfert se fait par l'intermédiaire du processeur de communications 950, lequel est connecté par le bus 66 au processeur entrées/sorties 40 et par le bus 68 au processeur application 42. Le processeur de communications 950 du dispositif initiateur assurera l'entrelaçage des données pixels à visualiser et des données pages restantes. Comme dans le cas d'utilisation d'un modem 44, afin ne pas pénaliser le transfert des pixels de saisie en écriture, le temps maximum du transfert d'un bloc de données de page sera égal au temps entre deux acquisitions de pixels. Toutefois, on peut aussi envisager des transferts de données de page entre non pas deux acquisitions d'un seul pixel, mais entre deux acquisitions de séries de pixels, dès lors que ces acquisitions sont suffisamment brèves pour ne pas gêner les transferts de données de page. Le contenu des messages transmis par les processeurs de communications 950 indique vers quel processeur ils doivent être orientés. Le processeur de communications 950 récepteur analysera l'ordre du message puis enverra celui-ci vers le processeur destinataire : soit le processeur entrées/sorties 40 via le bus 66, soit le processeur applications 42 via le bus 68.

La figure 28A montre l'activité des processeurs entrées/sorties, pendant la phase de communication interactive, assurant le transfert de pages restantes entre les deux dispositifs. Cette phase commence par la branche F1 de la figure 27C vers la figure 28A.

Le processeur entrées/sorties 40 du dispositif initiateur charge en sa mémoire vive 72 la page suivante à transférer (E1120) puis envoie les blocs de données de cette page vers son processeur de communications 950 (E1122) qui les transmet au processeur de communications 950 du dispositif récepteur (E1124). Ce dernier les réceptionne (E1126) puis, après analyse de l'ordre contenu dans le message, les envoie à son processeur entrées/sorties 40 (E1128). Le processeur entrées/sorties 40 les réceptionne et, après analyse du mot d'ordre (E1130), les mémorise au fur et à mesure de leur réception (E1132).

Lorsque le processeur entrées/sorties 40 du dispositif initiateur détecte la fin de la page à transmettre (E1134), il détermine si une autre page est à transférer (E1136). Si une autre page est à transférer, le processeur entrées/sorties 40 envoie un message de fin de page vers son processeur de communications 950 (E1138), lequel le transmet au processeur de communications 950 du dispositif récepteur suivant l'étape E1124. Puis, il initialise le transfert de la page suivante et procède à l'envoi des données au dispositif récepteur suivant les étapes déjà décrites E1120 - E1132.

Après réception du message de fin de transfert de page, ceci par détermination de l'ordre représentée par les étapes E1130 et E1140, le processeur entrées/sorties 40 du dispositif récepteur valide la page reçue et l'enregistre sur son unité de stockage fixe (E1142).

Si plus aucune page n'est à transférer (cf. E1136), le processeur entrées/sorties 40 du dispositif initiateur envoie, par l'intermédiaire de son processeur de communications 950, un message de fin de transfert de document (E1144) au processeur entrées/sorties 40 du dispositif récepteur. Le processeur entrées/sorties 40 du dispositif initiateur est alors libre d'effectuer d'autres tâches. Après réception du message de fin de transfert document, le processeur entrées/sorties 40 du dispositif récepteur valide la page reçue, l'enregistre sur son unité de stockage fixe puis mémorise que l'ensemble des pages reçues constitue un document (E1146).

Il est ainsi montré que dans le cas d'utilisation d'un processeur de communications 950 pendant la phase de communication interactive et pendant le transfert des pages restantes, les processeurs entrées/sorties 40 de chaque dispositif ne reçoivent pas les données pixels à visualiser pour transmission à l'autre dispositif, par contraste avec le cas d'utilisation d'un modem 44 tel que décrit dans le premier mode de réalisation.

La figure 28B montre l'activité des processeurs applications 42 de chaque dispositif pendant la phase de communication interactive. Comme il y a une complète indépendance entre les processeurs applications 42 et entrées/sorties 40 de chaque dispositif, le processeur applications 42 effectuera l'envoi des pixels à visualiser directement vers son processeur de communications 950 et ceci qu'un transfert ou non de pages restantes par le processeur entrées/sorties 40 du dispositif initiateur ait lieu. Cette figure est identique à la figure 20, décrite plus haut. La lecture de la figure 28B peut être faite en se reportant à la description de la figure 20, les étapes étant repérées dans la figure 28B suivant la même numérotation, accompagnée d'un signe "prime". Les seules différences concernent les noms des branches d'entrées de ladite figure : branche H1 à la place de J et branche I1 à la place de K. Elle ne sera donc pas décrite par souci de concision.

Il sera maintenant décrit la phase de fin de communication interactive par référence aux organigrammes des figures 29 et 30. Chaque utilisateur d'un dispositif peut à tout moment décider de l'arrêt de la communication interactive, ceci en sélectionnant l'icône concerné dans la zone d'état de fonctionnement 28b de l'écran 12 par l'intermédiaire du stylet 26.

Lorsque l'utilisateur du dispositif initiateur provoque la fin de communication interactive, celui-ci a la possibilité de donner à l'utilisateur du dispositif récepteur le droit de garder ou non le document en cours de modification sur son dispositif. Ce droit sera indiqué lors de la sélection de l'icône et transmis au dispositif récepteur par le mot d'ordre du message de fin de communication.

Lorsque l'utilisateur du dispositif récepteur provoque la fin de communication interactive, celui-ci ne pourra pas garder sur son dispositif le document en cours de modification. Le dispositif récepteur effacera automatiquement ledit document après la sélection de l'icône indiquant la fin de communication.

La figure 29 montre la fin de communication interactive initiée par l'utilisateur du dispositif initiateur et la figure 30 montre la fin de communication interactive initiée par l'utilisateur du dispositif récepteur.

Par référence à la figure 29, le processeur applications 42 du dispositif initiateur reçoit alors la commande de fin de communication sélectionnée par l'utilisateur (E1150) et transmet ce message de fin de communication à son processeur de communications 950 via le bus dédié 68 (E1152) puis envoie un message d'arrêt de transfert de pages restantes à son processeur entrées/sorties 40 en écrivant ce message dans le contrôleur de dialogue 134 (E1154), suivi de l'envoi d'un ordre d'interruption du processeur entrées/sorties 40 (E1156) afin que celui-ci puisse lire le message. Cet ordre indique au processeur entrées/sorties 40, si celui-ci est en cours d'envoi de données de pages restantes, d'arrêter le transfert desdites données vers le dispositif récepteur. A la réception de ce message, le processeur entrées/sorties 40 détermine si des données de pages restantes sont en cours de transfert (E1158) dans ce cas le processeur entrées/sorties 40 arrêtera le processus d'envoi des données de pages restantes (E1160) et dans le cas contraire le processeur entrées/sorties 40 ne tiendra pas compte du message.

Après réception du message de fin de communication, le processeur de communications 950 du dispositif initiateur transmet ce message au processeur de communications 950 du dispositif récepteur (E1162) lequel après réception de ce message (E1164) le transmet à son processeur applications 42 (E1166) par le bus dédié 68. En réponse, le processeur applications 42 lui retourne un message d'acquittement de fin de communication destiné au dispositif initiateur et un ordre de libération de ligne (E1168). Ensuite, il envoie un message de mise à jour document à son processeur entrées/sorties 40 en écrivant ce message dans le contrôleur dialogue 134 (E1170), suivi de l'envoi d'un ordre d'interruption du processeur entrées/sorties 40 (E1172) afin que celui-ci puisse le lire. Ce message a pour effet d'indiquer au processeur entrées/sorties 40 de valider ou d'effacer, suivant le mot d'ordre contenu dans le message de fin de communication, l'ensemble des pages reçues formant le document ou, si aucune page n'a été reçue, le processeur entrées/sorties ne tiendra pas compte de ce message. Après l'envoi de l'ordre d'interruption du processeur entrées/sorties 40, le processeur applications 42 du dispositif récepteur quittera la commande modification interactive document (E1174).

Après réception du message de mise à jour document, le processeur entrées/sorties 40, suivant le mot d'ordre, soit validera soit effacera le document de l'unité de stockage fixe ( E1176).

Après réception du message d'acquittement de fin de communication et de libération ligne, le processeur de communications 950 du dispositif récepteur transmet le message d'acquittement de fin de communication au processeur de communications 950 du dispositif initiateur (E1178) puis libère la ligne (E1180).

Lorsque le processeur de communications 950 du dispositif initiateur reçoit le message d'acquittement de fin de communication (E1182), celui-ci le transmet à son processeur applications 42 (E1184) via le bus dédié 68, puis coupera la ligne (E1186) terminant ainsi la communication interactive. Après réception du message d'acquittement de fin de communication, le processeur applications 42 du dispositif initiateur quitte alors la commande modification interactive document (E1188).

Par référence à la figure 30, le processeur applications 42 du dispositif récepteur reçoit alors la commande de fin de communication sélectionnée par l'utilisateur (E1190) et transmet ce message de fin de communication à son processeur de communications 950 via le bus dédié 68 (E1192) puis envoie un message d'effacement document à son processeur entrées/sorties 40 en écrivant ce message dans le contrôleur dialogue 134 (E1194), suivi de l'envoi d'un ordre d'interruption du processeur entrées/sorties 40 (E1196) afin que celui-ci puisse le lire. Ce message a pour effet d'indiquer au processeur entrées/sorties 40 d'effacer l'ensemble des pages reçues formant le document ou si aucune page n'a été reçue le processeur entrées/sorties ne tiendra pas compte de ce message. Après réception du message d'effacement document, le processeur entrées/sorties 40 effacera le document de l'unité de stockage fixe ( E1198).

Après réception du message de fin de communication, le processeur de communications 950 du dispositif récepteur transmet ce message au processeur de communications 950 du dispositif initiateur (E1199) lequel, après réception de ce message (E1200), le transmet à son processeur applications 42 (E1202) par le bus dédié 68. En réponse, le processeur applications 42 lui retourne un message d'acquittement de fin de communication destiné au dispositif récepteur et un ordre de libération de ligne (E1204), puis envoie un message d'arrêt de transfert de pages restantes à son processeur entrées/sorties 40 en écrivant ce message dans le contrôleur de dialogue 134 (E1206), suivi de l'envoi d'un ordre d'interruption du processeur entrées/sorties 40 (E1208) afin que celui-ci puisse lire le message.

Cet ordre indique au processeur entrées/sorties 40, si celui-ci est en cours d'envoi de données de pages restantes, d'arrêter le transfert desdites données vers le dispositif récepteur. A la réception de ce message, le processeur entrées/sorties 40 détermine si des données de pages restantes sont en cours de transfert (E1210). Dans ce cas, le processeur entrées/sorties 40 arrêtera le processus d'envoi des données de pages restantes (E1212). Dans le cas contraire, le processeur entrées/sorties 40 ne tiendra pas compte du message. Après l'envoi de l'ordre d'interruption du processeur entrées/sorties 40, le processeur applications 42 du dispositif initiateur quittera la commande modification interactive document (E1214).

Après réception du message d'acquittement de fin de communication et de libération ligne, le processeur de communications 950 du dispositif initiateur transmet le message d'acquittement de fin de communication au processeur de communications 950 du dispositif récepteur (E1216) puis libère la ligne (E1218).

Lorsque le processeur de communications 950 du dispositif récepteur reçoit le message d'acquittement de fin de communication (E1220), celui-ci le transmet à son processeur applications 42 (E1222) via le bus dédié 68, puis coupera la ligne (E1224) terminant ainsi la communication interactive. Après réception du message d'acquittement de fin de communication, le processeur applications 42 du dispositif initiateur quitte alors la commande modification interactive document (E1226)

On remarque que, dans le cas d'utilisation d'un processeur de communications 950 pendant la phase de fin de communication interactive lors de l'envoi de données de pages restantes, les processeurs entrées/sorties 40 de chaque dispositif ne gèrent pas les ordres de fin de communication par contraste avec le cas d'utilisation d'un modem 44 tel que décrit dans le premier mode de réalisation.

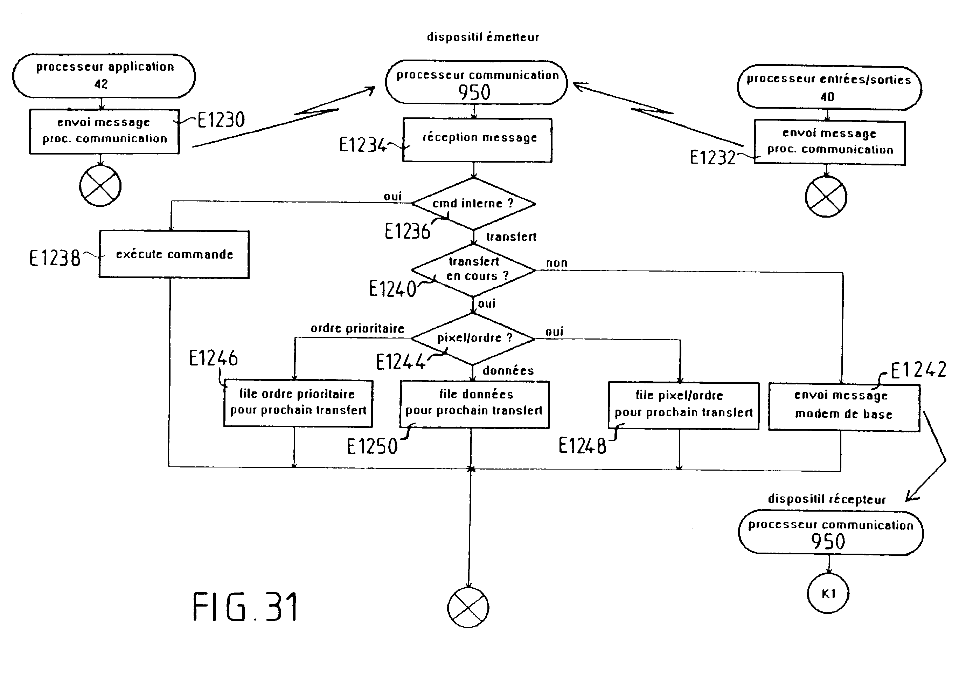

Il sera maintenant décrit l'activité du processeur de communications 950 d'un dispositif lorsque celui-ci est en communication avec un autre dispositif de télé-écriture et plus particulièrement pendant une communication interactive. Les figures 31, 32 et 33 expliqueront les différents fonctionnements du processeur de communications 950.

La figure 31 montre l'activité du processeur de communications 950 pendant la phase de communication interactive entre chaque dispositif. Comme indiqué plus haut, le processeur de communications 950 est relié au processeur entrées/sorties 40 par le bus dédié bidirectionnel 66 et au processeur applications 42 par le bus dédié bidirectionnel 68, permettant ainsi la communication entre les trois processeurs, et ceci en duplex intégral.

Un message envoyé par le processeur applications (E1230) transite par le bus dédié 68 et un message envoyé par le processeur entrées/sorties (E1232) transite par le bus dédié 66 (cf. figure 4). Lorsque le processeur de communications 950 reçoit un message (E1234), il détermine si ce message est une commande qu'il doit exécuter (commande interne) ou si ce message est un transfert vers le processeur de communications 950 du dispositif récepteur (E1236).

Si le message est une commande interne, il exécutera la commande correspondante (E1238) puis sera de nouveau en attente d'un nouvel événement.

Si le message est un transfert, il déterminera s'il y a déjà un transfert en cours (E1240) :
- Dans le cas où aucun transfert est en cours, le processeur de communications 950 initialisera le transfert vers le modem de base 150, lequel transférera le message vers le processeur de communications 950 récepteur via la ligne 34 (E1242). Le processeur de communications 950 du dispositif récepteur réceptionnera le message suivant la branche Kl qui sera explicitée plus bas.
- Dans le cas où un transfert est en cours, le processeur de communications 950 stockera le message dans une zone mémoire ou file correspondante au type de message à transférer. Cette file est du type "FIFO" (First In First Out), c'est-à-dire premier message entré dans la file sera le premier message sorti de la file. Suivant le type de message, le processeur de communications effectuera le prochain transfert en accordant une priorité de transfert si plusieurs files ne sont pas vides. Le type de données contenues dans le message est indiqué par le mot ordre du message. Après détermination du type (E1244), le stockage du message est soumis au conditions suivantes :
- si les données sont du type ordre prioritaire à transférer, le processeur de communications 950 stockera le message dans la file réservée aux ordres prioritaires (E1246);
- si les données sont des données pixels ou ordre secondaire, le processeur de communications 950 stockera le message dans la file réservée aux données pixels/ordres (E1248), et
- si les données sont autres, le message sera stocké dans la file réservée aux données (E1250).

Après rangement du message dans sa file correspondante, le processeur de communications sera de nouveau en attente d'un nouvel événement, notamment une demande de transfert de données issue du modem de base 150.

La priorité accordée au transfert de messages, suivant que plusieurs messages sont à transférer en "même temps", permet d'effectuer l'entrelaçage des données de pages restantes et les données pixels à visualiser ainsi que l'exécution des ordres secondaires. Le processeur de communications 950, pour assurer le bon fonctionnement de cet entrelaçage sans nuire à la qualité "temps réel" de la transmission de pixels, s'assure que le temps de transmission du ou des blocs de données entre chaque pixel/ordre secondaire est inférieur à l'intervalle de temps normal entre deux acquisitions consécutives sur le dispositif de saisie en écriture. Par ailleurs, ce temps lui est communiqué par le processeur applications 42 lors de l'initialisation de la commande interactive.

Le niveau de priorité de transfert est défini de la façon suivante:
i - transfert du ou des ordres prioritaires
ii - transfert des données pixels/ordres secondaires
iii - transfert blocs de données

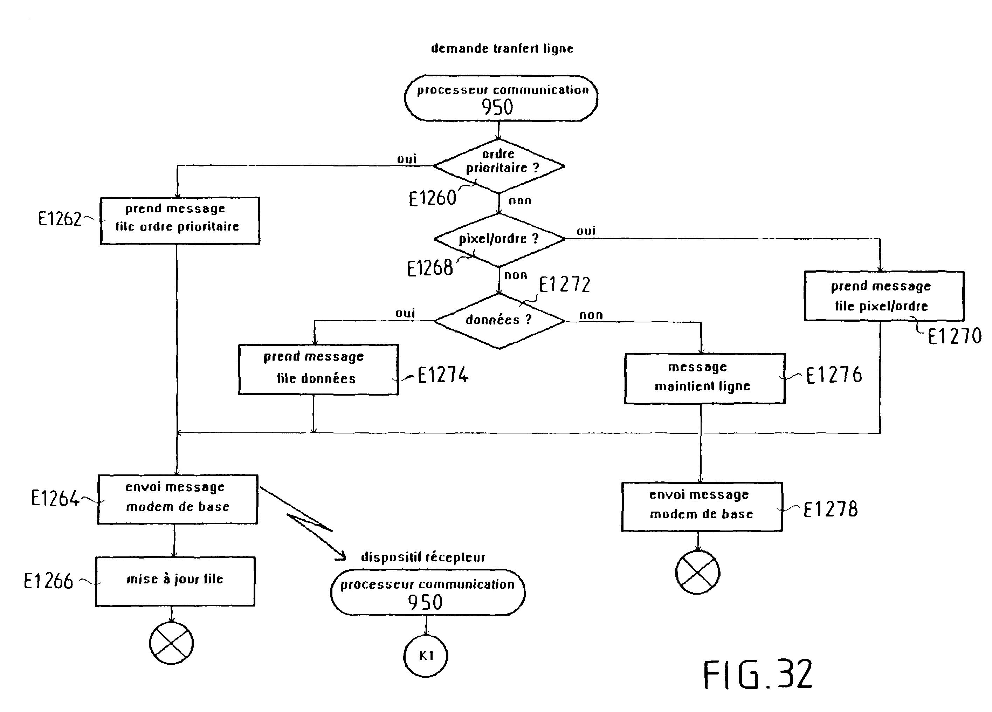

La figure 32 montre la détermination de transfert de messages lorsque les files de stockage ne sont pas vides.

Lorsque le modem de base 150 demande un transfert de données, le processeur de communications 950 examinera si la file réservée aux ordres prioritaires n'est pas vide (E1260) et dans le cas où la file n'est pas vide, prend le message (E1262) puis le transmet au modem de base 150 (E1264) lequel l'envoi au processeur de communications 950 du dispositif récepteur. Ensuite le processeur de communications 950 du dispositif émetteur mettra à jour la file (E1266), c'est-à-dire retirera de la file le message envoyé de façon à indiquer si un message suivant est à envoyer ou si la file devient vide, puis le processeur de communications 950 sera en attente d'un autre événement.

Si la file réservée aux ordres prioritaires est vide, le processeur de communications 950 examinera si la file réservée aux pixels à visualiser ou aux ordres secondaires n'est pas vide (E1268) et, dans le cas où la file n'est pas vide, prend le message (E1270) puis le transmet au modem de base 150, lequel l'envoi au processeur de communications 950 du dispositif récepteur. Ensuite le processeur de communications 950 du dispositif émetteur mettra à jour la file, comme explicité plus haut (E1266), puis le processeur de communications 950 sera en attente d'un autre événement.

Si la file réservée aux pixels à visualiser ou ordres secondaires est vide, le processeur de communications 950 examinera si la file réservée aux données n'est pas vide (E1272) et, dans le cas où la file n'est pas vide, prend le message (E1274) puis le transmet au modem de base 150, lequel l'envoie au processeur de communications 950 du dispositif récepteur. Ensuite le processeur de communications 950 du dispositif émetteur mettra à jour la file, comme explicité plus haut (E1266), puis le processeur de communications 950 sera en attente d'un autre événement.

Enfin si la file réservée aux données est vide, le processeur de communications 950 enverra au modem de base 150 un ordre indiquant le maintient de la ligne (E1276), lequel a pour effet de maintenir la communication entre les deux dispositifs sans envoyer de données (E1278). Puis le processeur de communications 950 sera en attente d'un autre événement.

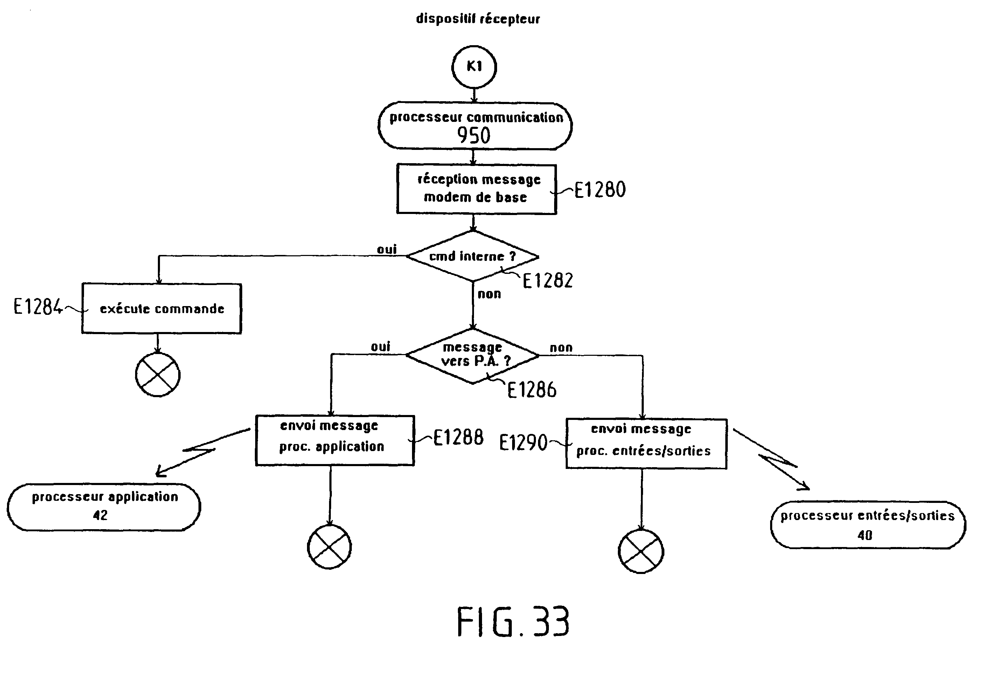

La figure 33 montre l'activité du processeur de communications 950 lorsque celui-ci est en réception d'un message envoyé par le dispositif émetteur. Cette phase commence par la branche K1 des figures 31 et 32 vers la figure 33.

Lorsqu'un message est reçu par le modem de base 150 du processeur de communications 950 (E1280), le processeur de communications 950 examine le mot d'ordre du message (E1282) et si le message est une commande qu'il doit exécuter, celui-ci l'exécutera (E1284) et après exécution sera en attente d'un nouvel événement.

Si le message reçu n'est pas une demande d'exécution, le processeur de communications 950 examinera l'ordre du message de façon à déterminer vers quel processeur il doit transférer le message (E1286) : soit vers le processeur applications 42 par l'intermédiaire du bus 68 (E1288) soit vers le processeur entrées/sorties 40 par l'intermédiaire du bus 66 (E1290). Après l'envoi du message, le processeur de communications 950 sera en attente d'un nouvel événement.

Il sera maintenant décrit les différentes possibilités d'interface aux machines offertes par le dispositif de télé-écriture selon la présente invention grâce à l'architecture et au protocole d'échange de données expliqué précédemment.

### Sélection d'une commande

La sélection d'une commande est réalisée par le pointage du stylet 26 sur un pictogramme correspondant dans la zone de commande 28A (figure 2). Suivant le type de commande sélectionné, des informations complémentaires peuvent être affichées sur la zone d'écriture, même si celle-ci n'est pas vide. Ces informations complémentaires sont superposées au contenu de la zone d'écriture. A la fin du traitement de la commande, le contenu de la zone d'écriture est restituée.

### Saisie en mode non interactif

La saisie en mode non interactif a pour but la rédaction ou la modification d'un document, ou la consultation d'un document existant pour modification dans l'optique de l'archiver ou de l'imprimer une fois la saisie terminée. La saisie consiste alors en une action avec le stylet 26 dans la zone d'écriture, qui a pour effet la visualisation sur l'écran de la position pointée par le stylet.

Lorsque la zone d'écriture est complète ou que l'on veut changer de page, l'utilisateur a la possibilité de prendre une autre page, celle-ci étant choisie en pointant le pictogramme correspondant dans la zone de commande. L'utilisateur peut à tout moment demander une page, en avant ou en arrière de la page actuelle, cette page devenant aussitôt la page actuelle ou active.

### Saisie en écriture en mode interactif

La saisie en écriture en mode interactif a pour but de permettre la rédaction ou la modification d'un document par deux utilisateurs ou plus connectés au réseau téléphonique. Les informations saisie sont envoyées à travers la ligne téléphonique vers le correspondant en temps réel. Les utilisateurs peuvent simultanément saisir des informations et les envoyer à l'autre ou les autres utilisateurs sur la page visualisée (page actuelle) dans la zone d'écriture.

Dans ce mode, chaque utilisateur possède un statut particulier pour la gestion du document : maître ou esclave.

L'utilisateur maître est le seul qui détermine le droit d'archivage et la manipulation du document en cours de communication par l'utilisateur esclave.

Le droit d'archivage consiste à donner l'autorisation ou non à l'utilisateur ayant le statut esclave de sauvegarder le document.

La manipulation du document consiste à effectuer le changement de page si le document en possède plusieurs.

Par défaut, l'utilisateur appelant est considéré comme ayant le statut de maître et l'utilisateur appelé est considéré comme ayant le statut d'esclave. Un utilisateur peut changer de statut lors de la communication par l'intermédiaire d'une commande avec confirmation de l'autre utilisateur.

Lorsqu'un utilisateur transfère un document, il devient l'utilisateur maître et le correspondant devient l'utilisateur esclave. Dans ce cas, il peut donc y avoir changement de statut automatiquement. Ce changement de statut s'opère sans confirmation. Dès la fin de la saisie en mode interactif, chaque utilisateur reprend son statut initial.

La saisie du document est réalisée de la même façon que dans le cas d'un transfert en mode non interactif.

Ce mode est activé uniquement après appel du correspondant.

### Fonction téléphone

Le dispositif de télé-écriture supporte la fonction téléphone grâce à son combiné mains-libres intégré 14 ou au combiné confidentiel 24 par connexion externe. La fonction téléphone est active soit indépendamment, soit simultanément avec un mode de saisie interactif entre deux dispositifs de télé-écriture ou plus. Dans ce cas, il est possible d'avoir à la fois une communication vocale et manuscrite avec un correspondant.

### Fonction répondeur/enregistreur

Le dispositif de télé-écriture possède un mode répondeur/enregistreur permettant à l'utilisateur de signaler son absence et d'offrir la possibilité à l'appelant de laisser un message vocal. Si l'utilisateur appelant utilise également un tel dispositif, il a la possibilité de transmettre un document. Le document sera alors archivé dans une mémoire interne du dispositif (par exemple la mémoire vive 72 du processeur entrées/sorties ou sur l'unité de stockage sur support fixe 48). La présence d'un document reçu dans ce mode est signalé par un témoin lumineux géré par le contrôleur LED 82. Si la place nécessaire pour archiver le document en réception dépasse la disponibilité de la mémoire, le dispositif informera le poste appelant qu'il n'est pas en mesure d'archiver le document dans son intégralité.

### Liaison fac-similée

Le dispositif de télé-écriture permet également d'envoyer les documents par fac-similé. L'utilisateur peut au choix saisir le document à transmettre dans la zone d'écriture de son écran 12 puis composer le numéro d'appel du poste fac-similé destinataire ou composer ce numéro de poste de fac-similé destinataire et simplement désigner le document à envoyer. De même, le dispositif de télé-écriture peut recevoir un document par fac-similé. Le document sera archivé sur l'unité de stockage fixe 48 et la présence du document sera signalé par un témoin lumineux géré par le contrôleur LED 82.

### Liaison de données

Le dispositif de télé-écriture permet d'envoyer et de recevoir des données suivant les normes supportées par le modem 44 ou le processeur de communication 950 vers d'autres appareils périphériques supportant les mêmes normes, par exemple la norme AVIS V34.

### Commande d'utilisateur

Il s'agit là de commande primaire ou de commande secondaire.

Les commandes primaires permettent au dispositif de télé-écriture de lancer l'exécution d'une tâche principale. Le dispositif de télé-écriture est en attente lorsque aucune commande primaire n'est activée.

Les commandes secondaires sont des commandes disponibles lorsque le dispositif de télé-écriture exécute une commande primaire. Les pictogrammes de ces commandes sont affichés dans la zone de commande 28a à la place des pictogrammes des commandes primaires.

Lorsqu'une commande primaire est sélectionnée, la zone de commande est effacée et le pictogramme de la commande primaire est affiché à l'extrémité gauche de la zone permettant à l'utilisateur de se souvenir de la commande en cours de traitement. Le reste de la zone sert à l'affichage des messages. Certaines commandes primaires possèdent des commandes secondaires; les pictogrammes de ces commandes sont affichés dans la zone de commande ainsi que le pictogramme de sortie de la commande primaire lorsque celui-ci est nécessaire. Dans ce dernier cas, le pictogramme de sortie est toujours affiché à l'extrémité gauche de la zone de commande 28a.

Le pictogramme situé à l'extrémité gauche de la zone de commande, après sélection d'un pictogramme de commande primaire est désigné pictogramme de tête.

Les zones de sélection sont toujours encadrées. La sélection est effectuée en pointant n'importe où dans le cadre. Lorsque la sélection est réalisée, l'intérieur du cadre apparaît en vidéo inverse.

La sélection à l'intérieur d'un tableau est effectuée en pointant n'importe où sur la ligne du tableau, la ligne apparaissant en vidéo inverse. Une ligne peut être désélectionnée en pointant de nouveau sur la ligne, la ligne revenant alors en vidéo normale.

La présente invention n'est nullement limitée par le mode de réalisation présenté par référence aux figures.

On notera en particulier que le nombre de processeurs mis en oeuvre dans le dispositif de télé-écriture peut être supérieur à deux selon les nécessités de partage de tâche. Le nombre et le type d'unités gérées par le processeur entrées/sorties ou les interfaces homme-machine gérées par le processeur applications peuvent varier considérablement selon les modes de réalisation tout en restant dans le cadre de la présente invention.

Par ailleurs, le dispositif de télé-écriture selon l'invention peut aussi intégrer d'autre fonctions de communication, notamment pour servir de terminal actif pour la réception et la transmission de courrier électronique sur réseau (e-mail) ou l'accès à internet par la mise en oeuvre de logiciels adaptés bien connus par l'homme du métier. Le dispositif peut également être adapté pour émuler un terminal « Minitel ».

De même l'invention n'est nullement limitée par les structures et les protocoles d'échange de messages et de commandes décrits dans l'exemple, ceux-ci se prêtant à de nombreuses variantes à la portée de l'homme du métier.

## Revendications

1. Dispositif de télé-écriture (10) permettant un échange d'informations visuelles et vocales en temps réel avec un autre tel dispositif en communication via une ligne externe de transmission de données (34), le dispositif comprenant :
un moyen d'échange de données vocales (14, 24, 152),
un moyen d'affichage (12) présentant une surface de visualisation,
un moyen de saisie en écriture (12, 26) pour réaliser l'affichage en temps réel de tracés sur la surface de visualisation,
un moyen (40, 42) de traitement des données de saisie en écriture et d'autres données destinées à être échangées, et
un moyen d'interface (44; 950) assurant l'échange des données de saisie en écriture et desdites autres données sur la ligne externe de transmission de données,
caractérisé en ce que le moyen de traitement de données comprend :
une première unité de commande (40) assurant la gestion desdites autres données et reliée au moyen d'interface (44; 950) par une première liaison (66) spécifique à cette première unité de commande pour l'échange desdites autres données sur la ligne externe de transmission de données, et
une deuxième unité de commande (42), pouvant fonctionner en parallèle avec la première unité de commande (40), assurant la gestion du moyen de saisie en écriture (12, 26) et relié au moyen d'interface (44; 950) par une deuxième liaison (68) spécifique à cette deuxième unité de commande et permettant l'échange de données de saisie en écriture sur la ligne externe de transmission de données.

2. Dispositif de télé-écriture (10) selon la revendication 1, caractérisé en ce qu'il comprend des moyens (40; 950) de détermination de priorité, opérationnels lorsque lesdites autres données constituent un document à afficher sur un autre tel dispositif en communication et occupent plus d'une page d'affichage sur écran, pour assurer en ordre croissant de priorité : i) la transmission d'une partie desdites autres données qui constitue une page d'affichage sur l'écran, ii) l'échange de données en télé-écriture et iii) la transmission du reste desdites autres données,
de manière à permettre la superposition des données de saisie en écriture sur une page de document affichée dès la réception de cette dernière.

3. Dispositif de télé-écriture (10) selon la revendication 1 ou 2, caractérisé en ce que la première et la deuxième liaison (66, 68) permettent d'échanger des données via le moyen d'interface (44; 950) en mode de partage d'accès sur la ligne externe de transmission de données (34) selon un protocole prédéterminé.

4. Dispositif de télé-écriture (10) selon l'une quelconque des revendications 1 à 3, caractérisé en ce qu'il comprend des moyens d'entrelaçage des données de saisie en écriture et desdites autres données, de façon à assurer la transmission en temps réel des données de saisie en écriture sur la ligne externe de transmission de données (34).

5. Dispositif de télé-écriture (10) selon la revendication 4, caractérisé en ce que lesdites autres données se présentent sous forme de blocs de données successifs, et en ce que l'entrelaçage est réalisé en intercalant des données de saisie en écriture dans des intervalles entre des blocs successifs desdites autres données, les données de saisie en écriture pouvant être constituées d'un pixel seul, d'un groupe de plusieurs pixels, ou d'une commande relative à la fonction de saisie en écriture.

6. Dispositif de télé-écriture (10) selon la revendication 5, caractérisé en ce, lors d'une part de l'apparition de données de saisie en écriture destinées à être transmises vers la ligne externe de transmission de données (34) et d'autre part de l'existence préalable d'une transmission d'autres données vers cette ligne, l'entrelaçage est démarré dès le premier intervalle entre deux blocs successifs d'autres données succédant à ladite apparition de données de saisie en écriture.

7. Dispositif de télé-écriture (10) selon la revendication 5 ou 6, caracérisé en ce que lesdits blocs constituant lesdites autres données occupent un espace temporel égal ou inférieur à l'intervalle existant entre des données consécutives de saisie en écriture.

8. Dispositif de télé-écriture (10) selon l'une quelconque des revendications 1 à 7, caractérisé en ce que la deuxième unité de commande (42) permet d'échanger et de traiter des données de télé-écriture provenant d'un autre dispositif, via le moyen d'interface (44; 950) et la deuxième liaison spécifique (68), en concomitance avec l'envoi de données par la première unité de commande (40) via le moyen d'interface et la première liaison spécifique (66).

9. Dispositif de télé-écriture (10) selon l'une quelconque des revendications 3 à 8, caractérisé en ce que le moyen d'interface (44 ; 950) réalise la transmission et la réception de données en duplex intégral sur la ligne extérieure de transmission de données (34), les données de transmission et les données de réception pouvant être soit entrelacées soit non entrelacées.

10. Dispositif de télé-écriture (10) selon l'une quelconque des revendications 3 à 9, caractérisé en ce que l'entrelaçage de données est réalisé au sein de la première unité de commande (40), les données de saisie en écriture et lesdites autres données étant envoyées sous forme entrelacée sur la première liaison spécifique (66) vers le moyen d'interface (44) pour transmission sur la ligne externe de transmission de données (34).

11. Dispositif de télé-écriture selon l'une quelconque des revendications 1 à 10, caractérisé en ce que la première unité de commande (40) assure également le contrôle du moyen d'interface (44) et de l'accès à ce dernier par la deuxième liaison (68).

12. Dispositif de télé-écriture (10) selon l'une quelconque des revendications 1 à 11, caractérisé en ce que la première unité de commande (40) assure également la gestion des moyens de prise de son et d'écoute téléphonique (152) du moyen d'interface (44) par des liaisons (156) indépendantes de ladite première liaison (66).

13. Dispositif de télé-écriture (10) selon l'une quelconque des revendications 3 à 9, caractérisé en ce que l'entrelaçage de données est réalisé au sein du moyen d'interface (950), lesdites autres données et les données de saisie en écriture étant envoyées au moyen d'interface respectivement par la première liaison (66) et la deuxième liaison (68).

14. Dispositif de télé-écriture (10) selon l'une quelconque des revendications 1 à 9, caractérisé en ce que en cas de concomitance entre lesdits autres données et les données de saisie en écriture pour leur transmission sur la ligne externe de transmission de données (34), l'accès des données de saisie en écriture au moyen d'interface (950) par la deuxième liaison (68) est prioritaire afin d'assurer l'échange en temps réel de celles-ci.

15. Dispositif de télé-écriture selon l'une quelconque des revendications 1 à 14, caractérisé en ce qu'il comprend en outre une liaison bidirectionnelle (64) entre les première et deuxième unités de commande (40 et 42).

16. Dispositif de télé-écriture (10) selon la revendication 15, caractérisé en ce qu'il comprend en outre un moyen de contrôle de dialogue (134) régissant le dialogue entre la première et la deuxième unité de commande (40, 42) sur la liaison bidirectionnelle (64), ce moyen comprenant :
une zone de stockage spécifique à chacune des unités de commande pour les données échangées, chacune des zones de stockage pouvant être lue uniquement par l'une des unités de commande et inscrite par l'autre unité de commande, un moyen permettant d'indiquer à une unité de commande destinataire de données de la présence de données dans sa zone de stockage, écrite par l'unité de commande émettrice, et
un moyen permettant d'indiquer à l'unité de commande émettrice de la lecture de données sur la zone de stockage de l'unité de commande destinataire.

17. Dispositif de télé-écriture (10) selon la revendication 16, caractérisé en ce que le moyen de contrôle de dialogue (134) comprend en outre un moyen d'interdiction d'inscription de données sur une zone de stockage si celle-ci contient déjà des données non lues.

18. Dispositif de télé-écriture (10) selon l'une quelconque des revendications 1 à 17, caractérisé en ce que la première unité de commande (40) assure la gestion d'entrée et de sortie desdites autres données sur au moins l'un des composants périphériques suivants :
un moyen amovible de stockage de données (46),
un moyen fixe de stockage de données (48),
une imprimante (50), et
une liaison série (52).

19. Dispositif de télé-écriture (10) selon l'une quelconque des revendications 1 à 18, caractérisé en ce que la deuxième unité de commande (42) assure en outre la gestion d'au moins l'un des composants suivants :
un dispositif analyseur optique de document (56),
un dispositif de lecture et/ou d'inscription de données sur carte à mémoire, tel qu'une carte à puces (58),
un lecteur d'empreinte digitale (60), et
un clavier (62).

20. Dispositif de télé-écriture (10) selon l'une quelconque des revendications 1 à 19, caractérisé en ce que le moyen d'interface (44; 950) assure l'échange de données vocales par des moyens de prise de son et d'écoute téléphonique (152) par des connexions (158) indépendantes des première ou deuxième unités de commande (40, 42).

21. Dispositif de télé-écriture (10) selon l'une quelconque des revendications 1 à 19, caractérisé en ce que le moyen d'interface (44; 950) comprend les moyens de numérisation des données vocales selon un protocole prédéfini.

22. Dispositif de télé-écriture selon l'une quelconque des revendications 1 à 21, caractérisé en ce que la deuxième unité de commande contrôle en outre le moyen d'affichage.

23. Procédé de commande d'un dispositif de télé-écriture (10) permettant un échange d'informations visuelles et vocales en temps réel avec un autre tel dispositif en communication via une ligne externe de transmission de données (34), le dispositif comprenant :
un moyen d'échange de données vocales (14, 24, 152),
un moyen d'affichage (12) présentant une surface de visualisation,
un moyen de saisie en écriture (12, 26) pour réaliser l'affichage en temps réel de tracés sur la surface de visualisation,
un moyen (40, 42) de traitement des données de saisie en écriture et d'autres données destinées à être échangées, et
un moyen d'interface (44; 950) assurant l'échange des données de saisie en écriture et desdites autres données sur la ligne externe de transmission de données,
ledit procédé étant caractérisé en ce qu'il consiste à répartir les tâches du moyen de traitement de données en assurant en parallèle :
d'une part la gestion et l'échange desdites autres données sur la ligne externe de transmission de données via le moyen d'interface (44; 950), et
d'autre part la gestion et l'échange de données de saisie en écriture sur la ligne externe de transmission de données via le moyen d'interface.

24. Procédé selon la revendication 23, caractérisé en ce que, lorsque lesdites autres données constituent un document à afficher sur un autre tel dispositif et occupent plus d'une page d'affichage sur écran on assure, en ordre croissant de priorité : i) la transmission d'une partie desdites autres données constituant une page d'affichage sur l'écran, ii) l'échange de données en télé-écriture et iii) la transmission du reste desdites autres données, de manière à permettre la superposition des données de saisie en écriture sur une page de document affichée dès la réception de cette dernière.

25. Procédé selon l'une quelconque des revendications 22 à 24, caractérisé en ce que, lorsque lesdites autres données et les données de saisie en écriture doivent être transmises en concomitance, elles sont transmises en mode de partage d'accès sur la ligne externe de transmission de données (34).

26. Procédé selon l'une quelconque des revendications 23 à 25, caractérisé en ce que lorsque lesdites autres données et les données de saisie en écriture doivent être transmises simultanément, elles sont transmises par entrelaçage de façon à permettre la transmission en temps réel des données de saisie en écriture sur la ligne externe de transmission de données (34).

27. Procédé selon la revendication 24, caractérisé en ce que lesdites autres données se présentent sous forme de blocs de données successifs, et en ce que l'entrelaçage est réalisé en insérant des données de saisie en écriture dans des intervalles entre des blocs desdites autres données, les données de saisie en écriture pouvant être constituées d'un pixel seul, d'un groupe de plusieurs pixels, ou d'une commande relative à la fonction de saisie en écriture.

## Patentansprüche

1. Fernschreibgerät (10) zum Austausch von visuellen und akustischen Informationen in Echtzeit mit einem anderen derartigen Gerät durch Kommunikation über eine externe Leitung für Datenübertragung (34), wobei das Gerät umfaßt:
eine Vorrichtung zum Austausch von akustischen Daten (14, 24, 152),
eine Anzeigevorrichtung (12) mit einer Darstellungsfläche,
eine Schreiberfassungvorrichtung (12, 26) zum Anzeigen von Abläufen auf der Darstellungsfläche in Echtzeit,
eine Vorrichtung (40, 42) zum Verarbeiten von Daten von der Schreiberfassung und von anderen Daten, die für den Austausch bestimmt sind, und
eine Schnittstellenvorrichtung (44; 950), die den Austausch der Daten von der Schreiberfassung und der anderen Daten über die externe Leitung zur Datenübertragung sicherstellt,
dadurch gekennzeichnet, daß die Vorrichtung für die Verarbeitung von Daten umfaßt:
eine erste Steuereinheit (40) für die Verwaltung der anderen Daten, die mit der Schnittstellenvorrichtung (44; 950) über eine erste Verbindung (66) verbunden ist, die speziell für diese erste Steuereinheit ist und für den Austausch der anderen Daten über die externe Leitung für die Datenübertragung sorgt, und
eine zweite Steuereinheit (42), die parallel zu der ersten Steuereinheit (40) arbeiten kann, für die Verarbeitung der Schreiberfassungsvorrichtung (12, 26), die mit der Schnittstellenvorrichtung (44; 59) über eine zweite Verbindung (68) verbunden ist, die speziell für die zweite Steuereinheit ist und für den Austausch von Daten von der Schreiberfassung über die externe Leitung für die Datenübertragung sorgt.

2. Fernschreibgerät (10) nach Anspruch 1, dadurch gekennzeichnet, daß es Vorrichtungen (40; 950) zur Bestimmung der Priorität umfaßt, die aktiviert werden, wenn die anderen Daten ein Dokument bilden, das auf einem anderen solchen Kommunikationsgerät anzuzeigen ist, und die mehr als eine Darstellungsseite auf dem Bildschirm einnehmen, um in steigender Reihenfolge der Priorität sicherzustellen: i) die Übertragung eines Teils der anderen Daten, die eine Darstellungsseite auf dem Bildschirm bilden, ii) den Austausch von Daten per Fernschreiben und iii) die Übertragung des Restes der anderen Daten,
so daß die Überlagerung von Daten von der Schreiberfassung auf einer dargestellten Dokumentenseite bei Empfang der letzteren ermöglicht wird.

3. Fernschreibgerät (10) nach Anspruch 1 oder 2, dadurch gekennzeichnet, daß die erste und die zweite Verbindung (66, 68) den Austausch von Daten über die Schnittstellenvorrichtung (44; 950) im Modus des gemeinsamen Zugriffs auf die externe Leitung zur Datenübertragung (34) gemäß einem vorgegebenen Protokoll ermöglichen.

4. Fernschreibgerät (10) nach einem der Ansprüche 1 bis 3, dadurch gekennzeichnet, daß es Vorrichtungen für die Verschachtelung von Daten von der Schreiberfassung und von anderen Daten umfaßt, so daß die Übertragung von Daten von der Schreiberfassung über die externe Leitung zur Datenübertragung (34) in Echtzeit ermöglicht wird.

5. Fernschreibgerät (10) nach Anspruch 4, dadurch gekennzeichnet, daß die anderen Daten die Form von sukzessiven Datenblöcken haben und daß die Verschachtelung realisiert wird durch Einschieben von Daten von der Schreiberfassung in Intervalle zwischen aufeinanderfolgenden Blöcken der anderen Daten, wobei die Daten von der Schreiberfassung aus nur einem einzigen Pixel, einer Gruppe von mehreren Pixeln oder einem Befehl bezüglich der Funktion der Schreiberfassung bestehen können.

6. Fernschreibgerät (10) nach Anspruch 5, dadurch gekennzeichnet, daß einerseits bei Erscheinen der Daten von der Schreiberfassung für die Übertragung über die externe Leitung für die Datenübertragung (34) und andererseits dem vorherigen Bestehen einer Übertragung anderer Daten über diese Leitung die Verschachtelung ausgelöst wird bei dem ersten Intervall zwischen zwei aufeinanderfolgenden Blöcken von anderen Daten nach dem Erscheinen von den Daten von der Schreiberfassung.

7. Fernschreibgerät (10) nach Anspruch 5 oder 6, dadurch gekennzeichnet, daß die Blöcke, die die anderen Daten bilden, einen Zeitraum einnehmen, der gleich oder kleiner dem Intervall zwischen aufeinanderfolgenden Daten von der Schreiberfassung ist.

8. Fernschreibgerät (10) nach einem der Ansprüche 1 bis 7, dadurch gekennzeichnet, daß die zweite Steuereinheit (42) den Austausch und die Verarbeitung von Fernschreibdaten, die über die Schnittstellenvorrichtung (44; 950) und die zweite spezielle Verbindung (68) von einem anderen Gerät kommen, durch Zusammenwirken mit dem Verschicken von Daten über die erste Steuereinheit (40) über die Schnittstellenvorrichtung und die erste spezielle Verbindung (66) ermöglicht.

9. Fernschreibgerät (10) nach einem der Ansprüche 3 bis 8, dadurch gekennzeichnet, daß die Schnittstellenvorrichtung (44; 950) die Übertragung und den Empfang von Daten in Duplexform auf der externen Leitung für die Datenübertragung (34) realisiert, wobei die Übertragungsdaten und die Empfangsdaten verschachtelt oder nicht verschachtelt sein können.

10. Fernschreibgerät (10) nach einem der Ansprüche 3 bis 9, dadurch gekennzeichnet, daß die Verschachtelung von Daten in der ersten Steuereinheit (40) erfolgt, wobei die Daten von der Schreiberfassung und die anderen Daten in verschachtelter Form über die erste spezielle Verbindung (66) zu der Schnittstellenvorrichtung (44) für die Übertragung über die externe Leitung für die Datenübertragung (34) verschickt werden.

11. Fernschreibgerät nach einem der Ansprüche 1 bis 10, dadurch gekennzeichnet, daß die erste Steuereinheit (40) außerdem die Steuerung der Schnittstellenvorrichtung (44) und den Zugriff auf die letztere durch die zweite Verbindung (68) ermöglicht.

12. Fernschreibgerät (10) nach einem der Ansprüche 1 bis 11, dadurch gekennzeichnet, daß die erste Steuereinheit (40) außerdem die Verwaltung der Vorrichtungen zur Schallaufnahme und zur Telefonwiedergabe (152) der Schnittstellenvorrichtung (44) durch Verbindungen (156), die unabhängig von der ersten Verbindung (66) sind, sicherstellt.

13. Fernschreibgerät (10) nach einem der Ansprüche 3 bis 9, dadurch gekennzeichnet, daß die Verschachtelung von Daten in der Schnittstellenvorrichtung (950) erfolgt, wobei die anderen Daten und die Daten von der Schreiberfassung durch die jeweilige Schnittstellenvorrichtung über die erste Verbindung (66) und die zweite Verbindung (68) verschickt werden.

14. Fernschreibgerät (10) nach einem der Ansprüche 1 bis 9, dadurch gekennzeichnet, daß für den Fall der Übereinstimmung der anderen Daten und der Daten von der Schreiberfassung für ihre Übertragung über die externe Leitung für die Datenübertragung (34) der Zugriff auf Daten von der Schreiberfassung für die Schnittstellenvorrichtung (950) durch die zweite Verbindung (68) bevorzugt ist, um deren Austausch in Echtzeit sicherzustellen.

15. Fernschreibgerät nach einem der Ansprüche 1 bis 14, dadurch gekennzeichnet, daß es außerdem eine bidirektionelle Verbindung (64) zwischen der ersten und zweiten Steuereinheit (40 und 42) umfaßt.

16. Fernschreibgerät (10) nach Anspruch 5, dadurch gekennzeichnet, daß es außerdem eine Dialogsteuervorrichtung (134) für die Steuerung des Dialogs zwischen der ersten und der zweiten Steuereinheit (40, 42) über die bidirektionelle Verbindung (64) umfaßt, wobei diese Vorrichtung umfaßt:
eine Speicherzone speziell für jede der Steuereinheiten für die ausgetauschten Daten, wobei jede der Speicherzonen eindeutig durch eine der Steuereinheiten gelesen und durch die andere Steuereinheit beschrieben werden kann, wobei eine Vorrichtung es ermöglicht, an eine Steuereinheit bei dem Empfänger von Daten die Anwesenheit von Daten in seiner Speicherzone zu melden, die beschrieben wurde durch die Sendesteuereinheit, und
eine Vorrichtung es ermöglicht, der Sendesteuereinheit das Lesen der Daten in der Speicherzone der Steuereinheit bei dem Empfänger zu melden.

17. Fernschreibgerät (10) nach Anspruch 16, dadurch gekennzeichnet, daß die Dialogsteuervorrichtung (134) außerdem eine Vorrichtung zum Verweigern des Schreibens von Daten in eine Speicherzone, wenn diese bereits nicht gelesene Daten enthält, umfaßt.

18. Fernschreibgerät (10) nach einem der Ansprüche 1 bis 17, dadurch gekennzeichnet, daß die erste Steuereinheit (14) die Verwaltung des Eingangs und des Ausgangs der anderen Daten über wenigstens eine der folgenden Peripheriekomponenten umfaßt:
eine Datenspeicherwechselvorrichtung (46),
eine fest installierte Datenspeichervorrichtung (48),
einen Drucker (50) und
eine serielle Verbindung (52).

19. Fernschreibgerät (10) nach einem der Ansprüche 1 bis 18, dadurch gekennzeichnet, daß die zweite Steuereinheit (42) außerdem die Verwaltung wenigstens einer der folgenden Komponenten sicherstellt:
ein Dokumentenanalysatorgerät (56),
ein Lese/Schreibgerät für Daten auf einer Speicherkarte, wie z.B. einer Chipkarte (58),
ein Digitaldrucklesegerät (60) und
eine Tastatur (62).

20. FernschreibgerAt (10) nach einem der Ansprüche 1 bis 19, dadurch gekennzeichnet, daß die Schnittstellenvorrichtung (44; 950) den Austausch von akustischen Daten über Schallaufnahme- und Telefonwiedergabevorrichtungen (152) über Verbindungen (158), die unabhängig von der ersten oder zweiten Steuereinheit (40, 42) sind, umfaßt.

21. Fernschreibgerät (10) nach einem der Ansprüche 1 bis 19, dadurch gekennzeichnet, daß die Schnittstellenvorrichtung (44; 950) Vorrichtungen für die Digitalisierung von Schalldaten gemäß einem vordefinierten Protokoll umfaßt.

22. Fernschreibgerät nach einem der Ansprüche 1 bis 21, dadurch gekennzeichnet, daß die zweite Steuereinheit außerdem die Anzeigevorrichtung steuert.

23. Verfahren zum Steuern eines Fernschreibgerätes (10) zum Austausch von optischen und akustischen Informationen in Echtzeit mit einem anderen derartigen Gerät durch Kommunikation über eine externe Leitung für die Datenübertragung (34), wobei das Gerät umfaßt:
eine Vorrichtung zum Austausch von akustischen Daten (14, 24, 152),
eine Anzeigevorrichtung (12) mit einer Darstellungsfläche,
eine Vorrichtung zur Schreiberfassung (12, 26) zum Darstellen von Vorgängen auf der Darstellungsfläche in Echtzeit,
eine Vorrichtung (40, 42) zum Verarbeiten von Daten von der Schreiberfassung und anderer Daten für den Austausch und
eine Schnittstellenvorrichtung (44; 950) für den Austausch von Daten von der Schreiberfassung und der anderen Daten über die externe Leitung für die Datenübertragung,
wobei das Verfahren dadurch gekennzeichnet ist, daß es daraus besteht, die Aufgaben der Verarbeitungsvorrichtung für Daten zu verteilen, indem parallel sichergestellt wird, daß
einerseits die Verwaltung und der Austausch von den anderen Daten über die externe Leitung für die Datenübertragung über die Schnittstellenvorrichtung (44; 950) sichergestellt ist und
andererseits die Verwaltung und der Austausch von Daten von der Schreiberfassung über die externe Leitung für die Datenübertragung über die Schnittstellenvorrichtung sichergestellt ist.

24. Verfahren nach Anspruch 23, dadurch gekennzeichnet, daß für den Fall, daß die anderen Daten ein Dokument bilden, das auf einem anderen derartigen Gerät anzuzeigen ist und mehr als eine Darstellungsseite auf dem Bildschirm einnimmt, sichergestellt wird, daß in steigender Reihenfolge der Priorität i) die Übertragung eines Teils der anderen Daten, die eine Darstellungsseite auf dem Bildschirm bilden, ii) der Austausch von Daten per Fernschreiben und iii) die Übertragung des Restes der anderen Daten erfolgt, so daß die Überlagerung von Daten von der Schreiberfassung auf einer Seite des dargestellten Dokuments bei Empfang des letzteren sichergestellt ist.

25. Verfahren nach einem der Ansprüche 22 bis 24, dadurch gekennzeichnet, daß für den Fall, daß die anderen Daten und die Daten von der Schreiberfassung in Zusammenwirkung übertragen werden müssen, sie im Modus des gemeinsamen Zugriffs auf die externe Leitung für die Datenübertragung (34) übertragen werden.

26. Verfahren nach einem der Ansprüche 23 bis 25, dadurch gekennzeichnet, daß für den Fall, daß die anderen Daten und die Daten von der Schreiberfassung simultan übertragen werden müssen, sie durch Verschachtelung übertragen werden, so daß die Übertragung von Daten von der Schreiberfassung auf der externen Leitung für die Datenübertragung (34) in Echtzeit sichergestellt ist.

27. Verfahren nach Anspruch 24, dadurch gekennzeichnet, daß die anderen Daten die Form von sukzessiven Datenblöcken haben und daß die Verschachtelung realisiert wird durch Einfügen von Daten von der Schreiberfassung in Intervalle zwischen die Blöcke der anderen Daten, wobei die Daten von der Schreiberfassung lediglich ein einziges Pixel, eine Gruppe von mehreren Pixeln oder einem Befehl bezüglich der Funktion der Schreiberfassung bilden können.

## Claims

1. A telewriting device (10) enabling exchange of visual and voice information in real time with another such device communicating therewith via an external data communication line (34), the device comprising :
means for exchanging voice data (14, 24, 152),
display means (12) having a display surface,
means (12, 26) for receiving manuscript traces for displaying manuscript input on the display surface in real time,
means (40, 42) for processing manuscript trace data and other data to be exchanged, and
interface means (44, 950) for exchanging the manuscript trace data and said other data over the external data communication line,
characterised in that the data processing means comprise :
a first control unit (40) managing said other data, said first control unit being connected to the interface means (44 ; 950) by a first link (60) specific to the first control unit for exchanging said other data over the external data communication line, and
a second control unit (42) able to operate in parallel with the first control unit (40), for controlling the manuscript trace receiving means (12, 26), said second control unit being connected to the interface means (44, 950) by a second link (68) specific to the second control unit for exchanging manuscript trace data over the external data communication line.

2. A telewriting device (10) according to claim 1, characterised in that it further comprises means (40 ; 950) for determining priority which operate when said other data constitutes a document to be displayed on another such device communicating with it and occupying more than one display page on the screen, to assure in increasing priority order: i) sending some of said other data that constitutes a display page on the screen, ii) exchange of telewriting data, and iii) sending the remainder of said other data,
to enable superimposition of manuscript trace data on a document page displayed as soon as it is received.

3. A telewriting device (10) according to claim 1 or 2, characterised in that the first and second links (66, 68) exchange data via the interface means (44, 950) in a mode of shared access to the external data communication line (34) using a predetermined protocol.

4. A telewriting device (10) according to any of claims 1 to 3, characterised in that it comprises means for interleaving manuscript trace data and said other data to assure real time sending of manuscript trace data over the external data communication line (34).

5. A telewriting device (10) according to claim 4, characterised in that said other data is in the form of successive blocks of data and the interleaving being effected by inserting manuscript trace data into gaps between successive blocks of said other data, the manuscript trace data comprising a single pixel, a group of pixels or a command relating to the written input function.

6. A telewriting device (10) according to claim 5, characterised in that, when there is manuscript trace data to be sent to the external data communication line during sending of said other data to said line, interleaving is started at the first gap between two successive blocks of other data following appearance of said manuscript trace data.

7. A telewriting device (10) according to claim 5 or 6, characterised in that said blocks constituting said other data occupy a time period equal to or less than the gap between consecutive manuscript trace data.

8. A telewriting device (10) according to any of claims 1 to 7, characterised in that the second control unit (42) exchanges and processes telewriting data from another device via the interface means (44 ; 950) and the second dedicated link (68) concomitantly with the sending of data by the first control unit (40) via the interface means and the first dedicated link (66).

9. A telewriting device (10) according to any of claims 3 to 8, characterised in that the interface means (44, 950) send and receive interleaved or non-interleaved data in full duplex mode on the external data communication line (34).

10. A telewriting device (10) according to any of claims 3 to 9, characterised in that the data is interleaved in the first control unit (40), the manuscript trace data and said other data being sent in interleaved form over the first dedicated link (66) to the interface means (44) for sending over the external data communication line (34).

11. A telewriting device according to any of claims 1 to 10, characterised in that the first control unit (40) also controls the interface means (44) and access to the latter via the second link (68).

12. A telewriting device (10) according to any of claims 1 to 11, characterised in that the first control unit (40) also controls telephone microphone (152) and earpiece means of the interface means (44) via links (156) independent of said first link (66).

13. A telewriting device (10) according to any of claims 3 to 9, characterised in that the data is interleaved in the interface means (950), said other data and the manuscript trace data being sent to the interface means respectively over the first link (66) and the second link (68).

14. A telewriting device (10) according to any of claims 1 to 9, characterised in that, in the case of concomitant other data and manuscript trace data for sending over the external data communication line (34), access of manuscript trace data to the interface means (950) via the second link (68) takes priority in order to assure its real time communication.

15. A telewriting device according to any of claims 1 to 14, characterised in that it further comprises a bidirectional link (64) between the first and second control units (40, 42).

16. A telewriting device (10) according to claim 15, characterised in that it further comprises dialogue control means (134) controlling dialogue between the first and second control units (40, 42) on the bidirectional link (64), said means comprising :
a storage area dedicated to each control unit for data exchanged, each storage unit being read only by one control unit and written only by the other control unit, means being provided to indicate to a control unit to which data is sent that data is present in its storage area that was written by the sending control unit, and
means for indicating to the sending control unit the reading of data in the storage area of the destination control unit.

17. A telewriting device (10) according to claim 16, characterised in that the dialogue control means (134) further comprise means for prohibiting writing of data in a storage area if the latter already contains data that has not been read.

18. A telewriting device (10) according to any of claims 1 to 17, characterised in that the first control unit (40) controls input and output of said other data on at least one of the following peripheral devices :
removable medium data storage means (46),
fixed medium data storage means (48),
a printer (50), and
a serial link (52).

19. A telewriting device (10) according to any of claims 1 to 18, characterised in that the second control unit (42) additionally manages at least one of the following components:
a document scanner (56),
a device for reading and/or writing data on a memory card such as a microchip card (58),
a fingerprint reader (60), and
a keyboard (62).

20. A telewriting device (10) according to any of claims 1 to 19, characterised in that the interface means (44, 950) exchange voice data via telephone microphone and earpiece means (152) via links (158) independent of the first and second control units (40, 42).

21. A telewriting device (10) according to any of claims 1 to 19, characterised in that the interface means (44, 950) comprise means for digitizing voice data in accordance with a predefined protocol.

22. A telewriting device (10) according to any of claims 1 to 21, characterised in that the second control unit controls the display means.

23. A method of controlling a telewriting device (10) enabling exchange of visual and voice information in real time with another such device communicating therewith via an external data communication line (34), the device comprising :
means for exchanging voice data (14, 24, 152),
display means (12) having a display surface,
telewriting input means (12, 26) for displaying written manuscript trace input data on the display surface in real time,
means (40, 42) for processing manuscript trace data and other data to be exchanged, and
interface means (44, 950) assuring the exchange of manuscript trace data and said other data over the external data communication line,
said method being characterised in that it consists in distributing the tasks of the data processing means to assure in parallel:
management and exchange of said other data on the external data communication line via the interface means (44, 950), and
management and exchange of manuscript trace data on the external data communication line via the interface means.

24. A method according to claim 23, characterised in that, when said other data constitutes a document to be displayed on another such device and occupies more than one display page on the screen, the following are effected in increasing priority order: i) sending some of said other data that constitutes a display page on the screen, ii) exchange of telewriting data, and iii) sending the remainder of said other data, to enable superimposition of manuscript trace data on a document page displayed as soon as it is received.

25. A method according to any of claims 22 to 24 characterised in that, when said other data and the manuscript trace data must be sent concomitantly, they are sent in a mode of shared access to the external data communication line (34).

26. A method according to any of claims 23 to 25 characterised in that, when said other data and the manuscript trace data must be sent simultaneously, they are sent by interleaving it to enable real time sending of the manuscript trace data over the external data communication line (34).

27. A method according to claim 24, characterised in that said other data is in the form of successive blocks of data and in that the interleaving is effected by inserting manuscript trace data into gaps between blocks of said other data, the manuscript trace data comprising a single pixel, a group of pixels or a command relating to the written input function.
